# EUROPÄISCHE PATENTSCHRIFT

(11) **EP 3 488 585 B1**
(45) Veröffentlichungstag und Bekanntmachung des Hinweises auf die Patenterteilung: **17.06.2020**
(21) Anmeldenummer: 17743319.0
(22) Anmeldetag: 21.07.2017
(51) Int. Cl.: G06Q 30/02, H04L 29/06, H04L 29/08

(54) **VORRICHTUNG UND VERFAHREN ZUR EFFIZIENTEN REALISIERUNG VON ONLINE- UND OFFLINE-TELEFONIE IN VERBINDUNG MIT DER ÜBERTRAGUNG UND AUSWERTUNG NUTZERSPEZIFISCHER DATEN**
DEVICE AND METHOD FOR EFFICIENTLY PROVIDING ONLINE AND OFFLINE TELEPHONY IN COMBINATION WITH THE TRANSMISSION AND EVALUATION OF USER-SPECIFIC DATA
DISPOSITIF ET PROCÉDÉ DE RÉALISATION EFFICIENTE DE COMMUNICATIONS TÉLÉPHONIQUES EN LIGNE ET HORS LIGNE EN LIAISON AVEC LA TRANSMISSION ET L'ANALYSE DE DONNÉES SPÉCIFIQUES À UN UTILISATEUR

(30) Priorität: 21.07.2016 DE 102016213389
(43) Veröffentlichungstag der Anmeldung: 29.05.2019
(73) Patentinhaber: Level 5 Media GmbH, 40625 Düsseldorf (DE)
(72) Erfinder: OHNECK, Stephan, 07181 Bendinat/Calvia Mallorca, Illes Baleares (ES)
(74) Vertreter: Schairer, Oliver
(86) Internationale Anmeldenummer: PCT/EP2017/068558
(87) Internationale Veröffentlichungsnummer: WO 2018/015566

(56) Entgegenhaltungen:
- EP-A1- 2 887 608
- DE-A1-102014 108 903
- DE-A1-102015 104 897
- US-A1- 2005 216 341
- US-A1- 2007 174 187
- US-A1- 2008 189 360
- US-A1- 2009 161 842
- US-A1- 2011 310 891
- US-A1- 2014 341 366
- US-A1- 2014 348 157
- US-A1- 2015 163 353
- US-A1- 2016 173 464
- US-B1- 7 417 989

## Beschreibung

Die Anmeldung betrifft IP-Telefonie (IP = Internet Protocol, deutsch: Internet Protokoll) und, im Speziellen, eine Vorrichtung und ein Verfahren zur effizienten Realisierung anonymisierter IP-Telefonie, insbesondere durch einen 1-Click-Call (deutsch: 1-Klick Anruf) auf einer Webseite.

Sehr viele Nutzer nutzen heute Suchmaschinen, nicht nur für die Suche nach Unternehmen, Shops bzw. Anbietern von Waren und Dienstleistungen, sondern auch um einen Telefonkontakt (Rufnummer) zu finden. Der telefonische Kontakt spielt nach wie vor eine wichtige Rolle.

Hinsichtlich Telefonie existieren in der Technik unterschiedliche Ansätze, die man unterschiedlichen Gruppen von Technologien zuordnen kann.

Der traditionelle Ansatz ist, was Telefonieren betrifft, die klassische Telefonie über ein PSTN (Public Switched Telephone Network; deutsch: öffentliches Fernsprechnetz), wobei man unter einem Fernsprechnetz (oder Telefonnetz) ein Kommunikationssystem versteht, das für die Abwicklung von Telefongesprächen, also für Telefonie konstruiert ist.

Ein weiterer Telefonieansatz, der vor allem seit den 1990er Jahren große Verbreitung gefunden hat, ist die Mobiltelefonie.

Die klassische Telefonie ist heute immer noch ein in der breite akzeptiertes Kommunikationsmittel. In Deutschland findet derzeit eine Umstellung des kompletten Telefonnetzes statt. Alle Netzbetreiber stellen den Betrieb des bisher genutzten PSTN (Public Switched Telephone Network) ein. Alle Anschlüsse werden nach und nach auf das NGN (Next Generation Network) umgestellt, welches IP-Basierend ist (Stichwort VOIP/SIP) (siehe:
[1a]: https://de.wikipedia.org/wiki/Telefonnetz bzw:
[1b]: https://en.wikipedia.org/wiki/Public_switched_telephone_network)

Festnetz und Mobilfunknetz sind dabei wichtige Strukturelemente gemeinsam. So weisen sowohl ein Festnetz, als auch ein Mobilfunknetz ein Zugangsnetz, ein Verbindungsnetz und ein Signalisierungsnetz (siehe auch: [1a]: https://de.wikipedia.org/wiki/Telefonnetz bzw: [1b]: https://en.wikipedia.org/wiki/Public_switched_telephone_network).

Festnetz und Mobilfunknetz gemein ist die zwingende Registrierung der Endgeräte in diesem Netz. Nur ein registrierter Teilnehmer kann Gespräche innerhalb dieses Netzes führen (siehe Festnetzanschluss oder auch SIM-Karte bei Mobilfunk). Anonyme Telefonie ohne vorherige Registrierung ist daher bei Nutzung von Festnetz oder Mobilfunknetz nicht möglich.

Ein weiterer, moderner Telefonansatz ist IP-Telefonie, insbesondere dabei VoIP (Voice over IP; deutsch: Sprache über IP) und dabei insbesondere SIP-Telefonie (SIP = Session Initiation Protocol; deutsch: Sitzungs-Initialisierungsprotoll).

IP-Telefonie (Internet-Protokoll-Telefonie), oder auch allgemein als Internet-Telefonie bezeichnet, ist das Telefonieren über Computernetzwerke, welche nach Internet-Standards aufgebaut sind. Dabei werden beispielsweise Sprache und Steuerinformationen, z.B. Steuerinformationen für den Verbindungsaufbau über ein für Daten nutzbares Netz übertragen. Bei den Gesprächsteilnehmern können dann beispielsweise Computer oder auf IP-Telefonie spezialisierte Telefonendgeräte oder klassische Telefone, die über spezielle Adapter angeschlossen sind, die Verbindung herstellen und zum Telefonieren genutzt werden.

Bei IP-Telefonie gemäß dem Stand der Technik ist eine zentrale Instanz, bei der sich ein Endgerät, das z.B. teilweise durch Software realisiert sein kann, anmelden muss, zwingende Voraussetzung für den Gesprächsaufbau zu einem beliebigen Teilnehmer innerhalb dieses Netzes.

Ein weiterer Ansatz sind sogenannte "Telefonanlagen in der Cloud" (deutsch: "Wolke" oder sinngemäß "Rechnerwolke"). Eine Telefonanlage in der Cloud ist als Alternative zur klassische Telefonie konzipiert. Vorwiegend Unternehmen nutzen diese Möglichkeit, um Kostenvorteile gegenüber der klassischen Telefonie zu realisieren, siehe hierzu beispielsweise:
[2a]: https://de.wikipedia.org/wiki/IP-Telefonie bzw:
[2b]: https://en.wikipedia.org/wiki/Telephony).

Weitere Telefoniekonzepte können im Übergang und in der Konvergenz der Netze gesehen werden, wie sie unter dem Schlagwort Next Generation Network (NGN-Netz; deutsch: Netzwerk der nächsten Generation) entwickelt werden. Die klassische Telefonie (bzw. die zugrundeliegenden Netze) wird dabei aktuell auf die nächste Generation "angehoben". Speziell für Endkunden werden die alten Techniken auf IP bzw. auf das Internet abgebildet. Am Wesen der Kommunikation ändert sich aus Endkundensicht nichts. Im Wesentlichen sind Kostengründe für dieses Vorgehen seitens der Unternehmen ausschlaggebend. Auch in solchen Next Generation Networks ist nach wie vor eine zentrale Instanz erforderlich, bei der die Telenehmer registriert sind (siehe zu NGN insbesondere:
[3a]: https://de.wikipedia.org/wiki/Next_Generation_Network bzw.
[3b]: https://en.wikipedia.org/wiki/Next-generation_network).

In allen konventionellen Telefonnetzen wird heute zur Signalisierung verschiedener Zustände und auch zur Gebührenerfassung das Signalling System #7 eingesetzt (deutsch: Signalisierungssystem Nummer 7), das allgemein auch als SS7 bezeichnet wird. SS7 ist eine Sammlung von Protokollen und Verfahren für die Signalisierung in Telekommunikationsnetzen, siehe z.B.:
[4a]: https://de.wikipedia.org/wiki/Signalling_System_7 bzw.
[4b]: https://en.wikipedia.org/wiki/Signalling_System_No._7.

Zum Speichern von Telefonnummern haben klassische Telefone beispielsweise einen Nummernspeicher. EP 398 711 B1 (siehe [5]) zeigt ein solches Telefon mit einem Nummernspeicher, dass einen einfachen Verbindungsaufbau ermöglicht. Ein einfacher Verbindungsaufbau ist auch aus Webseiten heraus wünschenswert.

Auf Webseiten werden Telefonnummern häufig nicht als Link (deutsch: Verknüpfung), sondern oftmals als klassischer Fließtext angezeigt. Oftmals werden Telefonnummern auch dann als klassischer Fließtext dargestellt, wenn es sich um eine Webseite handelt, die ein Suchergebnis ist, dass von einer Suchmaschine bereitgestellt wurde. Ein Klick auf diesen Text (Rufnummer) löst an sich keine Aktion aus - zumindest keine, die der Gestalter der Webseite vorgesehen hätte. Vielmehr liegt es am Web-Browser, den Klick auf eine Rufnummer zu interpretieren und damit eine Aktion zu verbinden. Je nach Browser (und je nach Betriebssystem) wird demnach eine unterschiedliche Aktion ausgeführt.

Alternativ lässt sich eine Telefonnummer auf einer Webseite in einen Tel-Link verpacken, der etwa die Form haben könnte: <a href="tel:+4912345679000">+49 12345679000</a> , siehe:
[6]: http://blog.linkwerk.com/2011/04/telefon-links-fur-smartphones-desktopfreundlich/).

Abhängig vom Web-Browser und von den auf dem Rechner oder dem Smartphone installierten Programmen bzw. Apps, geschieht dann jedoch auf ein Klicken auf den Link hin entweder nichts, oder es kommt zu einem Medienbruch; ein anderes Programm außerhalb des Browsers wird gestartet. Zum Beispiel wird bei einem Android-Smartphone ein Popup-Fenster mit der Dial-App (Wähl-Programm/Wähl-Anwendung) des Smartphones geöffnet, wobei die Dial-App die Webseite dann, z.B., komplett verdeckt.

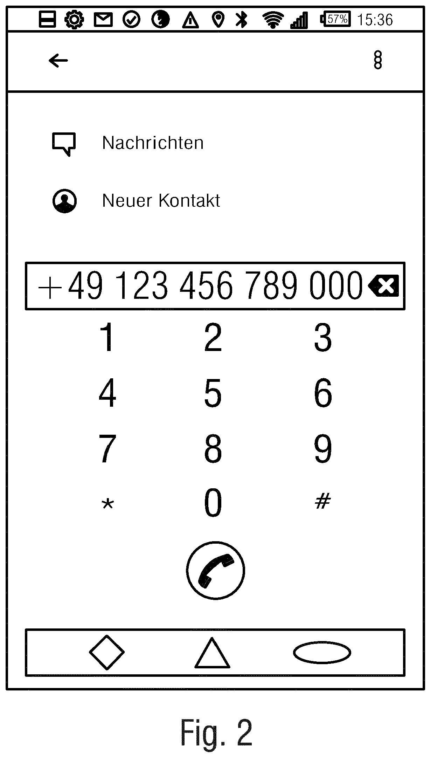

Fig. 2 zeigt ein Beispiel einer solchen Dial-App.

Beim Öffnen der Dial-App findet also ein App-Wechsel statt und der Fokus (Browser) verschwindet. Es kommt zum Medienbruch, und an dieser Stelle reißt die Customer Journey (Reise des Kunden) ab. Grundsätzlich besteht das Problem des Medienbruchs bei aktuellen Telefonie-Lösungen im PSTN und auch bei SIP-Verbindungen. Für den Aufbau einer Verbindung wird immer der Screen (beim Smartphone) überlagert, was einen Medienbruch darstellt.

Mit dem Abriss der Customer Journeys ist gemeint, dass der Fokus des Kunden nun nicht mehr auf der (verdeckten) Webseite liegt, sondern seine Reise durch das Einblenden der Dial-App beendet, oder zumindest unterbrochen wurde. Dies ist unerwünscht, denn so ist es beispielsweise nicht mehr möglich, dem Kunden über weitere Web-Seiten weitere Informationen bereitzustellen, oder Rückmeldung vom Kunden durch Interaktion von diesem über Eingaben auf der Webseite zu erhalten.

Zumindest aber ist der Customer Journey nur noch lückenhaft erfassbar. Beim Klick auf eine Rufnummer und durch den damit verbundenen Wechsel des "Mediums" fehlen wichtige Daten der Customer Journey. Dienste zur Datenverkehrsanalyse, beispielsweise Google® Analytics oder vergleichbare Systeme erfahren dann nichts von dem eigentlichen Anruf bzw. vom Ergebnis einer Anwahl. So kann z.B. das Ergebnis einer Telefon-Anwahl nicht für den weiteren Dialog mit dem Nutzer auf weiteren Webseiten verwendet werden.

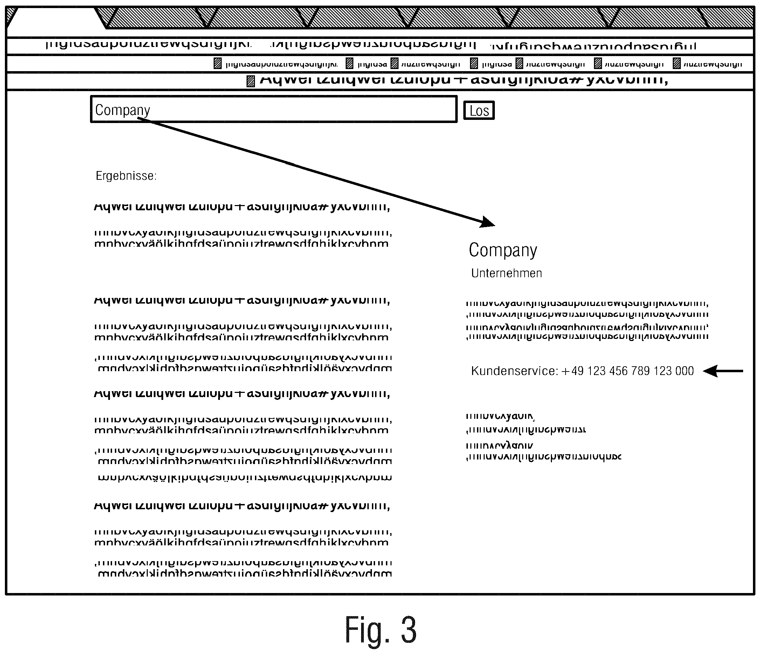

Fig. 3 zeigt ein entsprechendes Beispiel einer Webseite, die als Antwort auf eine Suchanfrage von einer Internet-Suchmaschine bereitgestellt wird.

Ein weiteres Telefoniekonzept im Stand der Technik wird durch "Google Hangouts"® realisiert. In einem Webbrowser, beispielsweise Firefox®, kann dabei eine Rufnummer als Link dargestellt. Ein Klick auf diesen Link bringt den Benutzer dann z.B. zu "Google Hangouts"®. Eine solche Telefonnummer kann beispielsweise in einem sogenannten "Google Business"® - Banner angezeigt werden (zu "Google Business"® siehe hier:
[7a]: http://www.google.com/intl/de_de/business/ bzw.
[7b]: http://www.google.com/intl/en_en/business/).

Bei "Google Hangouts"® handelt es sich um einen Videokonferenz- und Instant-Messaging-Dienst des US-amerikanischen Unternehmens Google® (Für mehr Informationen, siehe beispielsweise
[8]: https://hangouts.google.com/?hl=en).

Ein anderes Telefoniekonzept ist WebRTC® als Peer-2-Peer-Verbindung (Peer-2-Peer-Verbindung: deutsch, sinngemäß: Verbindung gleichgestellter Rechner).

WebRTC® (Web Real-Time Communication, deutsch "Web-Echtzeitkommunikation") ist eine Sammlung von Kommunikationsprotokollen und Programmierschnittstellen (API) zur Implementierung in Webbrowsern, die diesen Echtzeitkommunikation über Rechner-Rechner-Verbindungen ermöglichen. Beispielsweise die Browser Firefox®, Chrome® und Opera® unterstützen die WebRTC®-Technologie.

Somit sind Browser nicht mehr nur in der Lage, Datenressourcen von Backend-Servern abzurufen, sondern können auch (Echtzeit-) Informationen von Browsern anderer Benutzer abrufen. (zu WebRTC® siehe:
[9a]: https://de.wikipedia.org/wiki/WebRTC bzw:
[9b]: https://en.wikipedia.org/wiki/WebRTC).

Rechner im diesem Sinn sind IP gestützte Endpunkte. Es ist keine weitere Software nötig, da moderne Browser WebRTC® bereits beherrschen. Um die Technologie zu nutzen sind keine Browserplugins oder Addons notwendig. Damit ist die Anwendung an kein Betriebssystem gebunden, also plattformunabhängig.

WebRTC® wurde als Peer-2-Peer-Kommunikation entwickelt. Nutzer können zwischen Browser direkt Daten (Audio und/oder Video und/oder andere Daten) austauschen.

WebRTC® ist komplett in bestimmte Browser integriert und benötigt keinerlei Plug-In etc. Eine Umsetzung von WebRTC® ist in dem Webbrowser Firefox® integriert, siehe hierzu:
[10a]: http://www.pro-linux.de/artikel/2/1791/firefox-hello-der-videochat-im-test.html oder
[10b]: https://support.mozilla.org/en-US/products/firefox/chat-and-share/firefox-hello-webrtc
unter dem Feature-Namen "Hello". Um Hello zu nutzen ist kein spezielles Benutzerkonto nötig. Allerdings muss eine Einladung verschickt werden. Diese Einladung, die die Form einer URL hat (URL = Uniform Resource Locator) und zum Beispiel in einer E-Mail verschickt werden kann, ist die Voraussetzung für den Aufbau der Kommunikation der Teilnehmer.

Grundsätzlich gilt für jede Lösung, die auf WebRTC® aufbaut, dass das vorliegende Endgerät/Endpunkt/Software (Device) folgende Ausstattung vorweisen muss: Das Endgerät muss WebRTC®-fähig sein (gegebenenfalls Nutzung eines Browser, der WebRTC®-fähig ist), es muss ein Mikrofon und ein Lautsprecher aufweisen und eine Internetverbindung des betreffenden Gerätes (z.B. ein Smartphone oder ein Laptop) oder eine Intranet-Verbindung müssen vorhanden sein. Optional kann eine Video-Kamera genutzt werden, sofern Video-Übertragung zum Einsatz kommen soll.

Ein spezielles Telefoniekonzept ist WebRTC® mit Erweiterung eines SIP-Stacks oder anderer Libraries. Einige Hersteller bieten hierzu JavaScript-Libraries an, die innerhalb eines Browsers laufen und erweiterte Funktionen oder auch Schnittstellen liefern. Aufbauend auf WebRTC® lässt sich dann die JavaScript-Library SIP.js heranziehen. Diese Library bedient sich der Grundfunktionalität von WebRTC® und fügt darauf aufbauend einen sog. SIP-Stack hinzu (Signalisierung / Beispiel: DTMF und Datenübertragung). Somit lassen sich innerhalb des Browsers SIP-Verbindungen (Voip-Verbindungen) hin zu einem SIP-Server aufbauen. Dies entspricht einem Software-Device für SIP-Telefonie (siehe hierzu:
[11]: http://sipjs.com/)

Nachfolgend wird auf das folgende Dokument verwiesen:
[12]: Aameek Singh, Arup Acharya, "Using session initiation protocol to build context-aware VoIP support for multiplayer networked games", published in: Proceeding NetGames '04, Proceedings of 3rd ACM SIGCOMM workshop on Network and system support for games, Seiten 98 - 105, ACM New York, NY, USA, 2004.

In dem obigen Dokument von Singh und Acharya werden SIP Techniken vorgestellt, die über das SIP-Protokoll weitere Daten für das Management für ein Online-Spiel austauschen (sog. Browserspiele).

Ferner existiert im Stand der Technik das FreeSwitch®-Projekt mit dem Modul "mod_verto" (siehe:
[13]: https://freeswitch.org/confluence/display/FREESWITCH/mod_verto),
was den Browser (mit Hilfe der passenden JavaScript-Library) in die Lage versetzt, als Software-Device für VoIP-Telefonie zu fungieren.

Ein weiteres wichtiges Konzept, das im Bereich der Telefonie von besonderer Bedeutung ist, sind Mehrwert-Dienste, die man auch als Mehrwert-Telefonie bezeichnen kann. Was Mehrwert-Telefonie betrifft, gibt es als ein allgemein eingesetzte Konzept hierzu bereits die Möglichkeit, Mehrwerte im Rahmen von Telefongesprächen abzurechnen. In Deutschland sind dabei z.B. die 0900-Rufnummern bekannt, auch als 0900-Gasse bezeichnet, über welche die Möglichkeit besteht, Mehrwerte über den besonders kostenpflichtigen Anruf abzurechen. Eine kurze Übersicht zu dem derzeitigen Stand der Technik betreffend die 0900-Rufnummern in Deutschland findet sich beispielsweise auf der Webseite:
[14] http://www.elektronik-kompendium.de/sites/kom/0312241.htm.

Im Ausland existieren Konzepte, die den deutschen 0900-Rufnummern entsprechen. Das heutige Tarifsystem in diesem Modell dabei relativ eingeschränkt, und die Tarifierung unterscheidet sich deutlich in Abhängigkeit vom Ursprung eines Anrufers, wobei ein Anruf aus dem deutschen Mobilfunknetz ungleich teurer ist im Vergleich zu einem Anruf aus dem deutschen Festnetz. Und auch der Endkundentarif im Mobilfunknetz unterscheidet sich zwischen den verschiedenen Netzbetreibern. Eine zu starke Verteuerung der angebotenen Mehrwerte ist aber auch für manche Mehrwert-Anbieter unerwünscht, da dann die Mehrwerte teilweise nicht mehr abgesetzt werden können. Wünschenswert wäre es daher, Mehrwert-Telefonie mit größerer Flexibilität bei der Tarifierung technisch zu realisieren, als dies derzeit bei den 0900-Rufnummern möglich ist.

"Android Pay"® ist ein Zahlungssystem des US-amerikanischen Unternehmens Google® für Android-Geräte. Der offizielle Start des Dienstes war am 10. September 2015. Derzeit kann der Dienst lediglich in den USA genutzt werden (siehe:
[15]: https://www.android.com/pay/ und:
[16a]: https://de.wikipedia.org/wiki/Android_Pay bzw.
[16b]: https://en.wikipedia.org/wiki/Android_Pay).

Zusammenfassend kann zum Stand der Technik festgestellt werden, dass in allen öffentlichen Kommunikationsnetzen vorausgesetzt wird, dass sich jeder Benutzer (bzw. jedes Endgerät) autorisiert und bei einer zentralen Instanz anmeldet, damit ausgehende aber auch eingehende Verbindungen aufgebaut werden können. Eine Autorisierung findet dabei immer im Vorfeld statt. Ferner basiert jedes Kommunikationsnetz basiert auf dem Gedanken, dass man den B-Teilnehmer (den angewählten Teilnehmer) frei anwählen bzw. aussuchen kann. Unterschiede bestehen hinsichtlich dieser Punkte zwischen den verschiedenen Netzen (z.B. PSTN, VoIP) grundsätzlich nicht.

Neuere Techniken wie WebRTC® haben eine Peer-2-Peer-Verbindung als Ziel. Mit anderen Worten, eine Verbindung ohne zentrale Instanz wird hergestellt. Hierfür ist eine Einladung (im weitesten Sinne) zwingend erforderlich. Selbst wenn bei Techniken wie WebRTC® zentrale Vermittlungs-Instanzen zum Einsatz kommen, so haben diese Szenarien das Ziel der freien B-Teilnehmer-Anwahl.

EP 2 887 608 A1 zeigt ein computerimplementiertes Verfahren und ein System für anonyme Kommunikation und ein Computerprogramm für einen Kommunikationsdienst, auf den per Web zugegriffen werden kann. Benutzeranmeldeinformationen eines ersten Benutzers werden authentifiziert, um eine Anforderung zu autorisieren und um eine Kommunikation mit mindestens einem zweiten Benutzer durchzuführen. Der erste Benutzer fordert den Kommunikationsdienst auf, einen seiner Adresse zugeordneten Hyperlink zu generieren, und stellt den generierten Hyperlink mindestens einem zweiten Benutzer zur Verfügung; wobei der letztere anfordert, die angeforderte Kommunikation mit dem ersten Benutzer durch direktes Klicken auf den bereitgestellten Hyperlink zu initiieren, wobei die Identität des mindestens zweiten Benutzers anonym gehalten wird und die Identität des ersten Benutzers auf der Grundlage der auf dem Hyperlink bereitgestellten Informationen erfolgt, und wobei die Kommunikation zwischen dem mindestens zweiten Benutzer und dem ersten Benutzer von einem ersten Server autorisiert wird.

Aufgabe der vorliegenden Erfindung ist es, verbesserte Telefonie-Konzepte bereitzustellen. Die Aufgabe der Erfindung wird dabei durch eine Vorrichtung nach Anspruch 1, durch ein System nach Anspruch 13, durch ein Verfahren nach Anspruch 14 und durch ein Computerprogramm nach Anspruch 15 gelöst.

Nachfolgend werden erläuternde Beispiele unter Bezugnahme auf die Zeichnungen beschrieben.

In den Zeichnungen ist dargestellt:
- Fig. 1: zeigt eine Vorrichtung zum Abrufen einer Webseite von einem Webserver und zum Aufbau einer Kommunikationsverbindung gemäß einer Ausführungsform. Fig. 1a zeigt ferner ein System gemäß einer Ausführungsform.
- Fig. 1a: zeigt eine Vorrichtung zum Abrufen einer Webseite von einem Webserver und zum Aufbau einer Kommunikationsverbindung gemäß einer weiteren Ausführungsform. Fig. 1a zeigt ferner ein System gemäß einer weiteren Ausführungsform.
- Fig. 1b: zeigt eine Vorrichtung gemäß einer Ausführungsform, in der die Vorrichtung mit einem Autorisierungsserver und einem Bezahldienst-Server interagiert. Fig. 1b zeigt ferner ein System gemäß einer weiteren Ausführungsform.
- Fig. 1c: zeigt eine Vorrichtung gemäß einer Ausführungsform, in der die Vorrichtung mit einem STUN-Server interagiert. Fig. 1c zeigt des Weiteren ein System gemäß einer weiteren Ausführungsform.
- Fig. 1d: zeigt einen Webserver zum Bereitstellen einer Webseite für ein Endgerät gemäß einer ersten Ausführungsform.
- Fig. 1e: zeigt einen Webserver zum Bereitstellen einer Webseite für ein Endgerät gemäß einer zweiten Ausführungsform.
- Fig. 1f: zeigt einen Webserver zum Bereitstellen einer Webseite für ein Endgerät gemäß einer dritten Ausführungsform.
- Fig. 1g: zeigt eine Vorrichtung zum Abrufen einer Webseite von einem Webserver und zum Aufbau einer Kommunikationsverbindung gemäß einer weiteren Ausführungsform. Fig. 1g zeigt ferner ein System gemäß einer weiteren Ausführungsform, bei der die Kommunikation zwischen Vorrichtung und Kommunikationseinheit über die Vermittlungsstelle erfolgt.
- Fig. 1h: zeigt eine Vorrichtung gemäß einer Ausführungsform, in der die Vorrichtung mit einem Autorisierungsserver und einem Bezahldienst-Server interagiert. Fig. 1h zeigt ferner ein System gemäß einer weiteren Ausführungsform, bei der die Kommunikation zwischen Vorrichtung und Kommunikationseinheit über die Vermittlungsstelle erfolgt.
- Fig. 1i: zeigt eine Vorrichtung gemäß einer Ausführungsform, in der die Vorrichtung mit einem STUN-Server interagiert. Fig. 1i zeigt des Weiteren ein System gemäß einer weiteren Ausführungsform, bei der die Kommunikation zwischen Vorrichtung und Kommunikationseinheit über die Vermittlungsstelle erfolgt.
- Fig. 2: zeigt ein Beispiel einer solchen Dial-App.
- Fig. 3: zeigt ein Beispiel einer Webseite, die als Antwort auf eine Suchanfrage von einer Internet-Suchmaschine bereitgestellt wird.
- Fig. 4a, 4b: zeigen spezielle Ausführungsformen, bei der ein Klick auf einen Link auf eine Schaltfläche eine Reihe von Aktionen gemäß Ausführungsformen auslöst.
- Fig. 5: zeigt eine Ausführungsform, die für die Interaktion mit einer Suchmaschine ausgelegt ist.
- Fig. 6: zeigt ein Ablaufdiagramm gemäß einer Ausführungsform, das Bezahlen während der Verbindung realisiert. Und:
- Fig. 7a, 7b: zeigen ein Ablaufdiagramm gemäß einer Ausführungsform, die Bezahlen während der Verbindung realisiert im Zeitablauf.
- Fig. 8a: zeigt eine Webseite, die von einer Vorrichtung zum Abrufen einer Webseite einem Nutzer angezeigt wird.
- Fig. 8b: zeigt ein Pop-Up Fenster, das von einer Vorrichtung zum Abrufen einer Webseite einem Nutzer angezeigt wird, um eine Kommunikationsverbindung herzustellen.
- Fig. 8c: zeigt eine Ausgabe, die einem Nutzer einer Kommunikationseinheit angezeigt wird.
- Fig. 8d: zeigt ein Pop-Up Fenster, das von einer Vorrichtung zum Abrufen einer Webseite einem Nutzer angezeigt wird, wenn eine Kommunikationsverbindung mittels der "Join with FB" Variante hergestellt wurde.
- Fig. 8e: zeigt ein Pop-Up Fenster, das von einer Vorrichtung zum Abrufen einer Webseite einem Nutzer angezeigt wird, wenn eine Kommunikationsverbindung mittels der "Join local" Variante hergestellt wurde.
- Fig. 9a: zeigt zwei Webseite, die von einer Vorrichtung zum Abrufen einer Webseite einem Nutzer angezeigt werden.
- Fig. 9b: zeigt eine der Webseiten der Fig. 9a, wiedergegeben angezeigt auf einer Kommunikationseinheit.
- Fig. 9c: zeigt ein Ablaufdiagramm einer speziellen Ausführungsform.
- Fig. 10: zeigt eine Vermittlungsstelle gemäß einer Ausführungsform.

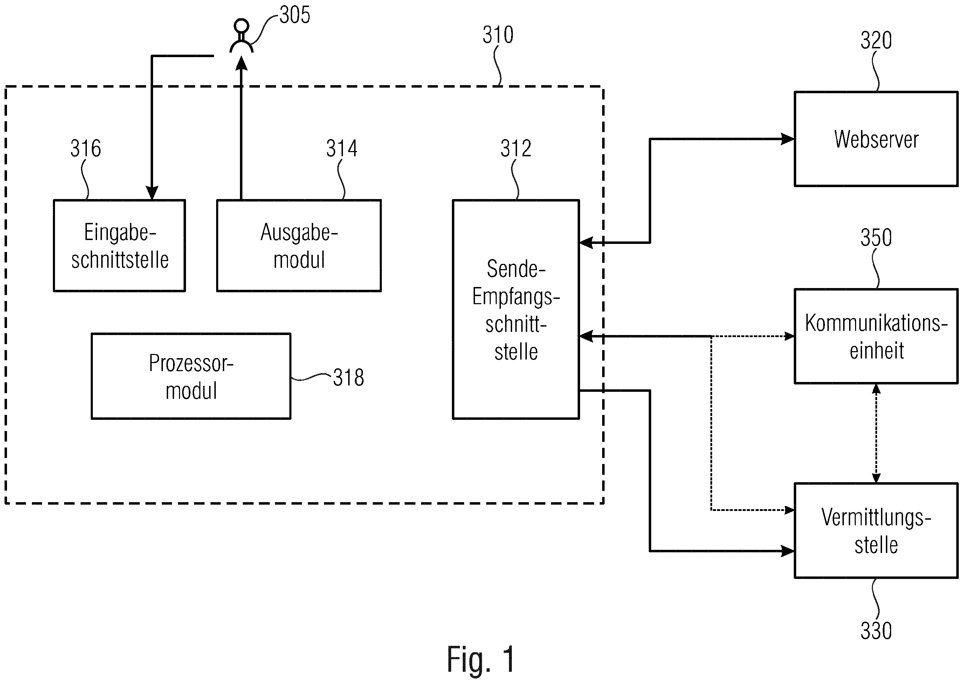

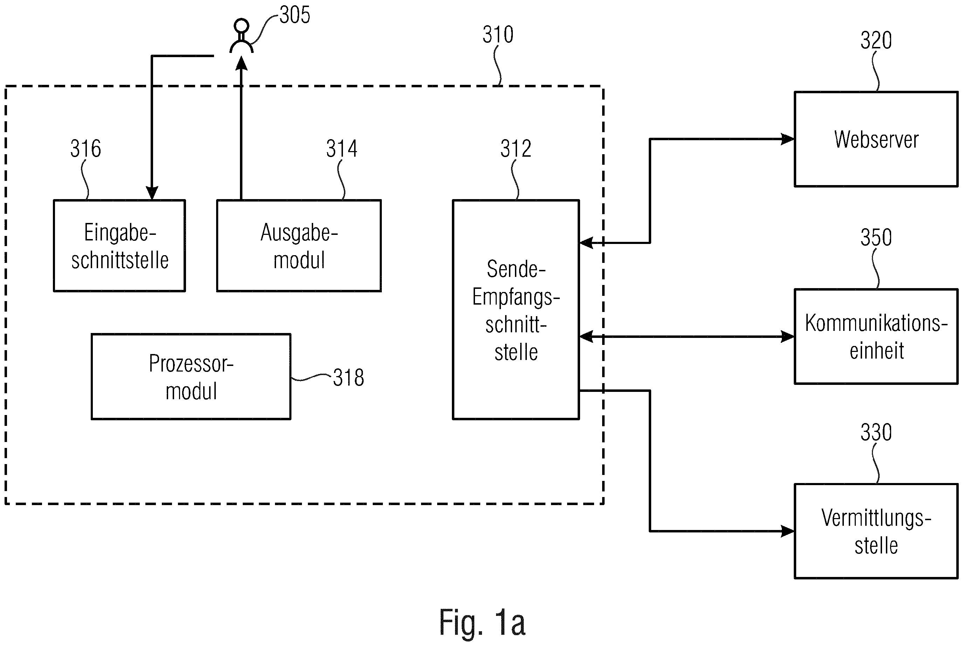

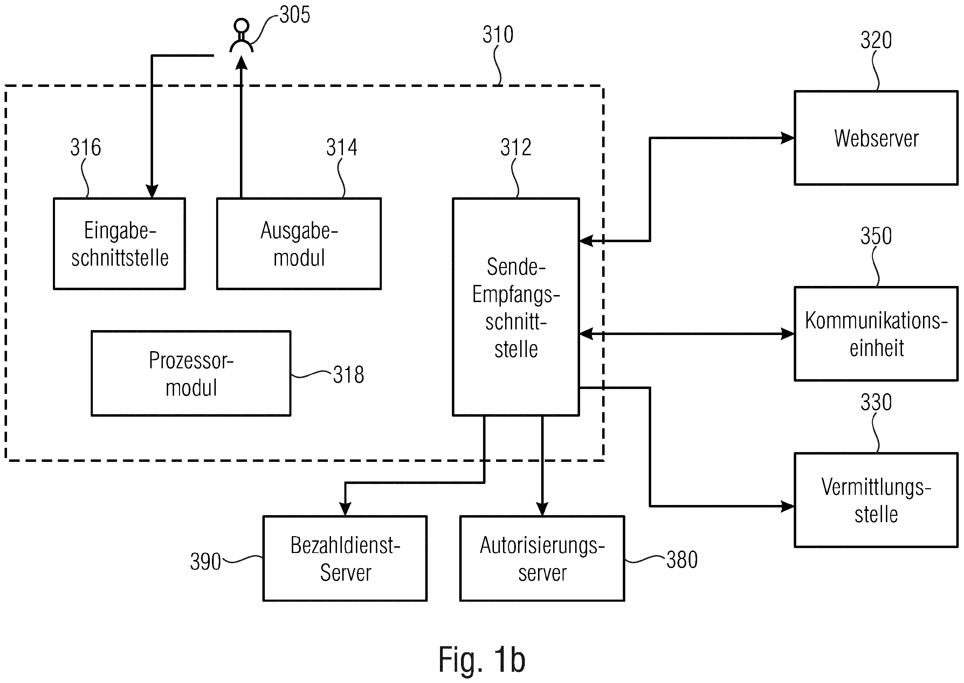

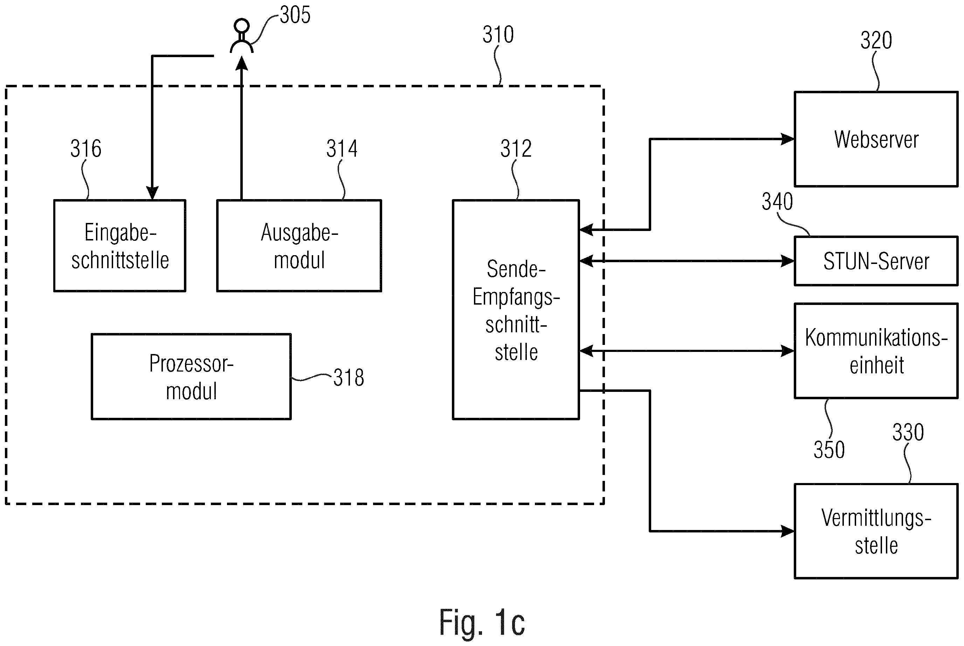

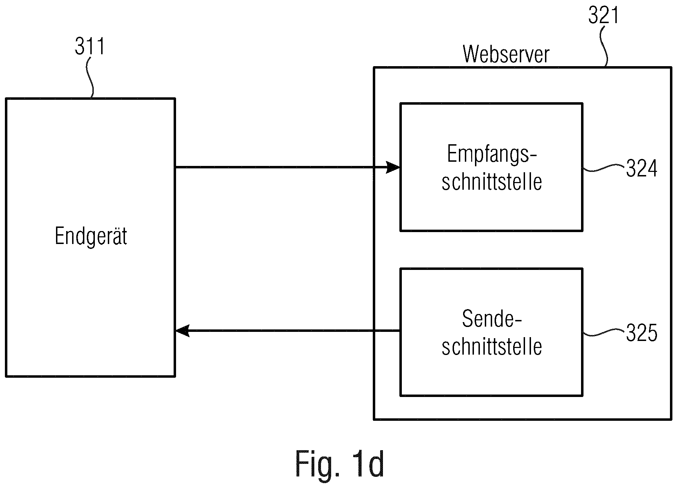

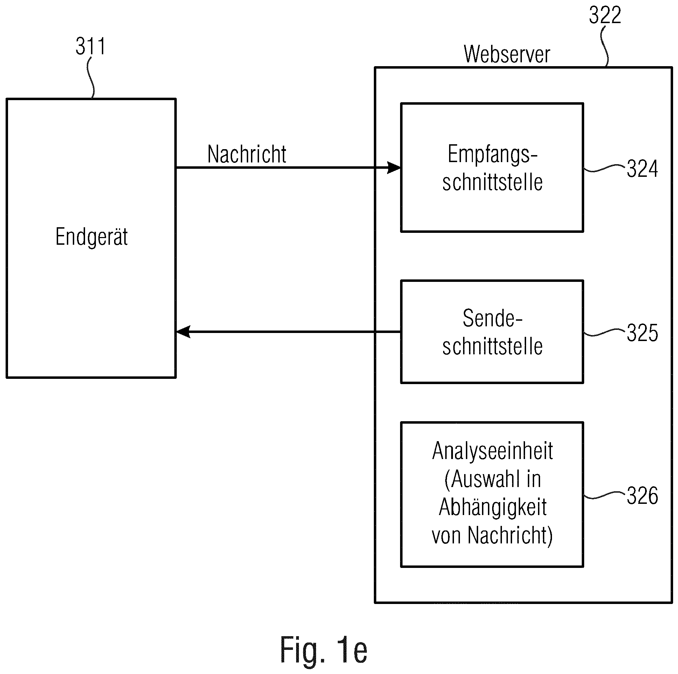

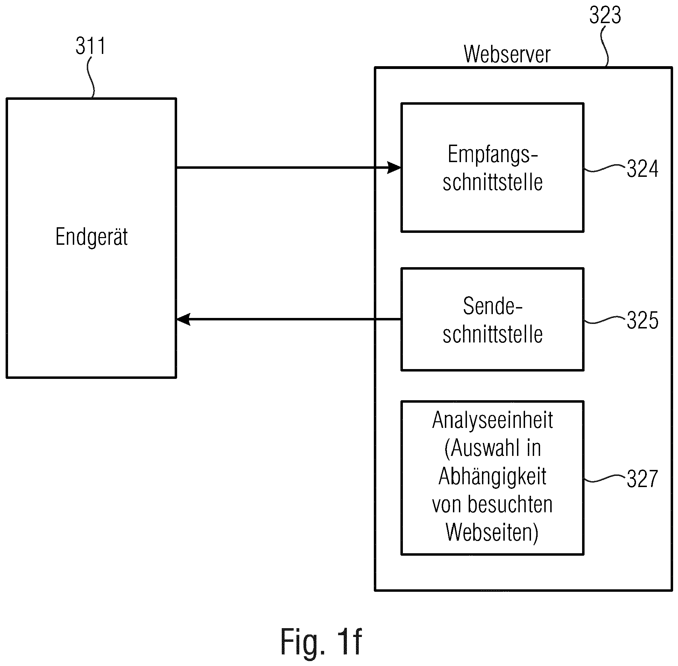

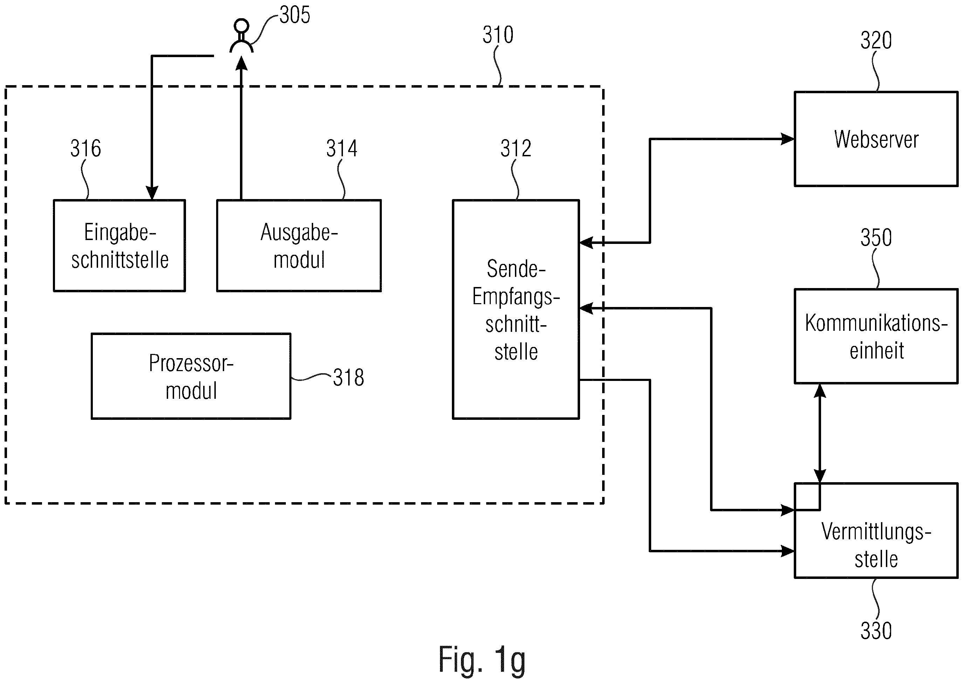

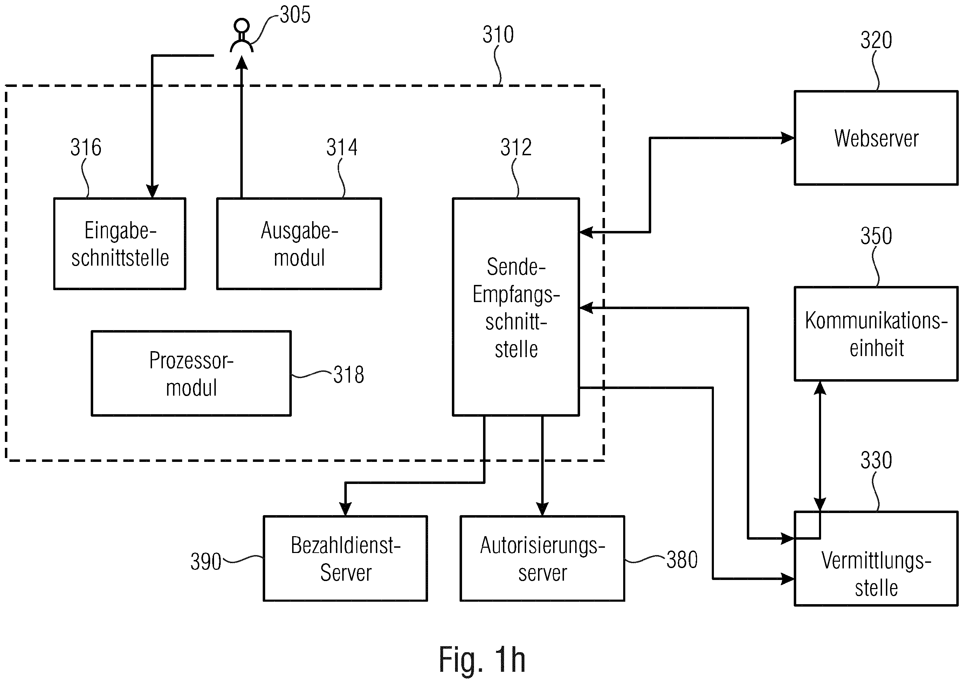

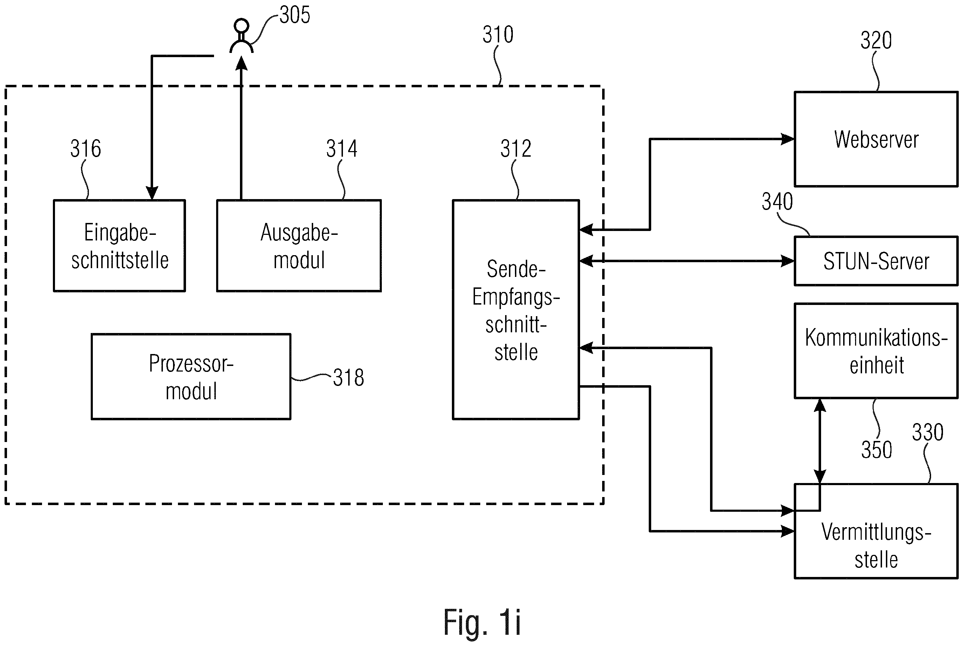

Fig. 1 zeigt eine Vorrichtung 310 zum Abrufen einer Webseite von einem Webserver 320 und zum Aufbau einer Kommunikationsverbindung gemäß einer Ausführungsform.

Die Vorrichtung 310 umfasst eine Sende-Empfangsschnittstelle 312, die ausgebildet ist, eine Übermittlung der Webseite von dem Webserver 320 anzufordern, und die ausgebildet ist, die Webseite von dem Webserver 320 zu empfangen.

Ferner umfasst die Vorrichtung 310 ein Ausgabemodul 314, das ausgebildet ist, einem Nutzer 305 die Webseite auszugeben, wobei das Ausgabemodul 314 dem Nutzer 305 des Weiteren anzeigt, dass die Möglichkeit besteht, die Kommunikationsverbindung aufzubauen, wobei die Kommunikationsverbindung eine Audioverbindung oder eine Audio-Video-Verbindung oder eine Videoverbindung ist.

Des Weiteren umfasst die Vorrichtung 310 eine Eingabeschnittstelle 316, die ausgebildet ist, eine Eingabe des Nutzers 305 zu empfangen, durch die der Nutzer 305 anzeigt, dass die Kommunikationsverbindung aufgebaut werden soll.

Ferner umfasst die Vorrichtung 310 ein Prozessormodul 318, das ausgebildet ist, eine Verbindungsaufbau-Nachricht zu erzeugen, die den Aufbau der Kommunikationsverbindung mit einer Kommunikationseinheit 350 anfordert.

Die Sende-Empfangsschnittstelle 312 ist ausgebildet, die Verbindungsaufbau-Nachricht zu einer Vermittlungsstelle 330 zu senden. Ferner ist die Sende-Empfangsschnittstelle 312 ausgebildet, nach dem Senden der Verbindungsaufbau-Nachricht Audiodaten oder Audio- und Videodaten oder Videodaten zu der Kommunikationseinheit 350 Ausgabemodul 314 zu senden und von der Kommunikationseinheit 350 zu empfangen.

In einer Ausführungsform ist die Sende-Empfangsschnittstelle 312 ausgebildet, Adressinformation von dem Webserver 320 zu empfangen, wobei die Adressinformation eine Adresse der Kommunikationseinheit 350 angibt, wobei die Verbindungsaufbau-Nachricht die Adressinformation umfasst, die die Adresse der Kommunikationseinheit 350 angibt. Diese Ausführungsform ist in den Fig. 1a, 1b und 1c gezeigt.

In einer anderen Ausführungsform ist die Sende-Empfangsschnittstelle 312 dabei ausgebildet, nach dem Senden der Verbindungsaufbau-Nachricht Audiodaten oder Audio- und Videodaten oder Videodaten über die Vermittlungsstelle 330 zu der Kommunikationseinheit 350 zu senden und über die Vermittlungsstelle 330 von der Kommunikationseinheit 350 zu empfangen. Diese Ausführungsform, bei der die Kommunikation zwischen Vorrichtung 310 und Kommunikationseinheit 350 über die Vermittlungsstelle 330 erfolgt, ist in den Fig. 1g, 1h und 1i gezeigt.

Dabei ist in einer speziellen Ausführungsform die Sende-Empfangsschnittstelle 312 ausgebildet, der Vermittlungsstelle 330 Identifikationsinformation zuzusenden, die die Kommunikationseinheit 350 identifiziert oder die eine Gruppe von Kommunikationseinheiten identifiziert, wobei die Gruppe von Kommunikationseinheiten die Kommunikationseinheit 350 umfasst.

Beispielsweise kann die Identifikationsinformation, die von der Vorrichtung 310 übertragen wird, eine Kunden-ID des Webserver-Betreibers bei der Vermittlungsstelle 330 sein. Die Vermittlungsstelle 330 kann dann anhand der Kunden-ID, die von der Vorrichtung 310 übertragen wird, ermitteln, mit welcher Kommunikationseinheit 350 die Verbindung herzustellen ist. So kann einer Kunden-ID beispielsweise genau eine Kommunikationseinheit 350 möglich sein.

Alternativ kann es möglich sein, dass einer Kunden-ID des Webserver-Betreibers mehrere Kommunikationseinheiten 350 zugewiesen sind. Beispielsweise kann es sein, dass der Webserver-Betreiber ein Callcenter unterhält, bei dem jeder Callcenter-Mitarbeiter über eine Kommunikationseinheit 350 verfügt, die der Vermittlungsstelle 330 jeweils bekannt sein können. In diesem Fall kann die Vermittlungsstelle 330 dann jedem der Kommunikationseinheiten 350 jedes Callcenter-Mitarbeiters den Verbindungswunsch der Vorrichtung 310 anzeigen. Dies kann sich an jeder der Kommunikationseinheiten 350 beispielsweise durch einen Klingelton und/oder durch ein optisches Signal bemerkbar machen. Nimmt einer der Callcenter-Mitarbeiter an seiner Kommunikationseinheit dann den Verbindungswunsch an, so lässt die Vermittlungsstelle 330 die von der Vorrichtung eingehenden Verbindungsdaten dann nur noch an diese Kommunikationseinheit 350 laufen.

In einer Ausführungsform kann das Prozessormodul 318 beispielsweise ausgebildet sein, die Verbindungsaufbau-Nachricht, mit der der Aufbau der Kommunikationsverbindung mit der Kommunikationseinheit 350 angefordert wird, so zu erzeugen, dass die Verbindungsaufbau-Nachricht keine Informationen umfasst, die den Nutzer 305 der Vorrichtung 310 identifizieren.

Gemäß einer Ausführungsform kann die Sende-Empfangsschnittstelle 312 beispielsweise ausgebildet sein, die Audiodaten oder die Audio- und Videodaten oder die Videodaten zusammen mit einem Identifikator zu der Kommunikationseinheit 350; 450; 550 zu senden, so dass der Identifikator kennzeichnet, dass die Audiodaten oder die Audio- und Videodaten oder die Videodaten von der Vorrichtung 310; 410; 510 gesendet wurden.

In einer Ausführungsform umfasst der Identifikator z.B. keine Informationen umfasst, die den Nutzer 305; 405; 505 der Vorrichtung 310; 410; 510 identifizieren.

Gemäß einer Ausführungsform kann z.B. die Sende-Empfangsschnittstelle 312 ausgebildet sein, nach dem Senden der Verbindungsaufbau-Nachricht den Identifikator von der Vermittlungsstelle 330; 440; 530 zu erhalten.

In einer Ausführungsform kann der Identifikator beispielsweise ein globaler eindeutiger Identifikator (GUID) sein.

Gemäß einer Ausführungsform kann das Prozessormodul 318 z.B. eingerichtet sein, ein oder mehrere Kommunikationsverbindungs-Nachrichten zu erzeugen, die von der Kommunikationsverbindung abhängen, die aber von den gesendeten oder empfangenen Audiodaten oder Audio- und Videodaten oder Videodaten verschieden sind, wobei die Sende-Empfangsschnittstelle 312 ausgebildet sein kann, die ein oder mehreren Kommunikations-Verbindungsnachrichten zusammen mit dem Identifikator zu einem Verbindungsereignis-Server 560 zu senden. Hierdurch kann kenntlich gemacht werden, dass die ein oder mehreren Kommunikations-Verbindungsnachrichten sich auf die Vorrichtung 310; 410; 510 (und auf die aufgebaute Kommunikationsverbindung) beziehen.

In einer Ausführungsform kann die Sende-Empfangsschnittstelle 312 ausgebildet sein, eine Registrierungsnachricht zu der Vermittlungsstelle 330 zu senden, mit der eine Registrierung angefordert wird, wobei die Registrierungsnachricht keine Informationen umfasst, die den Nutzer 305 der Vorrichtung 310 identifizieren. Dabei kann die Sende-Empfangsschnittstelle 312 z.B. ausgebildet sein, eine Antwortnachricht von der Vermittlungsstelle 330 zu erhalten, wobei die Antwortnachricht einen Registrierungs-Identifikator umfasst. Ferner kann das Prozessormodul 318 dabei z.B. ausgebildet sein, die Verbindungsaufbau-Nachricht, mit der der Aufbau der Kommunikationsverbindung mit der Kommunikationseinheit 350 angefordert wird, so zu erzeugen, dass die Verbindungsaufbau-Nachricht den Registrierungs-Identifikator umfasst.

Gemäß einer Ausführungsform kann das Prozessormodul 318 z.B. ausgebildet sein, die Verbindungsaufbau-Nachricht, mit der der Aufbau der Kommunikationsverbindung mit der Kommunikationseinheit 350 angefordert wird, so zu erzeugen, dass die Verbindungsaufbau-Nachricht eine SIP-Adresse als die Adressinformation umfasst, die die Adresse der Kommunikationseinheit 350 angibt.

In einer Ausführungsform kann die Sende-Empfangsschnittstelle 312 beispielsweise ausgebildet sein, die Audiodaten oder die Audio- und Videodaten oder die Videodaten zu der Kommunikationseinheit 350 unter Nutzung von WebRTC® zu senden und von der Kommunikationseinheit 350 zu empfangen.

Gemäß einer Ausführungsform kann das Ausgabemodul 314 ein Display umfassen, wobei das Ausgabemodul 314 ausgebildet sein kann, die Webseite auf dem Display auszugeben. Das Ausgabemodul 314 kann dabei beispielsweise dem Nutzer 305 anzeigen, dass die Möglichkeit besteht, die Kommunikationsverbindung aufzubauen, indem ein anklickbarer Link oder eine anklickbare Schaltfläche angezeigt wird.

In einer Ausführungsform kann, auf ein Anklicken des anklickbaren Links oder der anklickbaren Schaltfläche hin, das Prozessormodul 318 ausgebildet sein, die Verbindungsaufbau-Nachricht zu erzeugen, und die Sende-Empfangsschnittstelle 312 kann beispielsweise ausgebildet sein, die Verbindungsaufbau-Nachricht zu der Vermittlungsstelle 330 zu senden, ohne dass es zu einer weiteren Interaktion mit dem Nutzer 305 kommt.

Gemäß einer Ausführungsform kann, auf ein Anklicken des anklickbaren Links oder der anklickbaren Schaltfläche hin, das Prozessormodul 318 z.B. ausgebildet sein, die Verbindungsaufbau-Nachricht zu erzeugen. Die Sende-Empfangsschnittstelle 312 kann dabei ausgebildet sein, die Verbindungsaufbau-Nachricht zu der Vermittlungsstelle 330 zu senden, ohne dass die eine grafische Anzeige die auf dem Display angezeigte Webseite überblendet.

In einer Ausführungsform kann die Sende-Empfangsschnittstelle 312 z.B. ausgebildet sein, nach dem Senden der Verbindungsaufbau-Nachricht die Audiodaten zu der Kommunikationseinheit 350 zu senden und von der Kommunikationseinheit 350 zu empfangen, ohne dass die auf dem Display ausgegebene Webseite von einer grafischen Anzeige ganz oder teilweise überblendet wird.

Gemäß einer Ausführungsform kann das Ausgabemodul 314 beispielsweise ausgebildet sein, die Videodaten, die von der Kommunikationseinheit 350 empfangen werden, in einer Webseite oder in eine Webseite integriert anzuzeigen, die auf dem Display angezeigt wird.

In einer Ausführungsform kann die Sende-Empfangsschnittstelle 312 ferner z.B. ausgebildet sein, nachdem die Audiodaten oder die Audio- und Videodaten oder die Videodaten zu der Kommunikationseinheit 350 gesendet wurden und von der Kommunikationseinheit 350 empfangen wurden, von der Kommunikationseinheit 350 eine Zahlungsaufforderungs-Nachricht zu erhalten. Dabei kann das Ausgabemodul 314 beispielsweise ausgebildet sein, eine weitere Webseite auf dem Display auszugeben, die ein Zahlungs-Formular anzeigt, wobei in das Zahlungs-Formular Zahlungsdaten eintragbar sind.

Fig. 1b zeigt eine Vorrichtung 310 gemäß einer Ausführungsform, in der die Vorrichtung 310 mit einem Autorisierungsserver 380 und einem Bezahldienst-Server 390 interagiert. Siehe ebenso die Fig. 1h.

In einer Ausführungsform kann beispielsweise das Zahlungs-Formular Eingabefelder für Autorisierungsdaten aufweisen, wobei die Sende-Empfangsschnittstelle 312 z.B. ausgebildet sein kann, die Autorisierungsdaten, die von dem Nutzer 305 in die Eingabefelder des Zahlungs-Formulars eingegeben wurden, zu einem Autorisierungsserver 380 zu senden.

Gemäß einer Ausführungsform kann das Ausgabemodul 314 beispielsweise ausgebildet sein, die weitere Webseite auf dem Display auszugeben, die das Zahlungs-Formular anzeigt, so dass durch das Zahlungs-Formular ein Benutzername und ein Passwort als die Autorisierungsdaten abgefragt werden.

In einer Ausführungsform kann z.B. die Sende-Empfangsschnittstelle 312 ausgebildet sein, Zahlungsdaten, die in das Eingabeformular eingegeben wurden, und die eine Zahlung anweisen, zu einem Bezahldienst-Server 390 zu senden.

Gemäß einer Ausführungsform kann die Sende-Empfangsschnittstelle 312 beispielsweise ausgebildet sein, nachdem die Sende-Empfangsschnittstelle 312 die Zahlungsdaten zu dem Bezahldienst-Server 390 gesendet hat, weitere Audiodaten oder Audio- und Videodaten oder Videodaten zu der Kommunikationseinheit 350 zu senden und von der Kommunikationseinheit 350 zu empfangen.

In einer Ausführungsform kann die Sende-Empfangsschnittstelle 312 beispielsweise ausgebildet sein, die Übermittlung der Webseite von dem Webserver 320 anzufordern, wobei der Webserver 320 ein Webserver einer Suchmaschine sein kann. Dabei kann die Sende-Empfangsschnittstelle 312 beispielsweise ausgebildet sein, mit der Anforderung zur Übersendung der Webseite ein oder mehrere Suchbegriffe einer Suchanfrage mit übersendet, wobei die Webseite ein Suchergebnis der Suchanfrage mit den ein oder mehreren Suchbegriffen umfassen kann.

Gemäß einer Ausführungsform kann das Prozessormodul 318 z.B. eingerichtet sein, ein oder mehrere Kommunikationsverbindungs-Nachrichten zu erzeugen, die von der Kommunikationsverbindung abhängen, die aber von den gesendeten oder empfangenen Audiodaten oder Audio- und Videodaten oder Videodaten verschieden sind. Dabei kann die Empfangsschnittstelle beispielsweise ausgebildet sein, die ein oder mehreren Kommunikations-Verbindungsnachrichten zu einem Verbindungsereignis-Server zu senden.

Fig. 1c zeigt eine Vorrichtung 310 gemäß einer Ausführungsform, in der die Vorrichtung 310 mit einem STUN-Server 340 interagiert. Siehe ebenso die Fig. 1i.

In einer Ausführungsform kann die Sende-Empfangsschnittstelle 312 beispielsweise ausgebildet sein, einem STUN-Server 340 eine Abfragenachricht zu senden. Dabei kann die Sende-Empfangsschnittstelle 312 z.B. ausgebildet sein, von dem STUN-Server 340 eine Antwortnachricht mit Verbindungsinformationen zu erhalten. Ferner kann die Sende-Empfangsschnittstelle 312 beispielsweise ausgebildet sein, das Senden der Audiodaten oder Audio- und Videodaten oder Videodaten zu der Kommunikationseinheit 350 basierend auf den Verbindungsinformationen aus der Antwortnachricht des STUN-Servers 340 durchzuführen.

Fig. 1d zeigt einen Webserver 321 zum Bereitstellen einer Webseite für ein Endgerät 311 gemäß einer Ausführungsform.

Der Webserver 321 umfasst eine Empfangsschnittstelle 324, die ausgebildet ist, eine Nachricht von dem Endgerät 311 zu empfangen, mit der die Übermittlung der Webseite von dem Webserver 321 angefordert wird.

Des Weiteren umfasst der Webserver 321 eine Sendeschnittstelle 325, die ausgebildet ist, die Webseite und Adressinformation dem Endgerät 311 zu senden. Die Adressinformation umfasst wenigstens zwei Adressen, wobei jede der wenigstens zwei Adressen die Adresse von jeweils einer von wenigstens zwei Kommunikationseinheiten bezeichnet.

Bei dem Endgerät 311 kann es sich um eine der oben beschriebenen Vorrichtungen 310 handeln.

Fig. 1e zeigt einen Webserver 322 zum Bereitstellen einer Webseite für ein Endgerät 311 gemäß einer weiteren Ausführungsform. Der Webserver 322 umfasst eine Empfangsschnittstelle 324, die ausgebildet ist, eine Nachricht von dem Endgerät 311 zu empfangen, mit der die Übermittlung der Webseite von dem Webserver 322 angefordert wird. Der Weiteren umfasst der Webserver 322 eine Sendeschnittstelle 325, die ausgebildet ist, die Webseite und Adressinformation dem Endgerät 311 zu senden.

Ferner umfasst der Webserver 322 eine Analyseeinheit 326, die ausgebildet ist, als die Adressinformation eine von wenigstens zwei Adressen auszuwählen, wobei jede der wenigstens zwei Adressen die Adresse von jeweils einer von wenigstens zwei Kommunikationseinheiten bezeichnet, wobei die Analyseeinheit 326 ausgebildet ist, die eine Adresse in Abhängigkeit von der von dem Endgerät 311 empfangenen Nachricht auszuwählen. Bei dem Endgerät 311 kann es sich um eine der oben beschriebenen Vorrichtungen 310 handeln.

In einer Ausführungsform kann es sich bei dem Webserver 322 beispielsweise um den Webserver 322 einer Suchmaschine handeln. Die Nachricht von dem Endgerät 311 kann dabei z.B. ferner ein oder mehrere Suchbegriffe umfassen. Dabei kann die Analyseeinheit 326 z.B. ausgebildet sein, die eine Adresse in Abhängigkeit von den ein oder mehreren Suchbegriffen auszuwählen.

Fig. 1f zeigt einen Webserver 323 zum Bereitstellen einer Webseite für ein Endgerät 311 gemäß einer weiteren Ausführungsform. Der Webserver 323 umfasst eine Empfangsschnittstelle 324, die ausgebildet ist, eine Nachricht von dem Endgerät 311 zu empfangen, mit der die Übermittlung der Webseite von dem Webserver 323 angefordert wird. Ferner umfasst der Webserver 323 eine Sendeschnittstelle 325, die ausgebildet ist, die Webseite und Adressinformation dem Endgerät 311 zu senden.

Des Weiteren umfasst der Webserver 323 eine Analyseeinheit 327, die ausgebildet ist, als die Adressinformation eine von wenigstens zwei Adressen auszuwählen, wobei jede der wenigstens zwei Adressen die Adresse von jeweils einer von wenigstens zwei Kommunikationseinheiten bezeichnet, wobei die Analyseeinheit 327 ausgebildet sein kann, die eine Adresse in Abhängigkeit von bisher von dem Endgerät 311 abgerufenen Webseiten auszuwählen. Bei dem Endgerät 311 kann es sich um eine der oben beschriebenen Vorrichtungen 310 handeln.

Gemäß einer Ausführungsform kann, beispielsweise jede Adresse der wenigstens zwei Adressen, die von den obigen Webservern 320; 321; 322; 323 gesendet werden, eine SIP-Adresse sein.

Ferner wird ein System zum Abrufen einer Webseite, zum Bereitstellen der Webseite und zum Aufbau einer Kommunikationsverbindung bereitgestellt.

Das System umfasst eine Vorrichtung 310 gemäß einer der obigen Ausführungsformen und einen Webserver 320. Eine Sende-Empfangsschnittstelle 312 der Vorrichtung 310 ist ausgebildet, eine Übermittlung der Webseite von dem Webserver 320 anzufordern. Die Komponenten 310 und 320 eines solchen Systems sind beispielsweise in den Fig. 1, Fig. 1a, Fig. 1b und Fig. 1c und in den Fig. 1g, Fig. 1h und Fig. 1i zu sehen.

Bei dem Webserver 320 kann es sich z.B. um einen Webserver 320 der Fig. 1a oder der Fig. 1b oder der Fig. 1c handeln.

Der Webserver 320 ist ausgebildet, eine Nachricht von dem Vorrichtung 310 zu empfangen, mit der die Übermittlung der Webseite von dem Webserver 320 angefordert wird. Ferner ist der Webserver 320 ausgebildet, die Webseite und Adressinformation der Vorrichtung 310 zu senden, wobei die Adressinformation umfasst, die eine Adresse einer Kommunikationseinheit 350 angibt. Die Sende-Empfangsschnittstelle 312 der Vorrichtung 310 ist ausgebildet, die Webseite und die Adressinformation von dem Webserver 320 zu empfangen.

Ein Ausgabemodul 314 der Vorrichtung 310 ist ausgebildet, einem Nutzer 305 die Webseite auszugeben, wobei das Ausgabemodul 314 dem Nutzer 305 des Weiteren anzeigt, dass die Möglichkeit besteht, die Kommunikationsverbindung aufzubauen, wobei die Kommunikations-verbindung eine Audioverbindung oder eine Audio-Video-Verbindung oder eine Videoverbindung ist.

Des Weiteren ist eine Eingabeschnittstelle 316 der Vorrichtung 310 ausgebildet, eine Eingabe des Nutzers 305 zu empfangen, durch die der Nutzer 305 anzeigt, dass die Kommunikationsverbindung aufgebaut werden soll.

Ferner ist ein Prozessormodul 318 der Vorrichtung 310 ausgebildet, eine Verbindungsaufbau-Nachricht zu erzeugen, die den Aufbau der Kommunikationsverbindung mit der Kommunikationseinheit 350 anfordert, wobei die Verbindungsaufbau-Nachricht die Adressinformation umfasst, die die Adresse der Kommunikationseinheit 350 angibt.

Die Sende-Empfangsschnittstelle 312 der Vorrichtung 310 ist ausgebildet, die Verbindungsaufbau-Nachricht zu einer Vermittlungsstelle 330 zu senden. Ferner ist die Sende-Empfangsschnittstelle 312 der Vorrichtung 310 ausgebildet, nach dem Senden der Verbindungsaufbau-Nachricht Audiodaten oder Audio- und Videodaten oder Videodaten zu der Kommunikationseinheit 350 zu senden und von der Kommunikationseinheit 350 zu empfangen.

Gemäß einer Ausführungsform kann das System beispielsweise des Weiteren die Kommunikationseinheit 350 umfassen, wobei die Kommunikationseinheit 350 ausgebildet sein kann, Audiodaten oder Audio- und Videodaten oder Videodaten zu der Vorrichtung 310 zu senden und von der Vorrichtung 310 zu empfangen.

In einer Ausführungsform kann das System ferner die Vermittlungsstelle 330; 430; 530 umfassen. Die Sende-Empfangsschnittstelle 312 der Vorrichtung 310; 410; 510 kann dabei ausgebildet sein, die Verbindungsaufbau-Nachricht zu der Vermittlungsstelle 330; 440; 530 zu senden. Die Sende-Empfangsschnittstelle 312 kann z.B. ausgebildet sein, nach dem Senden der Verbindungsaufbau-Nachricht einen Identifikator von der Vermittlungsstelle 330; 440; 530 zu erhalten. Ferner kann die Sende-Empfangsschnittstelle 312 ausgebildet sein, die Audiodaten oder die Audio- und Videodaten oder die Videodaten zusammen mit einem Identifikator zu der Kommunikationseinheit 350; 450; 550 zu senden, so dass der Identifikator kennzeichnet, dass die Audiodaten oder die Audio- und Videodaten oder die Videodaten von der Vorrichtung 310; 410; 510 gesendet wurden.

Gemäß einer Ausführungsform umfasst der Identifikator z.B. keine Informationen, die den Nutzer (305; 405; 505) der Vorrichtung 310; 410; 510 identifizieren.

In einer Ausführungsform kann der Identifikator ein globaler eindeutiger Identifikator (GUID) sein.

In einer Ausführungsform kann z.B. das System ferner einen Autorisierungsserver 380 aufweisen. Die zusätzliche Komponente 380 eines solchen Systems ist beispielsweise in Fig. 1b zu sehen.

Die Sende-Empfangsschnittstelle 312 der Vorrichtung 310 kann dabei ferner ausgebildet sein, nachdem die Audiodaten oder die Audio- und Videodaten oder die Videodaten zu der Kommunikationseinheit 350 gesendet wurden und von der Kommunikationseinheit 350 empfangen wurden, von der Kommunikationseinheit 350 eine Zahlungsaufforderungs-Nachricht zu erhalten. Das Ausgabemodul 314 der Vorrichtung 310 kann ferner ausgebildet sein, eine weitere Webseite auf dem Display auszugeben, die ein Zahlungs-Formular anzeigt, wobei in das Zahlungs-Formular Zahlungsdaten eintragbar sind, wobei das Zahlungs-Formular Eingabefelder für Autorisierungsdaten aufweisen kann. Des Weiteren kann z.B. die Sende-Empfangsschnittstelle 312 der Vorrichtung 310 ausgebildet ist, die Autorisierungsdaten, die von dem Nutzer 305 in die Eingabefelder des Zahlungs-Formulars eingegeben wurden, zu dem Autorisierungsserver 380 zu senden, wobei das Ausgabemodul 314 der Vorrichtung 310 ausgebildet sein kann, die weitere Webseite auf dem Display auszugeben, die das Zahlungs-Formular anzeigt, so dass durch das Zahlungs-Formular ein Benutzername und ein Passwort als die Autorisierungsdaten abgefragt werden.

Gemäß einer Ausführungsform kann das System beispielsweise des Weiteren einen Bezahldienst-Server 390 umfassen. Die zusätzliche Komponente 390 eines solchen Systems ist beispielsweise in Fig. 1b zu sehen.

Dabei kann die Sende-Empfangsschnittstelle 312 ausgebildet sein, Zahlungsdaten, die in das Eingabeformular eingegeben wurden, und die eine Zahlung anweisen, zu dem Bezahldienst-Server 390 zu senden, und wobei der Bezahldienst-Server 390 ausgebildet sein kann, die Zahlungsdaten zu verarbeiten.

In einer Ausführungsform kann z.B. die Sende-Empfangsschnittstelle 312 der Vorrichtung 310 ausgebildet sein, nachdem die Sende-Empfangsschnittstelle 312 die Zahlungsdaten zu dem Bezahldienst-Server 390 gesendet hat, weitere Audiodaten oder Audio- und Videodaten oder Videodaten zu der Kommunikationseinheit 350 zu senden und von der Kommunikationseinheit 350 zu empfangen.

In besonderen Ausführungsformen kann der Webserver 320 der hier beschriebenen Systeme beispielsweise als ein Webserver 321 der Fig. 1d oder als ein Webserver 322 der Fig. 1e oder als ein Webserver 323 der Fig. 1f ausgestaltet sein.

Im Folgenden wird eines der Ausführungsbeispiele der Erfindung beschrieben. Man kann Ausführungsbeispiele der Erfindung als einen "1-Click-Call" bezeichnen, denn in bevorzugten Ausführungsformen wird eine Kommunikationsverbindung durch einen Klick ausgelöst, beispielsweise durch einen Klick auf einen Link oder eine Schaltfläche auf einer Webseite, die von einem Webbrowser angezeigt wird, mittels eines Eingabegeräts; oder durch einen Klick auf einen Link oder eine Schaltfläche auf einer Webseite, die von einem Webbrowser angezeigt wird, durch Drücken mit einem Finger auf der Anzeigeoberfläche eines Smartphones. Alle bekannten technischen Möglichkeiten, wie auf einen Link oder eine Schaltfläche geklickt beziehungsweise gedrückt werden kann, sind möglich.

Spezielle Ausführungsformen können dabei in einem klassischen Web-Browser z.B. wie folgt ablaufen:
Der Nutzer betrachtet eine Web-Seite (z.B. ein HTML-Dokument) innerhalb seines WebBrowsers. In einem speziellen Bereich wird ein Button (eine Schaltfläche) bzw. ein Link (deutsch: Verknüpfung) angezeigt. (Sofern im Folgenden von einem Link die Rede ist, sind immer auch technische Realisierungen mit umfasst, die eine Schaltfläche/einen Button anzeigen). Der angezeigte Link (bzw. die Schaltfläche) kann angeklickt werden.

Andere Ausführungsformen beziehen sich auf andere Möglichkeiten von User-Clients (deutsch: Nutzer-Clienten) bzw. Endgeräten. Ausführungsformen realisieren dabei auch Audiogeräte mit Cloud-Anbindung, die als digitale Assistenten vermarktet werden (siehe hierzu z.B.
[17a]: https://de.wikipedia.org/wiki/Amazon_Echo bzw:
[17b]: https://en.wikipedia.org/wiki/Amazon_Echo).

Ein solcher Ansatz ist grundsätzlich vergleichbar mit den Sprach-Assistenten in Smartphones ("OK Google"® oder auch Siri®). Auch über solche Assistenten ist ein Aufbau einer Audio-Verbindung möglich. Der Klick wird lediglich durch ein Audio-Befehl ersetzt.

Bei der Telefonie unterscheidet man zwischen dem A-Teilnehmer und dem B-Teilnehmer. Der A-Teilnehmer ist der die Verbindung aufbauende Nutzer. Als B-Teilnehmer (engl. called party) bezeichnet man bei einer Wählverbindung denjenigen Teilnehmer, der vom A-Teilnehmer angewählt wurde. Entsprechend wird als A-Leg die Strecke vom A-Teilnehmer zur Telefonanlage (bzw. zu einem Switch; deutsch: Vermittlungsstelle) verstanden. Als B-Leg wird die Strecke vom B-Teilnehmer zur Telefonanlage (bzw. zum Switch) verstanden, siehe:
[18]: https://de.wikipedia.org/wiki/Teilnehmer_(Kommunikationssystem) .

In Ausführungsformen der Erfindung ist das Ziel der Verbindung bereits fix konfiguriert. In solchen Ausführungsformen ist der B-Leg also fix konfiguriert. Der A-Teilnehmer (der Nutzer) kann also nicht mit einem beliebigen Ziel eine Verbindung herstellen. Beispielsweise ist in einer Ausführungsform beispielsweise ein festes Ziel fest vorgegeben. Oder, in einer anderen Ausführungsform werden von dem B-Teilnehmer in einem vorgeschalteten Konfigurationsprozess ein oder mehrere feste Ziele vorgegeben, zu denen die Verbindung aufgebaut wird. Bildlich gesprochen ist damit die Kurzwahltaste, wie man sie von früher kennt, ist in ihrer Funktionalität erweitert. Es ist nun eine Kurzwahltaste eines anonymen Nutzers für ein zuvor fixiertes Ziel (ein zuvor fixierter Endpunkt).

Bei einem Ziel, auch Endpunkt genannt, kann es sich um verschiedenes handeln, beispielsweise um einen Festnetz-Telefonanschluss und/oder einen Mobilfunk-Anschluss (Handy/Smartphone) und/oder einen SIP-Client (z. B. als Smartphone-App oder als Desktop-Software) und/oder einen Skype-Client (z. B. als Smartphone-App oder als Desktop-Software) und/oder einen Browser in Verbindung mit einer speziellen Webseite, die mittels WebRTC® den Browser in ein Software-Device verwandelt.

In manchen Ausführungsformen erfolgt auf das Anklicken das Links hin, z.B., ein Verbindungsaufbau mit einer Vermittlungsstelle. Der die Verbindung initial aufbauende Nutzer wird als A-Teilnehmer bezeichnet. Abweichend von bisherigen Telefonie- bzw. Verbindungskonzepten ist der A-Teilnehmer (der Nutzer, der die Verbindung initial aufbaut) komplett anonym. Es findet zwar eine Registrierung des SIP-Clients bei der Telefonanlage statt. Allerdings wird hier lediglich eine anonyme Verbindungs-ID genutzt. Die Anonymität gewährleistet z.B., dass ein Nutzer sich nicht zuvor für diesen Prozess registrieren muss. Vielmehr kann jeder Nutzer diesen Prozess nutzen sofern die technischen Voraussetzungen gegeben sind. In der Anonymität des Verbindungsaufbaus ist ein wesentlicher Unterschied zum Stand der Technik zu sehen.

Der Vergleich mit der Kurzwahltaste eines Telefons bietet sich wieder an: Ein Tastendruck und die Verbindung werden über das Telefon zu einer hinterlegten Nummer hergestellt. Ein großer Unterschied zur Kurzwahltaste eines Telefons ist jedoch, dass der A-Teilnehmer in Ausführungsformen der Erfindung anonym ist.

In Ausführungsformen ist also zur initialen Nutzung keine Registrierung oder ähnliches erforderlich. Der A-Teilnehmer bzw. die Verbindung ist zunächst anonym. Der Endpunkt kann beispielsweise ein Browser, oder aber auch eine anderes techn. Device wie z. B. "Amazon Echo"® sein.

Gemäß Ausführungsformen kann die Art der Verbindung eine reine Audio-Verbindung oder eine Audio-Video-Verbindung oder eine reine Video-Verbindung sein.

In besonderen Ausführungsformen können alle Verbindungen optional einen zusätzlichen Datenkanal zur Übertragung weiterer Daten beliebigen Inhalts umfassen.

Gemäß Ausführungsformen kann die Verbindung kann jederzeit beendet werden. Beispielsweise geschieht dies entweder durch eine Aktion des Users innerhalb des Webbrowsers (z. B. Klick auf einen weiteren Link oder Klick auf den gleichen Link), oder der B-Teilnehmer kann das Gespräch beenden.

In Ausführungsformen der Erfindung wird der Verbindungsaufbau durch einen einzigen Mausklick auf einen Link im Web-Browser erreicht werden, wobei der Verbindungsaufbau über das WebRTC® Protokoll (in Verbindung mit einer SIP-Library) erfolgt.

Des Weiteren ist in Ausführungsformen paralleler Datenaustausch möglich. Parallel zur bestehenden Verbindung (Voice/Video) können (auf Basis von WebRTC® oder auch auf Basis von SIP) ein oder mehrere Datenkanäle genutzt werden, um beliebige Daten auszutauschen oder auch Hintergrundprozesse zu steuern. Diese Daten können beispielsweise Zahlungsdaten und/oder Kundendaten und/oder Produktdaten und/oder Auskünfte und oder Datei-Übertragungsdaten und oder Screen-Sharing-Daten (deutsch: gemeinsame Bildschirm-Nutzungsdaten), etc. sein.

Ferner wird in Ausführungsformen ein Medienbruch verhindert. Dadurch, dass der Browser nicht aus dem Fokus des Nutzers verschwindet, wird das Problem des Medienbruches gelöst.

Ferner kommt es in Ausführungsformen nicht mehr zur Unterbrechung des Customer Journeys und eine Schließung der Datenlücke wird realisiert. Dadurch, dass der komplette Prozess IP-gesteuert ist bzw. bleibt, können Systeme zur Erfassung des Kundenverhaltens (wie z. B. Google Analytics®) nahtlos eingebunden werden und verschiedene Zustände (Versuch des Verbindungsaufbaus, evtl. Fehlversuche, Dauer der Verbindung, etc.) erfasst werden. Ausführungsformen lassen sich mit existierenden Web-Tracking-Lösungen verknüpfen und ermöglichen eine lückenlose Analyse (englisch: Call-Tracking, deutsch: Anruf-Verfolgung).

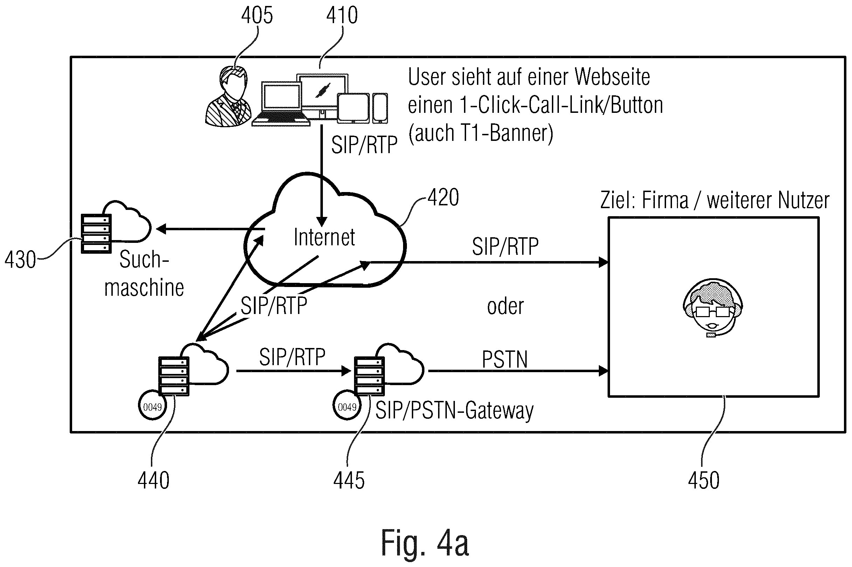

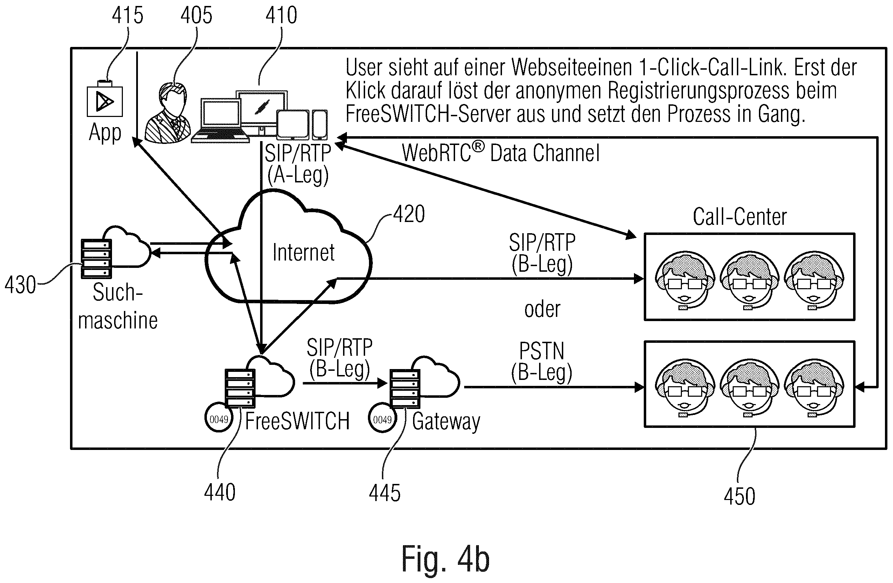

Fig. 4a und Fig. 4b zeigen spezielle Ausführungsformen, bei der ein Klick auf den Link (bzw. die Schaltfläche) eine Reihe von Aktionen auslöst. Dabei stellen Fig. 4a und Fig. 4b eine technische Darstellung für die Umsetzung eines 1-Click-Calls bereit.

Ein Nutzer 405 nutzt eines seiner Endgeräte 410, beispielsweise ein Mobiltelefon, ein Smartphone, ein Tablet oder einen Computer und geht mit einem Programm oder einer App 415, beispielsweise einem Webbrowser ins Internet 420. Beispielsweise gibt er bei einer Suchmaschine 430 den Namen eines Unternehmens an, und bekommt eine Webseite mit Suchergebnissen von der Suchmaschine 430 zurückgeliefert. In die zurückgelieferte Webseite eingebaut kann sich beispielsweise ein 1-Click-Call-Link befinden. Erst der Klick darauf löst den anonymisierten Registrierungsprozess beim FreeSwitch® Server 440 aus und setzt den Prozess in Gang, also den Verbindungsaufbau.

Dabei wird eine SIP/RTP (Session Initiation Protocol/Real Time Protocol) Verbindung zu einem FreeSwitch® Server 440 aufgebaut, das sogenannte A-Leg.

Ferner wird eine B-Leg Verbindung zwischen FreeSwitch® Server 440 zum B-Teilnehmer aufgebaut, der das Ziel 450, etwa eine Firma oder ein weiterer Nutzer 450 darstellt, (beispielsweise ein Call-Center 450 in Fig. 4b). Die B-Leg Verbindung kann dabei als reine SIP/RTP Verbindung aufgebaut sein. Oder, alternativ, kann die B-Leg Verbindung über ein Gateway (deutsch: Tor) 445 laufen, wobei die Verbindung zwischen Switch 440 und Gateway 445 als SIP/RTP Verbindung realisiert sein kann, und zwischen Gateway 445 und B-Teilnehmer 450 über das Fernsprechnetz (PSTN) laufen kann.

Bei der obigen Kommunikationseinheit 350 aus den Fig. 1a, Fig. 1b und Fig. 1c und aus den Fig. 1g, Fig. 1h und Fig. 1i kann es sich beispielsweise um das Ziel 450 aus den Fig. 4a und Fig. 4b handeln. Mit anderen Worten: Das Ziel 450 aus Fig. 4a und Fig. 4b ist ein Beispiel für eine Kommunikationseinheit 350 aus den Fig. 1a, Fig. 1b und Fig. 1c und aus den Fig. 1g, Fig. 1h und Fig. 1i.

Beispielsweise kann in einer speziellen Ausführungsform der Verbindungsaufbau wie folgt realisiert sein:
Zunächst kann, optional, ein Initialisierungsschritt vorgesehen sein. Beispielsweise könnten in diesem Schritt optional ein oder mehrere Javascript-Objekte initialisiert werden.

In einem weiteren Schritt Verbindungsaufbau mit einer Vermittlungsstelle, z.B. dem FreeSwitch® Server 440. Es erfolgt also der Aufbau der A-Leg-Verbindung.

Optional, kann in einem weiteren Schritt eine Datenübermittlung an eine Tracking-Software vorgesehen sein. In diesem Schritt kann beispielsweise an die Tracking-Software übermittelt werden, dass ein Verbindungsaufbau zum B-Teilnehmer durch Anklicken des Links initialisiert wurde.

Als weiterer Schritt kann die Abfrage einer Datenbank im FreeSWITCH® 440 vorgesehen sein. FreeSWITCH® ist eine frei verfügbare Software-Lösung für die Abbildung aller notwendigen Funktionen einer Telefonanlage. Für die Details zu FreeSwitch® siehe:
[19]: https://en.wikipedia.org/wiki/FreeSWITCH).

Des Weiteren erfolgt die Vermittlung zu einem ermittelten Ziel 450 dem B-Teilnehmer (in Fig. 4b das Call-Center 450). Der Aufbau des B-Legs wird hierdurch etabliert.

In einem weiteren Schritt erfolgt die Zusammenschaltung der Verbindung (engl.: Bridge, deutsch: Brücke).

Fig. 4b zeigt den gleichen Aufbau wie Fig. 4a. Zusätzlich ist in Fig. 4b beispielhaft ein etablierter WebRTC® Datenkanal zwischen dem Endgerät 410 des Nutzers 405 und dem Call-Center 450 zu sehen.

Ferner ist in Fig. 4b eine weitere Interaktion der Suchmaschine 430 mit der App 415 auf dem Endgerät 410 des Nutzers 405 zu sehen.

Wenn die Kommunikation beispielsweise vom A-Teilnehmer oder vom B-Teilnehmer beendet wird, erfolgt beispielsweise in einem abschließenden Schritt der Abbau der Verbindung.

In manchen Ausführungsformen wird eine Integration von Bezahl-Systemen (Payment-Systems) realisiert.

Heutige Systeme signalisieren Gebühreneinheiten mit Hilfe von SS7. Manche Ausführungsformen der Erfindung ermöglichen hingegen die Integration von modernen Payment-Gateways, sofern diese eine IP-gestützte Kommunikation anbieten.

Zur Realisierung von In-Call-Payment (deutsch: Bezahlen während des Telefonats) erfolgt dazu in manchen Ausführungsformen die technische Einbindung eines Payment-Gateways.

In manchen Ausführungsformen werden dabei durch die Einbindung eines IP-gestützten Payment-Gateways (Payment: deutsch: Zahlung; Gateway: deutsch: Tor) verschiedene Optionen realisiert. Man kann hier von "In-Call-Payment" sprechen. Der Begriff ist analog zum heutigen Begriff des "In-App-Payment" (deutsch: Bezahlung innerhalb einer App) zu verstehen (Siehe z. B.
[20]: https://developer.apple.com/in-app-purchase/;
siehe ferner zu Bezahlung innerhalb einer App z.B.:
[21]: http://t3n.de/news/payone-sdk-in-app-payment-ios-452253/):
Manche Ausführungsformen sind dafür eingerichtet, dass während einer Verbindung (Audio und/oder Video) eine Zahlung stattfinden kann. Parallel zur eigentlichen Verbindung werden dann Zahlungsdaten ausgetauscht.

Beispielsweise kann in einer ersten speziellen Ausführungsform für die Integration von Bezahl-Systemen eine Verbindung (englisch: "Call") ab einem beliebigen Zeitpunkt zeitbasiert berechnet werden", z.B. 1,99 €/Min. Dies ist vergleichbar mit dem heutigen Zahlsystem "0900". Die Tarifierung kann aber im Gegensatz zu aktuellen Systemen jederzeit während des Calls geändert werden. Vor allem ist eine Änderung der Tarifierung live (deutsch: in Echtzeit) steuerbar durch den B-Teilnehmer.

In einer zweiten speziellen Ausführungsform für die Integration von Bezahl-Systemen kann ein Call ab einem beliebigen Zeitpunkt Ereignis-gesteuert (englisch: Event-basiert) tarifiert werden, z.B. 4,99 €/Verbindung. Dies ist ebenfalls vergleichbar mit dem heutigen Zahlsystem "0900". Diese Events können auch im Gegensatz zu aktuellen Systemen mehrfach während einer Verbindung ausgelöst werden. Das Auslösen eines Events ist z. B. durch den B-Teilnehmer möglich.

Eine dritte spezielle Ausführungsform für die Integration von Bezahl-Systemen kombiniert die erste spezielle Ausführungsform für die Integration von Bezahl-Systemen und die zweite spezielle Ausführungsform für die Integration von Bezahl-Systemen auf freie Art und Weise.

Bei Ausführungsformen für die Integration von Bezahl-Systemen kann die Tarifierung in keiner Weise beschränkt sein. Das Bezahlen von Kleinstbeträgen (Micro-Payment) sowie von großen Beträgen (z. B. 1.000 €) ist möglich. Im Gegensatz dazu haben Systeme nach dem Stand der Technik klare Einschränkungen (siehe oben).

Ferner erlauben Ausführungsformen für die Integration von Bezahl-Systemen eine kostenlose Verbindung für den A-Teilnehmer. Eine frei definierbare Tarifierung im Sinne der obigen ersten speziellen Ausführungsform und der zweiten speziellen Ausführungsform sowie deren freie Kombination ist zu Lasten des B-Teilnehmers möglich. Beispielsweise kann ein Werbetreibender einem Suchmaschinen-Unternehmen den Auftrag geben, Werbung zu schalten. Die Suchmaschine blendet dann einen Ausführungsform-gemäßen Link ein (der Link kann beispielsweise als 1-Click-Call bezeichnet werden), der Werbetreibende zahlt für Klick bzw. für Verbindung an das Suchmaschinen-Unternehmen, wobei der Anrufer selbst nichts zahlt.

Die erste, zweite und dritte spezielle Ausführungsform für die Integration von Bezahl-Systemen können z. B. für die Freischaltung spezieller Features (deutsch: Eigenschaften) auf einer Webseite (Feature Expansion; deutsch: Eigenschaften-Erweiterung) oder aber zur Abrechnung einer Dienstleistung direkt am Telefon (Beratung) dienen. Oder aber im Sinne von Ad-Words (deutsch: Werbe-Worte): Ein Werbetreibender zahlt den Anruf (Klick).

Payment-Gateways, die in Ausführungsformen einsetzbar sind, werden dabei von verschiedenen Firmen angeboten. Beispielsweise ist "Android Pay®" ein Zahlungssystem des US-amerikanischen Unternehmens Google® für Android®-Geräte (siehe hierzu:
[22]: https://www.android.com/pay/ und
[23]: https://de.wikipedia.org/wiki/Android_Pay).

In einer Ausführungsform erfolgt die Integration von "Android Pay"®. In anderen Ausführungsformen werden andere Payment-Systeme analog eingesetzt, wie beispielsweise "Apple Pay"®, "PayPal"®, "sofortüberweisung.de"® und andere (siehe zu "Apple Pay"®:
[24]: https://de.wikipedia.org/wiki/Apple_Pay;
   siehe beispielsweise zu "PayPal"®:
[25]: https://de.wikipedia.org/wiki/PayPal;
   siehe z.B. zu sofortüberweisung.de"®:
[26]: https://de.wikipedia.org/wiki/Sofort%C3%BCberweisung).

Beispielsweise können es Ausführungsformen für die Integration von Bezahl-Systemen, die In-Call-Payment realisieren, ermöglichen, dass während einer bestehenden Verbindung zu jeder Zeit ein Zahlvorgang ausgelöst werden kann, oder es kann ab einem beliebigen Zeitpunkt eine Zahlung pro Zeiteinheit berechnet werden. Dabei ist der Zahlvorgang zu jedem Zeitpunkt variabel neu änderbar. Diese Lösung ist deutlich flexibler und genauer als Systeme im Stand der Technik. Im Gegensatz dazu kommt es bei herkömmlichen Systemen zu deutlichen Unterschieden bei der Tarifierung im Festnetz und in Mobilfunknetzen. Die Tarifierung kann nämlich bei 0900er-Nummern im Festnetz und beim Mobilfunk deutlich auseinandergehen.

In Ausführungsformen für die Integration von Bezahl-Systemen kann also beispielsweise realisiert werden, dass der A-Teilnehmer für einen Klick auf einen 1-Click-Call-Link nichts zahlt. Der Werbetreibende zahlt für diesen Call einen Betrag an das Unternehmen, das die Werbung schaltet. Die Neuerungen spiegeln sich dabei in den oben benannten Punkten wieder. Eine neue Nutzungsform wird realisiert, die Call, Tracking und Zahlung durch den Werbetreibenden umfasst (Call: deutsch: Verbindung; Tracking: deutsch: Nachverfolgung).

Ausführungsformen könnten beispielsweise mit der "Google-API"® interagieren. Während der bestehenden Verbindung könnte beispielsweise ein Datenaustausch mit Servern von Google® stattfinden. Dies könnte z.B. über die Ansteuerung einer "Google-API"® das Auslösen eines Zahlungsvorganges sein. Google® könnte dann eine entsprechende Nachricht an die Zahlungs-App des Nutzers senden. Die App könnte dann den Nutzer auffordern, die Zahlung zu autorisieren. Über eine Rückmeldung von der App an Google® und von dort weiter zum FreeSwitch® Server könnte der Kommunikationsprozess dann inkl. einer Abrechnungsmöglichkeit der Verbindung selbst fortgesetzt werden.

Im Folgenden werden beispielhaft spezifische Ausführungsbeispiele der Erfindung beschrieben.

Zum besseren Verständnis werden zunächst einige Begriffe erläutert:
End User (deutsch: Endnutzer): hier ein Mensch der beispielsweise ein Smartphone und mit einem Browser nutzt, beispielsweise ein Android®-Smartphone und einem Chrome®-Browser.

Vermittlungsstelle: Ein Server, der Telekommunikations-Vermittlungsdienste leistet, beispielsweise ein FreeSWITCH® Server (FreeSWITCH® basiert auf quelloffener Software). Andere Server, die Telefon-Vermittlungsdienste leisten, sind ebenfalls denkbar, wie z.B. ein Asterisk®-Server / der Einsatz von Asterisk®. Ebenso können kommerzielle Server, die Telekommunikations-Vermittlungsdienste leisten, eingesetzt werden.

Web-Server: Gemeint ist ein Server, der statische und dynamische Webseiten ausliefern kann. Beispielsweise ein Apache®-Webserver oder ein Microsoft® IIS Server.

Datenbank-Server: Gemeint ist ein Server, der als Grundlage für die Speicherung und Abfrage verschiedener Konfigurationen sowie Stamm- und Bewegungsdaten dient.

Beispielsweise eine MySQL®-Datenbank oder eine Oracle®-Datenbank. Konfigurationen werden häufig auch auf Dateisystemebene (also als Dateien) gespeichert.

Endpunkt: Gemeint ist ein Kommunikationsgerät, welches der Werbetreibende vorab einrichtet und beim Werbenetzwerk (z. B. Google®) hinterlegt und welches der Vermittlungsstelle bekannt ist, um die Verbindung aufzubauen.

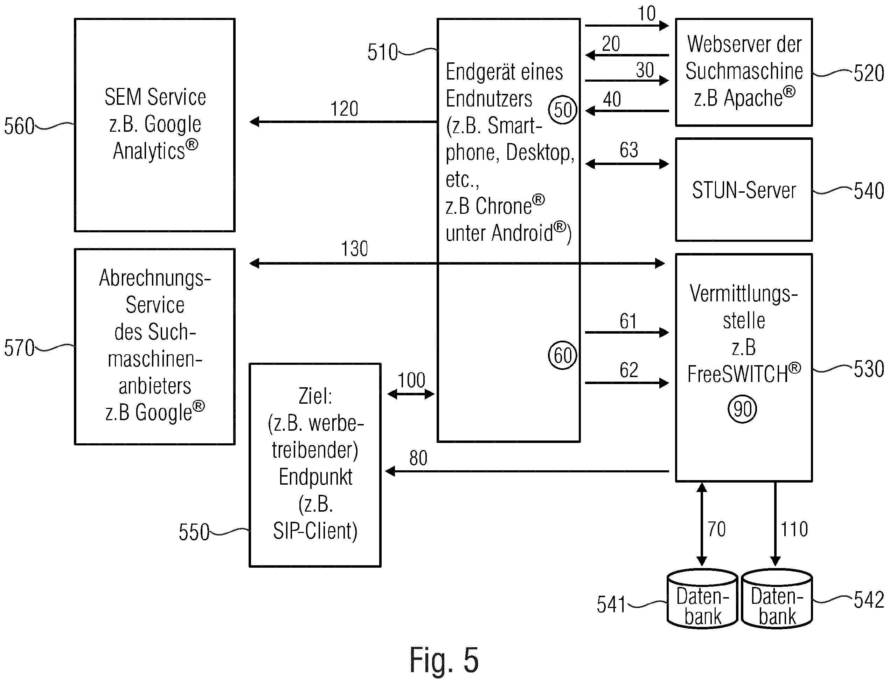

Fig. 5 zeigt eine spezielle Ausführungsform, die für die Interaktion mit einer Suchmaschine ausgelegt ist.

In Schritt 10 ruft ein Endnutzer mit seinem Endgerät 510 eine Webseite von einem Webserver 520 eines Suchmaschinenanbieters auf.

In Schritt 20 liefert dann der Webserver 520 der Suchmaschine die Webseite an das Endgerät 510 des Endnutzers zurück, z.B. eine Suchmaske.

In Schritt 30 gibt der Endnutzer über sein Endgerät 510 einen Suchbegriff in die Suchmaske ein und schickt eine Anfrage an den Webserver 520 der Suchmaschine.

In Schritt 40 liefert der Webserver der Suchmaschine das Suchergebnis als Website inkl. eines Ausführungsform-gemäßen Links (der als 1-Click-Call-Link bezeichnet werden kann) zurück.

Statt oder ergänzend dazu, einen Suchbegriff in Schritt 30 in ein Suchfeld einzugeben, kann in Ausführungsformen stattdessen die Angabe des Suchbegriffs auch über eine Spracheingabe erfolgen.

Statt oder ergänzend dazu, in Schritt 40 die Suchergebnisse mit dem Link visuell anzuzeigen, können die Suchergebnisse auch von einer automatischen Computer-Sprachausgabe vorgelesen werden, wobei auf den Link, der auswählbar ist, besonders hingewiesen wird, z.B. durch die Sprachausgabe "Link [Bezeichnung des Links] anwählen?" oder durch eine ähnliche Sprachausgabe.

In Schritt 50 klickt der Endbenutzer mittels seines Endgeräts 510 auf den Link. Alternativ oder ergänzend hierzu kann die Auswahl des Ausführungsform-gemäßen Links (z.B. ein sogenannter 1-Click-Call-Link) auch durch eine Spracheingabe erfolgen.

In Schritt 60 erfolgt in bevorzugten Ausführungsformen eine Initialisierung einer SIP-User-Agents. In besonders bevorzugten Ausführungsformen kann dazu Programmcode zum Einsatz kommen, wie im Codebeispiel weiter unten beschrieben, oder Programmcode, der mit dem im Codebeispiel weiter unten beschriebenen Programmcode vergleichbar ist.

In einem Beispiel könnte in einem Schritt 61 eine in jeder Hinsicht optionale Registrierung an einem Telekommunikationsdienste bereitstellenden Server, beispielsweise einem FreeSWITCH®-Server 530, erfolgen. Es ist wichtig, zu betonen, dass eine solche Registrierung als "Client" völlig optional ist.

Auch wenn an dieser Stelle eine keine persönliche Registrierung Anwendung findet, so werden die Daten im Nachhinein mit einer einzigartigen (eindeutigen) User-ID verknüpft (siehe z.B. auch unten bei Schritt 120).

Manche Ausführungsformen sind gerade dadurch gekennzeichnet, dass keine Registrierung bei dem Telekommunikationsdienste bereitstellenden Server, z.B. dem FreeSwitch® Server 530, erfolgt. Erfolgt keine Registrierung, so wird dann ein anonymer Call gestartet.

In Schritt 62 erfolgt das Starten einer Verbindung, z.B. eines SIP-Calls, wobei zunächst der sogenannte A-Leg, also die Verbindung zum Telekommunikationsdienste bereitstellenden Server, z.B. dem FreeSwitch® Server aufgebaut wird. Dabei soll eine Verbindung zu einem fixen Ziel 550 gebaut werden, beispielsweise einem fixen Ziel 550, dass z.B. durch eine SIP Adresse bezeichnet sein kann (z.B. die SIP-Adresse: "sip:9999@0049.org"). Das Starten der Verbindung kann z.B. unter Nutzung von Quellcode, wie im Codebeispiel weiter unten beschrieben, erfolgen.

Bei der obigen Kommunikationseinheit 350 aus den Fig. 1a, Fig. 1b und Fig. 1c und aus den Fig. 1g, Fig. 1h und Fig. 1i kann es sich beispielsweise um das fixe Ziel 550 aus Fig. 5 handeln. Mit anderen Worten: Das fixe Ziel 550 aus Fig. 5 ist ein Beispiel für eine Kommunikationseinheit 350 aus den Fig. 1a, Fig. 1b und Fig. 1c und aus den Fig. 1g, Fig. 1h und Fig. 1i.

Das Session Initiation Protocol (SIP) ist ein Netzprotokoll zum Aufbau, zur Steuerung und zum Abbau einer Kommunikationssitzung zwischen zwei und mehr Teilnehmern (siehe:
[27a]: https://de.wikipedia.org/wiki/Session_Initiation_Protocol; bzw:
[27b]: https://en.wikipedia.org/wiki/Session_Initiation_Protocol.
siehe dort insbesondere den Abschnitt "Funktionsweise").

Spezifiziert ist SIP u.a. im RFC 3261 , siehe:
[28]: http://www.rfc-base.org/txt/rfc-3261.txt .

In der IP-Telefonie wird SIP häufig angewandt.

In einer speziellen Ausführungsform wird Aufbau, Steuerung und Abbau der Kommunikationssitzung unter anderem dadurch realisiert, dass ein gegebener Browser eingesetzt wird, dass WebRTC®, das innerhalb des Browsers gegeben ist eingesetzt wird, und dass die Javascript Bibliothek SIP.js (frei zugänglich unter [11]: http://sipjs.com/) eingesetzt wird. Zusätzlich wird in dieser Ausführungsform eine weitere Javascript-Datei eingesetzt, beispielsweise der Quellcode der Javascript-Datei "1clickcall.js", wie unten im Codebeispiel weiter unten beschrieben.

Zusätzlich zu einem bereits vorhandenen Browser und vorhandenem WebRTC®, wird also in einer Ausführungsform eine weitere Library wie z.B. SIP.js eingesetzt.

Alternativ lassen sich in anderen Ausführungsformen auch andere Libraries einsetzen, die den gleich Zweck erfüllen, z. B. JsSIP, siehe:
[29]: http://jssip.net/ .

Eine solche Library ist nötig, damit die SIP-Kommunikation (Audio + Video) mit einem SIP-Server (hier FreeSWITCH®) stattfinden kann.

In anderen Ausführungsformen wird eine Kommunikations-Verbindung mit einem "Nicht-SIP-Protokoll" realisiert, die die entsprechenden Libraries und Server-APIs aufweist.

Um anonyme Kommunikation zu implementieren, kann in Ausführungsformen ein globaler UUID (UUID: englisch: Universally Unique Identifier; deutsch: universell eindeutiger Identifikator) eingesetzt werden, siehe: RFC 4122:
[30]: https://tools.ietf.org/html/rfc4122; siehe auch:
[31a]: https://de.wikipedia.org/wiki/Universally_Unique_Identifier bzw:
[31b]: https://en.wikipedia.org/wiki/Universally_unique_identifier.

Dynamische Generierung kann zum Einsatz kommen. In speziellen Ausführungsformen kann, um anonyme Kommunikation zu implementieren eine anonyme Registrierungs-ID verwendet werden. Ferner können beispielsweise Keystones (deutsch: Schlüsselsteine) verwendet werden.

In einem optionalen Schritt 63 kann die Abfrage eines STUN-Servers 540 erfolgen, um ggf. vorliegende NAT-Probleme zu umgehen. (STUN = Session Traversal Utilities for NAT; deutsch: Werkzeuge zum Durchqueren von NATs; NAT: Network Address Translation; Netzwerkadressübersetzung). STUN ist ein einfaches Netzwerkprotokoll, um das Vorhandensein und die Art von Firewalls und NAT-Routern zu erkennen und NAT-Router zu durchdringen. Es soll den unkomplizierten Einsatz von Geräten (z.B. SIP-Telefone) und Computer-Programmen in Heimnetzwerken ermöglichen, welche Daten aus dem Internet empfangen möchten, siehe zu STUN beispielsweise:
[32a]: https://de.wikipedia.org/wiki/Session_Traversal_Utilities_for_NAT oder
[32b]: https://en.wikipedia.org/wiki/STUN .

In Schritt 70 erfolgt eine Datenbanksuche durch den FreeSWITCH®-Prozess. Hierbei erfragt der Server das Ziel 550, mit dem der A-Teilnehmer (End User) verbunden werden soll. Die Datenbank 541 hierfür kann sowohl auf dem Server selber oder auf einem dritten Server liegen.

In einer anderen Ausführungsform kann das Ziel 550 auch direkt von einem Webserver 520 der Suchmaschine per API erhalten werden. (Beispielsweise ist vorstellbar, dass das Ziel direkt von einem Google® Server erhalten wird). In diesem Fall wäre die Datenbank 541 "extern".

Das Codebeispiel weiter unten, stellt eine Implementierung bereit für den Fall, dass die Datenbank 541 auf dem FreeSWITCH®-Server selbst liegt; siehe insbesondere "Konfiguration der Extensions im FreeSWITCH®" (Extensions: deutsch: Erweiterungen).

In Schritt 80 erfolgt der Aufbau des B-Legs entsprechend der Konfiguration des Ziels 550 (z.B. des Werbetreibenden) der Verbindung. Beispielsweise kann ein SIP-Client, der das Ziel 550 der Verbindung ist, durch eine SIP-Adresse identifiziert sein (z.B.: "sip:mueller_fensterreinigung@0049.org") oder eine Fest- oder Handyrufnummer kann das Ziel identifizieren (z.B.: "+4912345600").

Eine spezielle Ausführungsform ist so ausgelegt, dass, sollte das Ziel 550 (z.B. ein Werbetreibender) eine SIP-Adresse sein, eine entsprechende SIP-Verbindung via IP aufgebaut wird. Sollte das Ziel 550 (bzw. der Endpunkt der das Ziel der Verbindung ist) eine Rufnummer (Festnetz oder Mobilfunk) sein, so wird z.B. ein Gateway von IP zu PSTN verwendet (siehe das Gateway 445 in Fig. 4a und Fig. 4b). Entsprechende Gateways werden z. B. von Telefonnetzbetreibern zur Verfügung gestellt.

In einer ersten besonderen Ausführungsform sind mehrere Ziele gleichzeitig angegeben. Dadurch ist es möglich, dass eine Verbindung zu allen angegebenen Zielen gleichzeitig aufgebaut wird. Allerdings wird nur ein Ziel 550 mit dem Endgerät des Endnutzer verbunden - nämlich jenes, welches als erstes "antwortet" (indem es beispielsweise den Verbindungsaufbau bestätigt). Ein solches Konzept kann auch als Call-Groups (deutsch: Anrufgruppen) bezeichnet werden.

Beispielsweise kann ein Handwerksbetrieb mit drei Mitarbeitern, die häufig unterwegs sind, jeden der Mitarbeiter mit einem Handy ausgestattet haben, wobei jedes der Handys gemäß einer Ausführungsform eingerichtet ist. Alle drei Handynummern sind als Ziele konfiguriert. Klickt ein Endnutzer auf den 1-Click-Call-Link, so klingeln alle drei Handys gleichzeitig. Der Mitarbeiter, der als erstes den Anruf bedient (die Verbindung annimmt), wird als Teilnehmer für die Verbindung ausgewählt. Die anderen beiden Verbindungen werden fallen gelassen.

In einer zweiten besonderen Ausführungsform erfolgt eine profilgesteuerte Modifikation durch Analyse des Nutzerverhaltens. Suchmaschinenbetreiber wie Google sammeln riesen Datenmengen und generieren daraus Profile einzelner Nutzer. Diese Profiledaten können nun herangezogen werden, um eine entsprechende Variante des 1-Click-Call-Links auszuliefern.

Wenn zum Beispiel ein Endnutzer sich für das Thema "Krankenversicherung" interessiert und in einem späteren Verlauf grundsätzlich im Themengebiet "Versicherung" sucht, so kann diesem Nutzer ein entsprechender 1-Click-Call zu einer Versicherung angezeigt werden. Dieser Link kann sogar zu einem speziellen Mitarbeiter geroutet werden, der sofort themenbezogen beraten kann.

In bevorzugten Ausführungsformen wählt dann eine Analysator-Einheit entweder z.B. eine erste SIP-Adresse aus, z.B. "sip:krankenversicherung@0049.org" oder z.B. eine zweite SIP-Adresse, z.B. "sip:immobilienfinanzierung@0049.org", und zwar in Abhängigkeit von der automatischen, von der Analysator-Einheit durchgeführten Analyse des Nutzerverhaltens. So kann der Nutzer beispielsweise zum richtigen Kundenberater weitergeleitet werden.

In einer dritten besonderen Ausführungsform werden die erste besondere Ausführungsform und die zweite besondere Ausführungsform miteinander kombiniert.

In speziellen Ausführungsformen erfolgt die profilgesteuerten Modifikation von Apps, etc.

In anderen Ausführungsformen erfolgt die automatische Analyse des Nutzerverhaltens in Abhängigkeit von vorherigen Nutzereingaben auf vorherigen Websites. Cookies können hierzu beispielsweise eingesetzt werden, um Informationen über vorheriges Nutzerverhalten zu speichern. In besonders bevorzugten Ausführungsformen werden beispielsweise Suchbegriffe gespeichert, die der Nutzer zuvor in eine Suchmaschine eingegeben hatte und dann von einer Analyse-Einheit automatisch analysiert, z.B. indem diese alten Suchbegriffe in einer Datenbankabfrage verwendet werden. So kann zum Beispiel der Suchbegriff "Zahnzusatzversicherung" in einer Datenbankabfrage, beispielsweise einer Datenbankabfrage der Form:
SELECT "Zahnzusatzversicherung" FROM sipadressen
oder beispielsweise einer Datenbankabfrage der Form:
   SELECT sip_target FROM sipadressen WHERE search_history = "zahnzusatzversicherung"
   verwendet werden. Als Ergebnis der Datenbankabfrage kann dann beispielsweise "sip:krankenversicherung@0049.org" als Rückgabewert der Datenbankabfrage geliefert werden.

Ein alter Suchbegriff "Immobilien" kann dann in einer Datenbankabfrage, beispielsweise einer Datenbankabfrage der Form:
SELECT "Immobilien" FROM sipadressen
oder beispielsweise einer Datenbankabfrage der Form:
   SELECT sip_target FROM sipadressen WHERE search_history = "immobilien"
   verwendet werden und liefert z.B. als Ergebnis der Datenbankabfrage beispielsweise "sip:immobilienfinanzierung@0049.org" zurück.

In speziellen Ausführungsformen ist also eine Analyseeinheit 327 dazu ausgebildet, eine Zieladresse der Kommunikationsverbindung in Abhängigkeit eines Nutzerverhaltens, beispielsweise vorheriger Eingaben auf Webseiten auszuwählen.

In weiteren Ausführungsformen erfolgt eine Modifikation einer Website oder einer App aufgrund von Gesprächsinhalten. Dies kann online und während der bestehenden Verbindung erfolgen. Beispielsweise kann "In-Call-Advertising" (Werbung während der Verbindung erfolgen), wobei Werbeinhalte angezeigt werden, deren Inhalt vom Gesprächsverlauf abhängt.

Beispielsweise ist denkbar, dass ein Sprachanalysator, z.B. installiert auf dem Server oder Endgerät des Ziels 550 der Verbindung Sprachanalyse hinsichtlich des Gesprächs betreibt. Fallen gewisse Schlagworte, wie etwa: "Krankenversicherung" oder die Schlagworte: "Versicherung" und "Zähne", so wird beispielsweise abhängig vom Ergebnis der Sprachanalyse die entsprechende Werbung eingeblendet, z.B. Werbung für eine Zahnzusatzversicherung. Hierzu kann der Sprachanalysator mit einer Datenbank zusammengeschlossen sein. Auf die Schlagworte "Versicherung" und "Zähne" erfolgt dann beispielsweise eine Datenbankabfrage, z.B. der Form
SELECT "Versicherung" AND "Zaehne" FROM Schlagwörter.

Das Ergebnis der Abfrage kann dann ein Identifikator sein, beispielsweise eine Indexnummer, die angibt, welche Werbung geschaltet werden soll. Beispielsweise kann dann eine weitere Datenbankabfrage erfolgen, etwa der Form
SELECT Indexnummer FROM Werbung ,
die den anzuzeigenden Werbetext zurückliefert. Alternativ kann schon eine Datenbankabfrage ausreichen, um den Werbetext zurückzuliefern, etwa eine Datenbankabfrage der Form:
SELECT "Versicherung" AND "Zaehne" FROM Werbung .

Andere Ausführungsformen weisen andere Kombinationen von Datenbankabfragen auf, die zum zurückliefern des anzuzeigenden Werbetextes dienen.

In weiteren Ausführungsformen wählt der Kommunikationsteilnehmer, der die Hardware des Ziels 550 nutzt, etwa ein Mitarbeiter des Call-Centers die anzuzeigende Werbung manuell aus einer, an einem Computer-Display angezeigten Liste aus. Die Werbung wird dann dem Nutzer des Endgeräts 510 an seinem Endgerät angezeigt, beispielsweise indem die Werbedaten über einen weiteren eigenen Datenkanal vom Ziel 550 zum Endgerät 510 übertragen wurden. Dieser weitere Datenkanal ist von den ein oder mehreren Kanälen verschieden, die zur Nutzung der Audio- und/oder Video-Daten verwendet werden, damit die Audio- und/oder Video-Kommunikation nicht gestört wird.

In anderen Ausführungsformen werden allerdings dieselben ein oder mehreren Kanäle zur Übertragung Werbedaten verwendet, die auch für die Übertragung der Daten für die Audio- und/oder Video-Kommunikation genutzt werden. In einer solchen Ausführungsform werden Datenkanäle gespart. Eine solche Ausführungsform ist besonders geeignet, wenn die Kommunikations-Infrastruktur begrenzt ist.

In Schritt 90, erfolgt die Zusammenschaltung der Teilnehmer, das sogenannte Bridging (deutsch: Überbrückung).

Während das A-Leg gehalten wird (Freizeichen), wird eine Verbindung zum B-Leg aufgebaut. Sobald der B-Teilnehmer die Verbindung annimmt ("abhebt"), wird die Verbindung, also die zwei Kanäle, zusammengeschaltet. Auf der Webseite
[33]: http://www.voip-info.org/wiki/view/Asterisk+cmd+Dial
wird der Vorgang des Bridging beispielsweise wie folgt erläutert: Auf den die Kommunikation anstoßenden Kanal wird dann, soweit erforderlich, geantwortet, und die beiden Kanäle werden dann zusammengeschlossen ("bridged"; deutsch: überbrückt), was eine Kommunikation zwischen Ihnen erlaubt. Mit anderen Worten, z.B. das A-Leg (in Fig. 5 die Verbindung zwischen dem Endgerät 510 und der Vermittlungsstelle 530) und das B-Leg (in Fig. 5 die Verbindung zwischen der Vermittlungsstelle 530 und dem Ziel 550) werden zusammengeschlossen.

In Schritt 100 erfolgt dann die Übertragung von Audio und/oder Video-Daten. Üblicherweise werden RTP-Daten (RTP = Real Time Protocol; deutsch: Echtzeitprotokoll) zwischen der SIP-Teilnehmern direkt übermittelt. Es gibt aber Szenarien, wo dies technisch bedingt zu Problemen führen kann und man mittels eines TURN-Servers die Datenströme über diesen lenkt. (siehe:
[34]: https://en.wikipedia.org/wiki/Traversal_Using_Relays_around_NAT).

In Schritt 110 erfolgt eine Speicherung der Verbindungsdaten, die auch als CDR bezeichnet werden (CDR = Call Detail Record; deutsch: Verbindungsdetails-Aufzeichnung; oder Call Data Record, deutsch: Verbindungsdatenaufzeichnung). Ein CDR enthält die Informationen, die für ein Abrechnungssystem im Telekommunikationsbereich benötigt werden. Im deutschen Sprachgebrauch wird zumeist der Begriff Kommunikationsdatensatz (KDS), Verbindungsdatensatz, Einzelgesprächsnachweis (EGN) oder Einzelverbindungsnachweis (EVN) verwendet. Mobilfunkunternehmen erstellen auch CDR für SMS-, MMS- und WAP-Verbindungen, also für alle Verbindungen, die einem Kunden in Rechnung gestellt werden können. (siehe:
[35a]: https://de.wikipedia.org/wiki/Call_Detail_Record oder
[35b]: https://en.wikipedia.org/wiki/Call_detail_record).

Die Speicherung erfolgt beispielsweise in einer Datenbank (in Fig. 5, in Datenbank 542).

In einem Schritt 120 erfolgt eine Übermittlung von Call-Ereignissen (Verbindungs-Ereignissen) an einen Server 560, also einem Verbindungsereignis-Server 560, bei der beispielsweise mittels einer SEM-API (z. B. von "Google Analytics"®). (SEM = Search Engine Marketing, deutsch: Suchmaschinen-Marketing; API = Application Programming Interface, deutsch: Anwendungsprogramm-Schnittstelle) siehe zu SEM:
[36a]: https://de.wikipedia.org/wiki/Suchmaschinenmarketing bzw:
[36b]: https://en.wikipedia.org/wiki/Search_engine_marketing .

"Google Analytics"® ist ein Online-Dienst des US-amerikanischen Unternehmens Google®, der der Datenverkehrsanalyse von Webseiten dient. Der Dienst untersucht u.a. die Herkunft der Besucher, ihre Verweildauer auf einzelnen Seiten sowie die Nutzung von Suchmaschinen und dient der Erfolgskontrolle von Werbekampagnen. (siehe:
[37a]: https://de.wikipedia.org/wiki/Google_Analytics oder
[37b]: https://en.wikipedia.org/wiki/Google_Analytics).

In Verbindung mit Ausführungsformen (auch als 1-Click-Call bezeichnet) können solchen Systemen Events (Ereignisse) übermittelt werden, um diese später auszuwerten, siehe:
[38]: https://support.google.com/analytics/answer/1033068?hl=de.

In erfindungsgemäßen Ausführungsformen können z. B. Ereignisse wie "Verbindung gestartet" oder "Verbindung kam nicht zustande" übermittelt werden.

Wichtig an dieser Stelle ist, dass alle CDR-Daten (CDR: Call Detail Record; deutsch: Anruf-Detailaufzeichnung) im Nachhinein mit einer einzigartigen User-ID (deutsch: Nutzer-ID) verknüpft werden. Die Verknüpfung der CDR-Daten mit der eindeutigen ID kann beispielsweise auf zwei Arten geschehen:
In einem ersten Fall erfolgt dies ohne eine Tracking-Software Auf der Enduser-Client-Seite wird mit der sog. Fingerprint-Methode der User mit sehr hoher Wahrscheinlichkeit (größer 99%) eindeutig identifiziert, siehe:
[39]: http://www.golem.de/1005/75176.html

Auf der Server-Seite wird eine globale UUID erzeugt (eine sogenannte GUID siehe auch:
[40]: https://en.wikipedia.org/wiki/Globally_unique_identifier

GUID: englisch: Globally Unique Identifier; deutsch: globaler eindeutiger Identifikator; GUIDs: englisch: Globally Unique Identifiers; deutsch: globale eindeutige Identifikatoren),
so dass alle 1-Click-Call-Datensätze mit dieser GUID verknüpft werden können. Nachträglich lässt sich dadurch ein Reporting pro User generieren und dem Business-Kunden zur Verfügung stellen. Die GUID lässt sich obendrein auch als Cookie setzen, wodurch eine spätere Erkennung des Users nochmals verbessert wird (100% Erkennung).

In einem zweiten Fall kommt es zum Einsatz von einem oder mehreren DatenverkehrsAnalyse-Tools (Tool: deutsch Werkzeug) beispielsweise "Google Analytics"®. Kommt z.B. "Google Analytics"® auf der Webseite zum Einsatz, so wird die "Google-Analytics-User-ID"® (User-ID: deutsch: Nutzeridentifikator) mit den 1-Click-Call-Daten verknüpft. Eine nachträgliche Übertragung in "Google Analytics"® (z.B. via "Google-Analytics-API"®) lässt somit ein Reporting innerhalb von "Google-Analytics"® zu, welches z. B. Aufschluss über folgende Informationen gibt:
Welches Werbe-Keyword (deutsch: Schlüsselwort) hat wieviel Calls (deutsch: Verbindungen/Anrufe) erzeugt (im vertrieblichen Sinne: Leads genannt; Leads: deutsch sinngemäß: Interessenten)

Welches User-Verhalten (deutsch: Nutzer-Verhalten) auf der Webseite hat zu einem Call geführt?

Welcher Kunde hat wieviel Umsatz generiert und dies möglicherweise auf Basis eines vorangegangenen Calls?

An dieser Stelle ist nochmals darauf hinzuweisen, dass im Webbrowser keine Authentifizierung nötig ist (z.B. ist keine Anmeldung oder ähnliches nötig) aber die Wiedererkennung und damit das Tracking nahtlos zusammengeführt werden kann, eben durch Einsatz von eindeutigen Nutzer-IDs.

In Schritt 130 erfolgt eine Benachrichtigung darüber, dass der Link angeklickt wurde an der Abrechnungs-Service-Server 570 des Suchmaschinenanbieters. Es kann dort z.B. die nachgelagerte Inrechnungstellung (des Anbahnens der Verbindung) vom Suchmaschinenbetreiber (z.B. Google®) an einen Werbetreibenden erfolgen. Dies kann man als "Pay per Call" (deutsch: Bezahlen pro Verbindung) analog zum "Pay per Click" (deutsch: Bezahlen pro Klick) bezeichnen. Hintergrund ist, dass der Werbetreibende den Klick auf den entsprechenden Link, hier: für das Anbahnen der Kommunikationsverbindung durch den Suchmaschinenbetreiber aufkommen soll. Für den Endkunden bleibt die (Anbahnung der) Verbindung kostenlos. Beispielsweise kann sich der Werbetreibende im Vorfeld beim Suchnetzwerk (z. B. Google®) registriert haben (z.B. bei "Google AdWords"®) (siehe:
[41a]: https://de.wikipedia.org/wiki/Google_AdWords bzw:
[41b]: https://en.wikipedia.org/wiki/AdWords)
und entsprechende Werbung gebucht haben. Beispielsweise kann der Werbetreibende für den Fall, dass er erfindungsgemäße Ausführungsformen (1-Click-Call) nutzen will, die Möglichkeit haben, dies speziell anzugeben, und kann die Möglichkeit haben, mindestens einen Endpunkt 550 (mindestens ein Ziel 550) anzugeben (beim Suchmaschinenbetreiber zu konfigurieren).

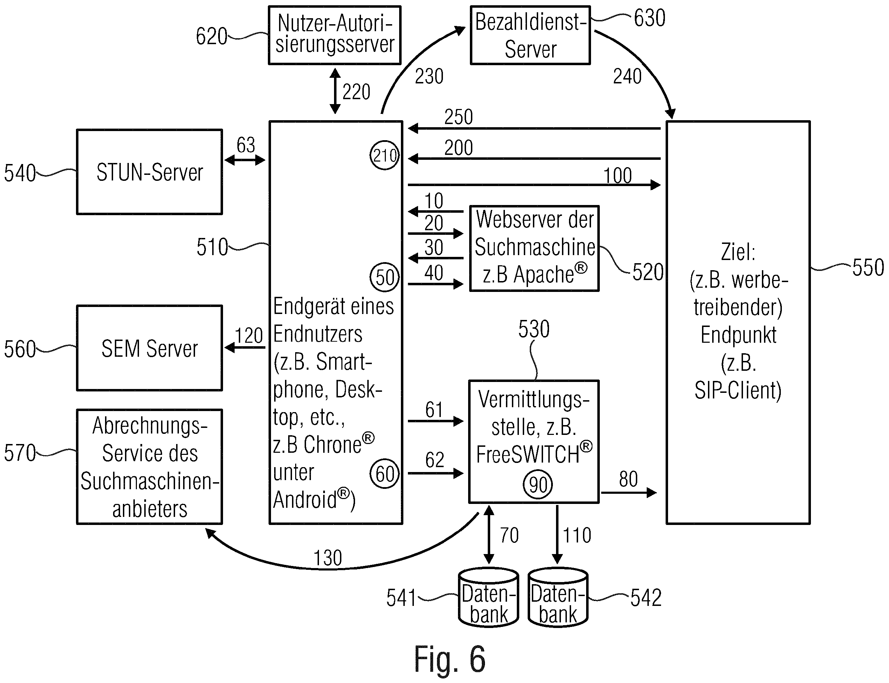

Fig. 6 zeigt ein Ablaufdiagramm für die Verknüpfung mit In-Call-Payment. Dabei stellen die Ausführungsformen der Fig. 6 eine Erweiterung der Ausführungsformen der Fig. 5 dar. Speziell zeigt Fig. 6 zusätzlich zu den Einheiten der Fig. 5 einen Nutzer-Autorisierungsserver 620 (englisch: User Authorization Server, der einen User Authorization Service realisiert; Service: deutsch: Dienst) und einen Bezahldienst Server 630 (englisch: Payment Server, der einen Payment Service realisiert). Der Nutzer-Autorisierungsserver 620 und der Bezahldienst Server 630 können von einem Suchmaschinenanbieter bereitgestellt werden (beispielsweise Google®).

Zu jedem Zeitpunkt der Verbindung kann das Endgerät (z.B. Server) 550 des B-Teilnehmers eine Zahlungsaufforderung verbal äußern und daraufhin dem Endgerät 510 vom A-Teilnehmer 510 dynamischen Content (deutsch: Inhalt) über SIP zusenden. Der dynamische Content wird zunächst via JSON (JSON: JavaScript Object Notation; deutsch JavaScript Objektnotation) übertragen und dann mittels DOM (DOM: Document Object Model; deutsch Dokumenten Objekt Modell) beim Endgerät 510 des A-Teilnehmers eingeblendet. Zunächst kann dies z. B. HTML-Code, der beim Endgerät 510 des A-Teilnehmers eingeblendet wird, sein. Dies wäre dann zunächst ein Formular mit der Möglichkeit die Zahlung vorzunehmen. Sobald die Zahlung abgeschlossen ist, kann das Endgerät 550 vom B-Teilnehmer seine Leistung erbringen. Dies ist möglicherweise eine Beratung oder auch weiterer Content, der wieder dynamisch per SIP an das Endgerät 510 des A-Teilnehmers zugestellt wird (und dort angezeigt wird).

In Schritt 200 löst der (z.B. Server 550 vom) B-Teilnehmer löst in seiner Ansicht eine Zahlungsaufforderung aus. Hierdurch wird dem Endgerät 510 des A-Teilnehmers per SIP eine mögliche Kombination von HTML-, CSS und JavaScript-Code übermittelt. Die Einblendung der HTML- und CSS-Codes sorgt für eine dynamische Änderung der Ansicht im Browser oder in seiner App (via DOM) beim Endgerät 510 des A-Teilnehmers. Zudem besteht die Möglichkeit den übermittelten JavaScript-Code auszuführen, um weitere Logik beim Endgerät 510 des A-Teilnehmers zu implementieren.

Das Document Object Model (DOM) ist dabei eine Spezifikation einer Schnittstelle für den Zugriff auf HTML- oder XML-Dokumente. Sie wird vom World Wide Web Consortium definiert. Über die sog. DOM-Manipulation lassen sich Webseiten-Inhalte dynamisch hinsichtlich Erscheinungsbild und Funktionalität ändern (siehe:
[42a]: https://de.wikipedia.org/wiki/Document_Object_Model oder
[42b]: https://en.wikipedia.org/wiki/Document_Object_Model).

Die Übertragung von Nicht-Audio- und Nicht-Video-Daten ist mittels SIP ebenso möglich (siehe [12]: Aameek Singh, Arup Acharya, "Using session initiation protocol to build context-aware VoIP support for multiplayer networked games", published in: Proceeding NetGames '04, Proceedings of 3rd ACM SIGCOMM workshop on Network and system support for games, Seiten 98 - 105, ACM New York, NY, USA, 2004).

In Schritt 210 werden die in Schritt 200 übermittelten Daten ausgewertet. Z.B. HTML- und CSS-Code wird angezeigt bzw. aktiviert und JavaScript-Code ggf. ausgeführt. Dies wird herangezogen, um dem Kunden ein Zahlungs-Formular zu übermitteln. Das Formular umfasst beispielsweise Felder für Benutzername und/oder Kennwort und/oder einen Gebührenhinweis und/oder weitere Informationstexte und Informationsbilder.

Beispielsweise kann durch das Ausfüllen des Formulars am Endgerät 510 des A-Teilnehmers wird die Zahlungsaufforderung bestätigt werden.

In Schritt 220 werden zunächst Benutzername und Kennwort für eine Autorisierung des Benutzers gegenüber einem Zahlungsanbieter genutzt. Ein Nutzer Autorisierungsserver 620 kann dafür zum Einsatz kommen. Z.B. können APIs wie z.B. die APIs der "Google Identity Platform"® genutzt (siehe:
[43]: https://developers.google.com/identity/?csw=1).

In Schritt 230 wird nach der Autorisierung ein Payment-Service mit den Autorisierungsdaten und der Zahlungsaufforderung der Höhe nach beauftragt. Ein Bezahldienst Server 630 kann dafür zum Einsatz kommen.

In einer alternativen Ausführungsform werden die Schritte 210 bis 230 ersetzt, und anstelle eines vorgefertigten Formulars wird ein Verweis auf ein externes Zahlungsformular (externer Link) zu einem Zahlungsanbieter per SIP übertragen und beim Endgerät 510 des A-Teilnehmers angezeigt. In diesem Falle wird der A-Teilnehmer in einem Teil der aktuellen Ansicht oder auch in einem überlagerten Fenster direkt auf den Service des Zahlungsanbieters geleitet. Dort findet die Autorisierung und der eigentliche Zahlvorgang unmittelbar statt. Nach Abschluss der Zahlung kehrt der A-Teilnehmer auf seinem Endgerät 510 wieder zurück zu der ursprünglichen Ansicht.

In Schritt 240 benachrichtigt, sobald die Zahlung erfolgreich durchgeführt worden ist, der Bezahldienst Server 630 (englisch: Payment-Service) den Client 550 (deutsch: dienstanforderndes Gerät) des B-Teilnehmers über die erfolgreiche (oder erfolglose) Zahlung. Dies geschieht i. d. R. bei allen Zahlungsanbietern über Call-Back-APIs wie z. B. einer HTTP-Rückmeldung (Call-Back: deutsch: Rückruf).

In Schritt 250 kann der B-Teilnehmer nun seine Leistung (z. B. Beratung) erbringen oder aber weiteren Content (deutsch: Inhalt) über SIP an den A-Teilnehmer übermitteln. Dieser Content kann aus Bildern, Videos und/oder Texten bestehen, die wiederum via DOM direkt auf dem Bildschirm des A-Teilnehmers eingeblendet werden können.

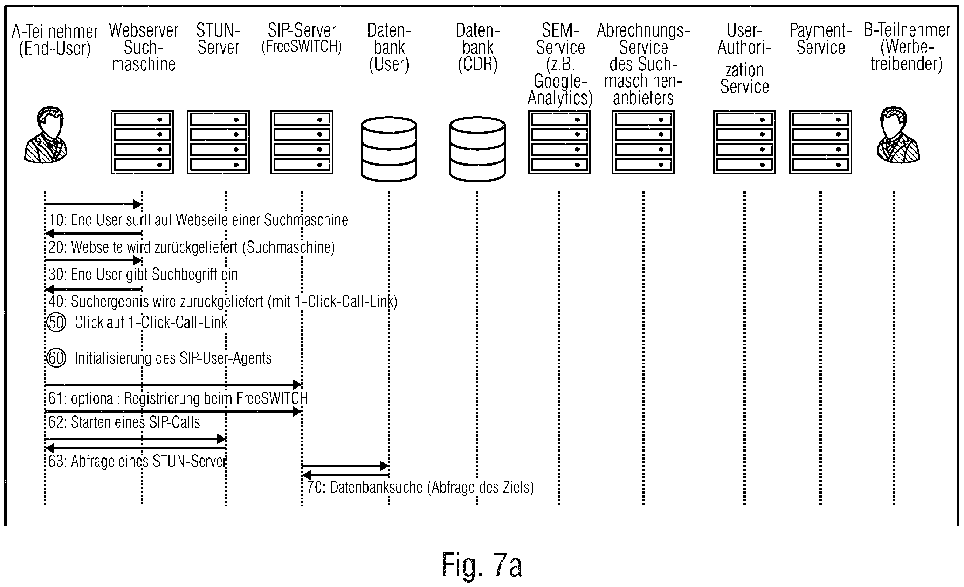

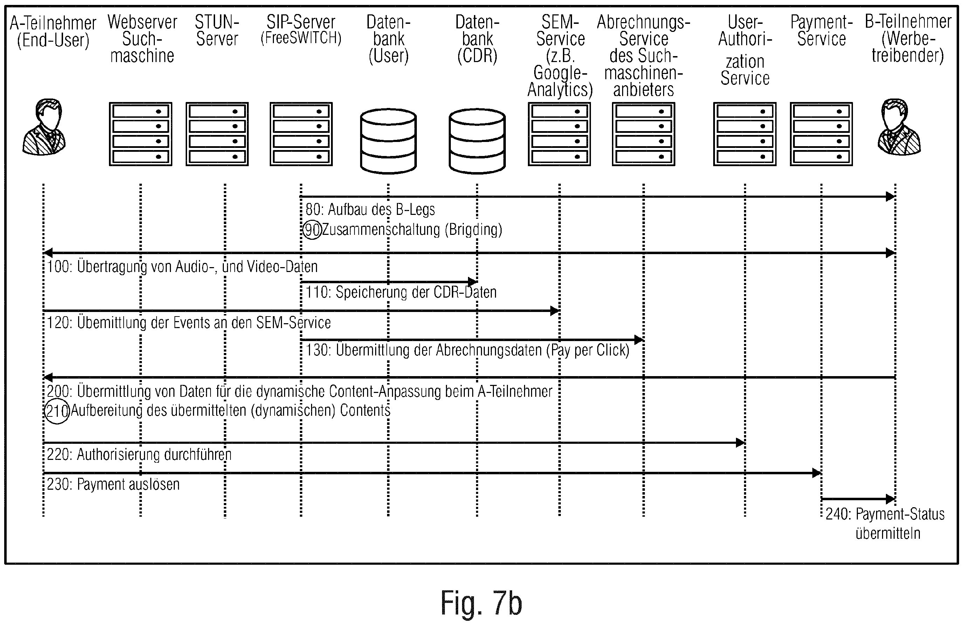

Fig. 7a und Fig. 7b zeigen ein Ablaufdiagramm mit In-Call-Payment (deutsch: Bezahlung während der Verbindung) im Zeitablauf gemäß einer Ausführungsform.

Die vorgestellten Ausführungsformen haben vielfältige Einsatzmöglichkeiten:
Bei der Einblendung von Rufnummern kann der Handeltreibende vom Suchmaschinenbetreiber die Möglichkeit bekommen, einen Link bzw. Button gemäß einer Ausführungsform innerhalb eines ausgewählten Bereichs auf einer Webseite anzuzeigen. Die Kontrolle, wer den 1-Click-Call-Button (Button: deutsch: Knopf) einsetzen kann, kann dabei beim Suchmaschinenbetreiber verbleiben.

Ein Klick auf diesen Button würde im Browser einen Voice-Call bzw. eine Datenverbindung ohne Medienbruch aufbauen und die (telefonische) Kommunikation ermöglichen. Die Ansicht auf das Browser-Fenster bleibt zu 100% bestehen; es findet kein App-Wechsel statt oder dergleichen.

Eine solche Form der Kommunikation ist gelernt und akzeptiert, und der direkte Kontakt zum Kunden ist in der Regel gewünscht.

Gemäß Ausführungsformen werden Daten in Realtime (deutsch: Echtzeit) ausgetauscht. Während des Call-Aufbaus können dem Anbieter bereits Stammdaten übermittelt werden.

In speziellen Ausführungsformen lassen sich diese Daten dann mit einer CRM-Software (Customer Relationship Management; deutsch: Kunden-Beziehungsmanagement) verknüpfen.

Stammdaten werden dem Anbieter automatisch angezeigt. Der Endkunde muss keinerlei Angaben zu seinen Adressdaten etc. machen. Der Anbieter bekommt unmittelbar alle wesentliche Daten auf seinem Bildschirm angezeigt, wie beispielsweise Name und/oder Anschrift und/oder Bestellhistorie etc. Fraud-Prevention (Missbrauchsvermeidung) lässt sich dadurch nennenswert verbessern. Fehlerhafter Versand durch falsches Mitschreiben einer Adresse des Call-Center-Mitarbeiters oder auch durch bewusst falsche Angaben lassen sich vermeiden.

Ferner wird die Verbindungsdauer verkürzt, da Stammdaten bereits vorliegen.

Ferner lässt sich die Benutzerführung durch den Werbetreibenden optimieren, da es nicht zum Medienbruch kommt. Bisherige Datenlücken werden geschlossen und eine vollständige Verbindungsverfolgung wird möglich.

Ausführungsformen ermöglichen die Übertragung von Medien-Dateien (Texte, Bilder, Video) während der Gesprächsverbindung.

In Ausführungsformen kann der Kunde nach Abbruch der Verbindung dem gleichen Call-Center-Mitarbeiter wieder zugeführt werden, beispielsweise wenn es zum Abbruch der Internetverbindung kommt, z.B. indem Verbindungsdaten gespeichert werden,.

Der Ablauf von der Suche nach einem Produkt bis zum Bezahlvorgang wird nicht mehr unterbrochen, da es nicht mehr zu einem Medienbruch kommt eine durchgängige Aufzeichnung (englisch: tracking) des Nutzerverhaltens wird möglich.

Ausführungsformen können mit bestehenden Bezahlsystemen kombiniert werden, wie beispielsweise mit "Android Pay"® bzw. mit der "Android Pay App"®.

Nachfolgend werden bevorzugte Ausführungsformen der Erfindung dargestellt:
Gemäß einer Ausführungsform kann die Sende-Empfangsschnittstelle 312 ausgebildet sein, neben der Verbindungsaufbau-Nachricht und neben den Audiodaten oder Audio- und Videodaten oder Videodaten zusätzlich nutzerspezifische Daten zu der Vermittlungsstelle 330; 440; 530 zu senden, wobei es sich bei den nutzerspezifischen Daten um den Namen oder die E-Mail Adresse des Nutzers der Vorrichtung handelt.

Die Vermittlungsstelle 330; 440; 530 kann dabei ausgebildet sein, die nutzerspezifischen Daten zu der Kommunikationseinheit 350; 450; 550 zu übertragen.

Die Kommunikationseinheit 350; 450; 550 kann ausgebildet sein, die nutzerspezifischen Daten einem Nutzer der Kommunikationseinheit 350; 450; 550 anzuzeigen.

In einer Ausführungsform kann die Sende-Empfangsschnittstelle 312 ausgebildet sein, Daten von einem sozialen Netzwerk über den Nutzer der Vorrichtung abzufragen, und die Daten von dem sozialen Netzwerk über den Nutzer zusätzlich neben der Verbindungsaufbau-Nachricht und neben den Audiodaten oder Audio- und Videodaten oder Videodaten zu der Vermittlungsstelle 330; 440; 530 zu übertragen.

Die Vermittlungsstelle 330; 440; 530 kann dabei ausgebildet sein, die Daten von dem sozialen Netzwerk zu der Kommunikationseinheit 350; 450; 550 zu übertragen.

Die Kommunikationseinheit 350; 450; 550 kann ausgebildet sein, die Daten von dem sozialen Netzwerk einem Nutzer der Kommunikationseinheit 350; 450; 550 anzuzeigen.

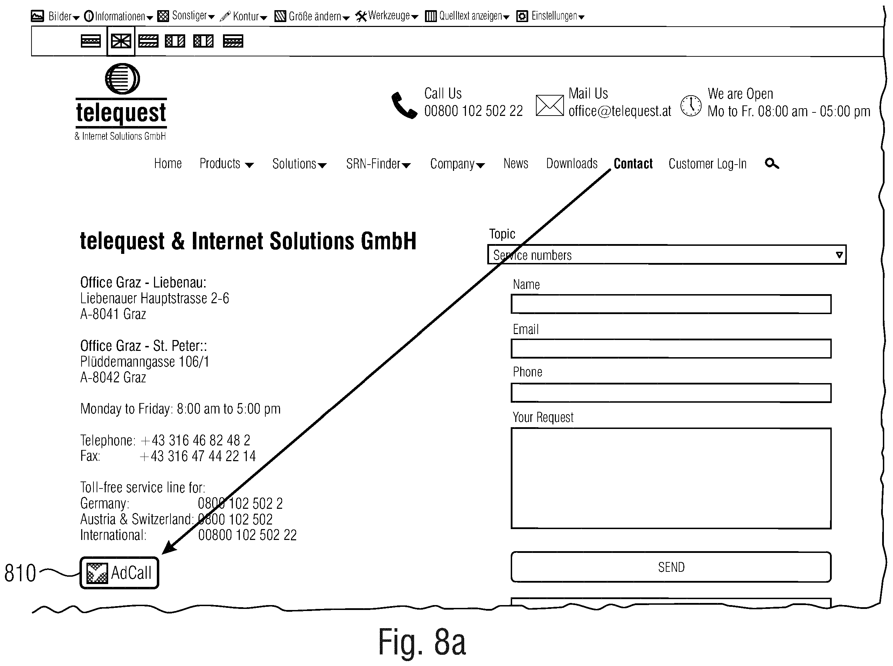

Fig. 8a zeigt eine Webseite, die von einer Vorrichtung 310, 410, 510 zum Abrufen einer Webseite einem Nutzer angezeigt wird. Eine Besonderheit auf dieser Webseite ist der Button 810 mit der Bezeichnung "AdCall".

Im Vorfeld der Darstellung der Webseite der Fig. 8a, beispielsweise mittels des Ausgabemoduls 314 hat die Vorrichtung 310, 410, 510 zunächst den Code der Webseite, z.B. HTML Code oder HTML Code mit JavaScript® von dem Webserver, z.B. Webserver 320 geladen.

Zur Darstellung der Webseite arbeitet ein Modul der Vorrichtung 310, 410, 510, z.B. Prozessormodul 318, den Code der Webseite, beispielsweise nacheinander, Codezeile für Codezeile, ab. Gelangt das Modul der Vorrichtung 310, 410, 510 dann an die Codestelle wo sich in Fig. 8a der Button 810 befindet, findet das Modul der Vorrichtung 310, 410, 510 dann einen Platzhalter-Code vor, beispielsweise JavaScript® Code, der zum Nachladen von weiterem Code von einem Server auffordert. Bevorzugt fordert dieser Platzhalter-Code zum Nachladen von Code von der Vermittlungsstelle 330, 440, 530 auf. Es kommt also bevorzugt zu einem dynamischen Nachladen von Code der Webseite.

Der Code zur Darstellung und/oder für die Funktionsweise des Button 810 wird also von einem anderen Server als dem Webserver 320 geladen, der den sonstigen Code der Webseite bereitstellt.

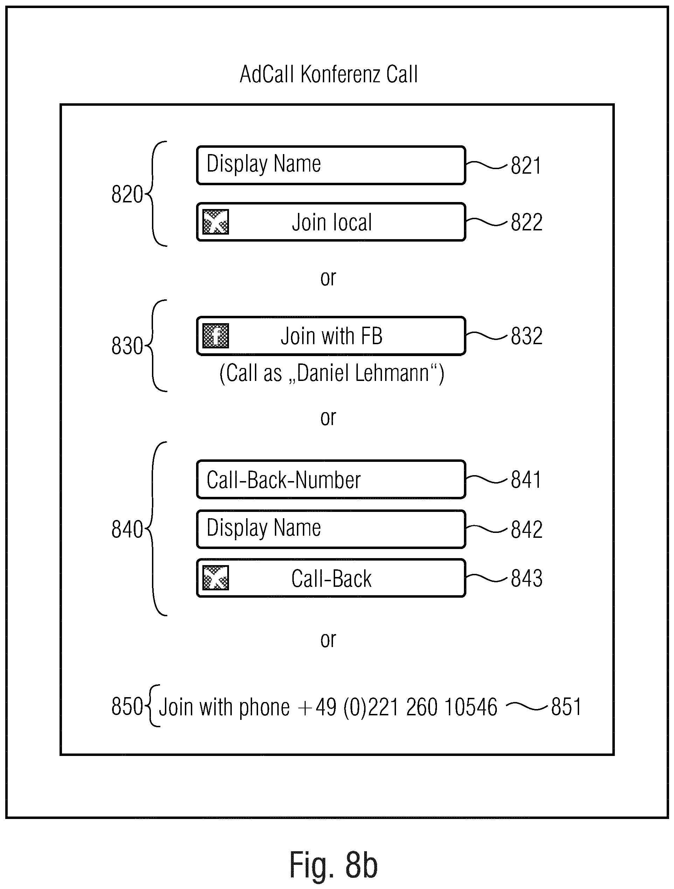

Klickt der Nutzer nun auf den Button 810, so öffnet sich in einer speziellen Ausführungsform ein Pop-Up-Fenster, beispielsweise das in Fig. 8b dargestellte Pop-Up Fenster. Bevorzugt wird der Code zur Darstellung des Pop-Up Fensters der Fig. 8b von der Vermittlungsstelle 330, 440, 530 geladen, d.h. von der Stelle die auch den Code zur Darstellung und/oder für die Funktionsweise des Button 810 bereitstellt. Besonders bevorzugt wird dieser Code , z.B. HTML Code bereits geladen, wenn der Code zur Darstellung und/oder für die Funktionsweise des Button 810 von der Vermittlungsstelle 330, 440, 530 geladen wird, noch bevor der Nutzer überhaupt auf den Button 810 klickt. Alternativ könnte der Code zur Darstellung des Pop-Up Fensters der Fig. 8b aber auch erst dann geladen werden, wenn der Nutzer tatsächlich auf den Button 810 klickt.

Das Pop-Up Fenster der Fig. 8b zeigt dem Nutzer nun verschiedene Möglichkeiten an, wie er sich mit der Kommunikationseinheit 350, 450, 550 verbinden kann. Eine beispielhafte erste Möglichkeit 820 ist in Fig. 8b als "Join local" (deutsch: lokales Verbinden) bezeichnet. Eine beispielhafte zweite Möglichkeit 830 ist in Fig. 8b als "Join with FB" (deutsch: Verbinden mit FB) bezeichnet. Eine beispielhafte dritte Möglichkeit 840 ist in Fig. 8b als "Call-Back" (deutsch: Rückruf) bezeichnet. Und eine beispielhafte vierte Möglichkeit 850 ist in Fig. 8b als "Join with phone" (deutsch: Verbinden mit Telefon) bezeichnet.

Ausführungsformen der Erfindung stellen auch jeweils nur eine dieser vier Verbindungsmöglichkeiten 820, 830, 840, 850 bereit, z.B. nur die Verbindungsmöglichkeit 820 "Join local", oder nur die Verbindungsmöglichkeit 830 "Join with FB", oder nur die Verbindungsmöglichkeit 840 "Call-Back", oder nur die Verbindungsmöglichkeit 850 "Join with Phone".

Andere Ausführungsformen stellen beliebige mögliche Kombinationen von zwei oder drei dieser Verbindungsmöglichkeiten 820, 830, 840, 850 bereit.

In einer speziellen Ausführungsform wählt die Vermittlungsstelle 330 aus einer möglichen Gruppe von Verbindungsoptionen 820, 830, 840, 950 nur diejenigen Verbindungsoptionen aus, die auch Tatsächlich von der Vorrichtung 310, 410, 510 unterstützt werden.

In Ausführungsformen kann dynamisch auf die Möglichkeiten des Endgerätes reagiert werden, wobei nur die Verbindungsoptionen eingeblendet werden, die mit dem Endgerät wahrgenommen werden können. Dies geschieht z.B. über
a) eine Geräteerkennung bzw. -identifikation und
b) über das Gestalten des Popups entsprechend der möglichen Fähigkeiten des Endgeräts.

Zum Beispiel kann bei manchen Geräten die Option JoinLocal oder FB-Call aufgrund mangelnder Fähigkeiten der Geräte ausgeblendet sein.

Angestrebt wird ein Verbindungsaufbau einer Kommunikationsverbindung zwischen der Vorrichtung 310, 410, 510 und der Kommunikationseinheit 350, 450, 550.

In einer bevorzugten Ausführungsform werden die Audiodaten und/oder Videodaten nicht direkt zwischen der Vorrichtung 310, 410, 510 und der Kommunikationseinheit 350, 450, 550 übertragen, sondern die Audiodaten und/oder Videodaten werden über die Vermittlungsstelle 330, 440, 530 jeweils zum anderen Kommunikationspartner weitergeleitet. Beispielsweise könnte die Vermittlungsstelle so statistische Daten über die Kommunikationsverbindung erheben, z.B. die Zeitdauer der Kommunikationsverbindung und/oder z.B. das Datenvolumen, das für die Kommunikationsverbindung für die übertragenen Audio- und/oder Videodaten erforderlich war.

In bevorzugten Ausführungsformen stellt die Vermittlungsstelle 330, 440, 530 der Kommunikationseinheit 350, 450, 550 Informationen über Vorrichtung 310, 410, 510 bzw. über den Nutzer der Vorrichtung 310, 410, 510 bereit. So werden bei der Vorrichtung mittels des von der Vermittlungsstelle 330, 440, 530, geladenen Codes, z.B. mittels JavaScript® Code, Informationen über die Vorrichtung 310, 410, 510 gesammelt, die dann (beispielsweise wenn der Nutzer auf die Schaltfläche 822 klickt, oder auf die Schaltfläche 832 klickt, oder auf die Schaltfläche 843 klickt, oder auf den Link 851 klickt) an die Vermittlungsstelle 330, 440, 530 übertragen werden. Die gesammelten Daten könne ganz oder teilweise auch schon vorher an die Vermittlungsstelle 330, 440, 530 übertragen werden. Die Vermittlungsstelle 330, 440, 530 leitet dann die gesammelten Daten vollständig oder teilweise an die Kommunikationseinheit 350, 450, 550, die dann bei der Kommunikationseinheit 350, 450, 550, bei der es sich z.B. um ein Call-Center handeln kann, dem Nutzer der Kommunikationseinheit 350, 450, 550, z.B. einem Call-Center Mitarbeiter, angezeigt werden. Statt eines Call-Center Mitarbeiters kann es sich auch um einen anderen Nutzer der Kommunikationseinheit handeln, also beispielsweise ein beliebiger Gesprächspartner.

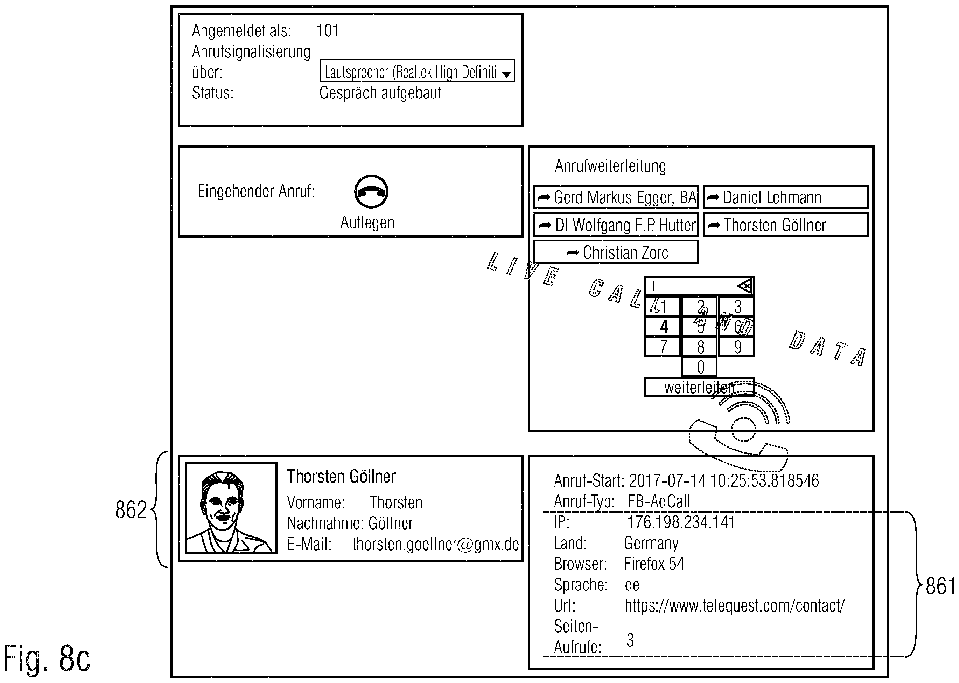

Fig. 8c zeigt eine Webseite, die einem Nutzer der Kommunikationseinheit 350, 450, 550, z.B. einem Call-Center Mitarbeiter, angezeigt werden. Auf der in der Fig. 8c gezeigten Webseite sind die Daten sichtbar, die über die Vorrichtung 310, 410, 510 bzw. über den Nutzer der Vorrichtung 310, 410, 510 über die Vermittlungsstelle 310, 410, 510 übertragen wurden. Diese Daten werden beispielsweise im Bereich 861 der bei der Kommunikationseinheit 350, 450, 550 angezeigten Webseite dargestellt.

Beispielsweise kann es sich bei den Daten, die die Vorrichtung 310, 410, 510 betreffen, und die von der Vorrichtung zunächst an die Vermittlungsstelle 330, 440, 530 und von dort weiter an die Kommunikationseinheit 350, 450, 550 übertragen werden, um die IP Adresse der Vorrichtung 310, 410, 510 handeln (in Fig. 8c: "176.198.234.141"), um das Land, in dem sich die Vorrichtung befindet (in Fig. 8c: Deutschland "Germany"), ferner, um den Browser, der die Webseite der Fig. 8a bei der Vorrichtung 310, 410, 510 anzeigt (in Fig. 8c: "Firefox 54"), ferner um die bei der Vorrichtung 310, 410, 510 genutzte Sprache, des Weiteren um die Web-Adresse der bei der Vorrichtung 310, 410, 510 gerade angezeigten Webseite und um die bisherigen Seitenaufrufe der Vorrichtung 310, 410, 510 z.B. vom Webserver 320.

Es kann sich bei den Daten, die übertragen werden, um Informationen über ein Werbemedium handeln, auf das der Nutzer zuvor geklickt hatte. So erfährt der B-Teilnehmer (der Nutzer der Kommunikationseinheit 350, 450, 550) sofort, von welchem Werbemedium kommend der A-Teilnehmer (der Nutzer der Vorrichtung 310, 410, 510) eine Kommunikationsverbindung aufgebaut hat.

Zurückkehrend zu Fig. 8b werden die auf der Webseite der Fig. 8c im Bereich 861 angezeigten Daten von der Vorrichtung 310, 410, 510 spätestens übertragen, wenn der Nutzer der Vorrichtung 310, 410, 510 auf eine der Schaltflächen 822, 832, 843 oder auf den Link 851 klickt.

In einer Ausführungsform kann die Kommunikationsverbindung mittels IP Telefonie realisiert werden.

In einer weiteren Ausführungsform kann die Vorrichtung ausgebildet sein, einem Nutzer 305; 405; 505 eine erste Möglichkeit bereitzustellen, die Kommunikationsverbindung mittels IP Telefonie herzustellen, und eine weitere Möglichkeit bereitzustellen, eine Kommunikation mittels Festnetz- oder Mobiltelefonie zu beginnen.

Bei den Verbindungsmöglichkeiten 820 "Join local" und 830 "Join with FB" wird eine Kommunikationsverbindung mittels IP Telefonie wie oben beschrieben aufgebaut. Die (Audio- und/oder Video-) Datenpakete dieser IP Telefonie Verbindung werden in einer bevorzugten Ausführungsform über die Vermittlungsstelle 330, 440, 530 zwischen Vorrichtung 310, 410, 510 und Kommunikationseinheit 350, 450, 550 weitergeleitet.

Bei der Verbindungsmöglichkeit 840 "Call-Back" bittet der Nutzer der Vorrichtung 310, 410, 510 unter Eingabe seiner Telefonnummer seiner Telefonnummer (Festnetz- oder Mobiltelefonnummer) in das Eingabefeld 841 um einen Rückruf mittels klassischer Festnetztelefonie oder mittels Mobiltelefonie. Dieser Rückrufwunsch wird zusammen mit der ins Eingabefeld 841 eingegebenen Rückrufnummer der Kommunikationseinheit 350, 450, 550 übertragen. Bevorzugt werden diese Daten mit dem Rückrufwunsch und der Rückruftelefonnummer zunächst an die Vermittlungsstelle 330, 440, 530 übertragen, die dann den Rückrufwunsch an die Kommunikationseinheit 350, 450, 550 zusammen mit der Rückruftelefonnummer überträgt. Ein weiteres Eingabefeld 842 kann im Pop-Up Fenster der Fig. 8b vorgesehen sein, in der der Nutzer der Vorrichtung 310, 410, 510 seinen Namen einträgt. Dieser Name kann dann ebenfalls an die Kommunikationseinheit 350, 450, 550 übertragen werden, wiederum bevorzugt, durch Übertragung an die Vermittlungsstelle 330, 440, 530, die dann die Daten mit dem Namen weiter an die Kommunikationseinheit 350, 450, 550 überträgt.

Wie bereits angesprochen, wird mit den Verbindungsmöglichkeiten 820 "Join local" und 830 "Join with FB" eine Kommunikationsverbindung mittels IP Telefonie hergestellt. Bei "Join local" kann wiederum ein Eingabefeld 821 zur Eingabe eines Namens vorgesehen sein, in das der Nutzer der Vorrichtung 310, 410, 510 seinen Namen eingeben kann. Dieser Name wird wiederum bevorzugt an die Vermittlungsstelle 330, 440, 530 übertragen, die den Namen des Nutzers der Vorrichtung 310, 410, 510 dann weiter zur Kommunikationseinheit 350, 450, 550 überträgt.

Die Verbindungsmöglichkeit 830 "Join with FB" stellt insoweit eine Besonderheit dar, als bei Klicken auf den Button 832 von der Vorrichtung 310, 410, 510 Daten, die sich auf den Nutzer der Vorrichtung 310, 410, 510 beziehen, von einem sozialen Netzwerk, beispielsweise mittels einer API abgefragt werden, und die dann ebenfalls an die Vermittlungsstelle 330, 440, 530 übertragen werden. Die Vermittlungsstelle 330, 440, 530 stellt diese Daten von dem sozialen Netzwerk der Kommunikationseinheit 350, 450, 550 bereit, die dann z.B. auf der in Fig. 8c angezeigten Webseite dem Nutzer der Kommunikationseinheit 330, 440, 530, zum Beispiel einem Call-Center Mitarbeiter, angezeigt werden. In der Webseite der Fig. 8c werden diese Daten des sozialen Netzwerks beispielsweise im Bereich 862 angezeigt. Beispielsweise kann es sich bei diesen Daten des sozialen Netzwerks um den Vornamen, den Nachnamen, der E-Mail-Adresse und/oder um ein Foto des Nutzers der Vorrichtung 310, 410, 510 handeln. Bei dem sozialen Netzwerk kann es sich beispielsweise um Facebook® handeln.

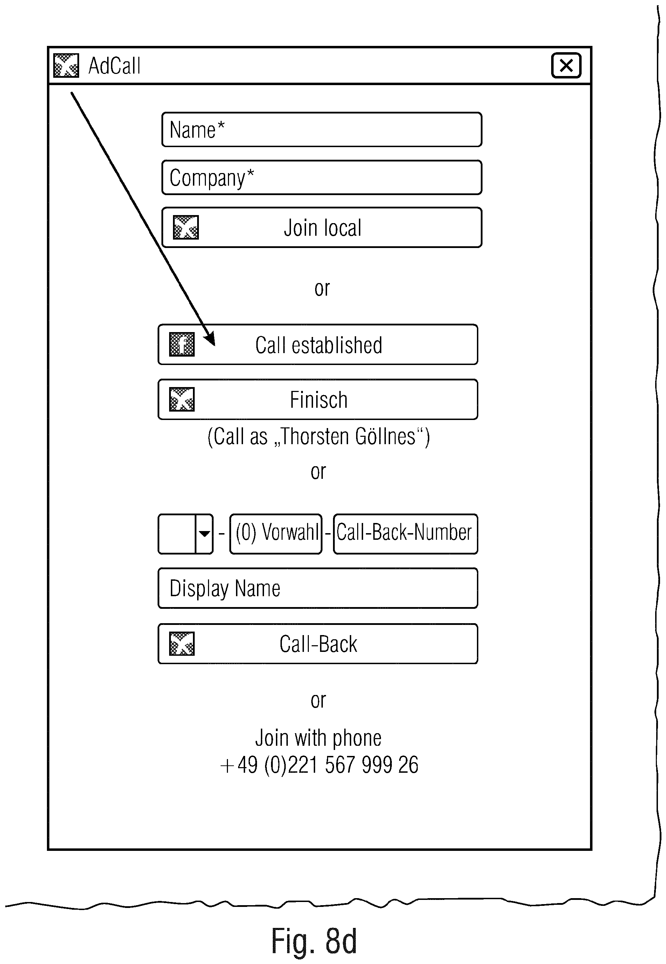

Fig. 8d zeigt das Pop-Up Fenster beim Nutzer der Vorrichtung 310, 410, 510, nachdem eine IP Telefonie Verbindung zur Kommunikationseinheit 350, 450, 550 (z.B. über die Kommunikationseinheit 330, 440, 530 laufend) mittels der Verbindungsmöglichkeit 830 "Join with FB" hergestellt wurde.

Es wurde bereits beschrieben, dass die Herstellung einer Kommunikationsverbindung zwischen Vorrichtung 310, 410, 510 und Kommunikationseinheit 350, 450, 550 mittels IP Telefonie bevorzugt durch Senden der Datenpakete über die Vermittlungsstelle 330, 440, 530 läuft.

Bei Aufbau der Verbindung durch einen Verbindungswunsch wird der Vermittlungsstelle beispielsweise ein Identifikator übersandt, der den Werbserver 320 oder den Betreiber des Webservers 320 charakterisiert, der die in Fig. 8a angezeigte Webseite betreibt. Beispielsweise kann es sich bei diesem Identifikator um eine Kunden-ID oder Kundennummer des Betreibers des Webservers 320 beim Betreiber der Vermittlungsstelle 330, 440, 530 handeln. Anhand dieser Kundennummer kann die Vermittlungsstelle 330, 440, 530 dann feststellen, mit welcher Kommunikationseinheit die Kommunikationsverbindung aufgebaut werden soll.

So kann der Betreiber des Webservers 320 einem Call-Center Mitarbeiter eine Kommunikationseinheit 350 bereitgestellt haben, mit der der Call-Center Mitarbeiter die Verbindungswünsche, die von der Vermittlungsstelle 330, 440, 530 eingehen, bedient. Die Verbindungswünsche werden dann von der Vermittlungsstelle 330, 440, 530 an das eine Kommunikationsgerät 350, 450, 550 weitergeleitet, wobei das Kommunikationsgerät beispielsweise durch eine Datenbankabfrage anhand der Kunden-ID oder Kundennummer identifiziert werden kann.

Alternativ kann der Betreiber des Webservers 320 auch eine Reihe von Kommunikationseinheiten 350, 450, 550 für eine Reihe von, z.B. Call-Center Mitarbeitern bereitgestellt haben. Anhand der Kundennummer des Webserver 320 Betreibers kann die Vermittlungsstelle 330, 440, 530, dann, beispielsweise durch eine Datenbankabfrage anhand der Kunden-ID oder Kundennummer ermitteln, welche Gruppe von Kommunikationseinheiten 350, 450, 550 für Anfragen von diesem Webserver vorgesehen sind. Die Vermittlungsstelle 330, 440, 530 kann dann ein Anruf-Anfrage Signal an alle Kommunikationseinheiten aus dieser Gruppe von Kommunikationseinheiten 350, 450, 550 senden, dass sich bei den Kommunikationseinheiten als akustische und/oder optische Ausgabe bemerkbar macht. Die eigentlichen Audio- und/oder Video-Datenpakete werden dann aber nur an die erste Kommunikationseinheit 350, 450, 550 übersandt, die den Verbindungswunsch annimmt.

Besondere Anforderungen stellt die Verbindungsmöglichkeit 850 "Join with Phone". Hier wird durch Klicken auf den Link 851 ein von der Vorrichtung 310, 410, 510 ausgehend, ein klassischer Telefonanruf getätigt, beispielsweise mittels Mobiltelefonie. Auch bei dieser Variante sollen Daten, die für die Vorrichtung 310, 410, 510 spezifisch sind (beispielsweise die in Fig. 8c im Bereich 861 angezeigten Daten) an die Vermittlungsstelle 330, 440, 530 und von dieser weiter an die Kommunikationseinheit übertragen werden. Hierzu wird, wie bei den anderen Varianten auch der Vorrichtung 310, 410, 510 ein global eindeutiger Identifikator durch die Vermittlungsstelle 330, 440, 530 zugewiesen und mitgeteilt. Dies geschieht beispielsweise, wenn der Code für das Pop-Up Fenster der Fig. 8b von der Vermittlungsstelle 330, 440, 530 an die Vorrichtung 310, 410, 510 übertragen wird. Zusätzlich überträgt die Vermittlungsstelle 330, 440, 530 aber noch eine Telefonnummer für die klassische Telefonie zur Vorrichtung 310, 410, 510 (angezeigt im Link 851), der eine Zuordnung der Daten, die von der Vorrichtung 310, 410, 510 übertragen werden, zum klassischen Telefonanruf ermöglicht.

So kann die Vermittlungsstelle 330, 440, 530 beispielsweise eine Vielzahl verschiedener Telefonnummern vorhalten, aus denen für einen Verbindungswunsch eine der Telefonnummern ausgewählt wird. Beispielsweise werden in Ausführungsformen 100 Nebenstellentelefonnummern vorgehalten werden, indem die Nebenstellennummern in der letzten beiden Endziffern variieren. In einer anderen Ausführungsform werden beispielsweise 1000 Nebenstellennummern vorgehalten, die in den letzten drei Endziffern der Telefonnummer variieren. Die Vermittlungsstelle 330, 440, 530 wählt dann für unterschiedliche Vorrichtungen, die zeitlich nahe beieinander den Code für das Pop-Up Fenster der Fig. 8b aufrufen jeweils eine unterschiedliche Telefonnummer für den klassischen Telefonanruf aus, und speichert bei sich, welche ausgewählte Telefonnummer, welchem global eindeutigen Identifikator zugeordnet ist. So ist eine Zuordnung der durch den global eindeutigen Identifikator gekennzeichneten Daten (z.B. die die im Bereich 861 dargestellt sind) und einem eingehenden klassischen Telefonanruf möglich.

Beispielsweise kann die Telefonnummer für die klassische Telefonie eine Telefonnummer bei der Vermittlungsstelle 330, 440, 530 bezeichnen, wobei der Anruf zusammen mit den Daten des Bereichs 861 von der Vermittlungsstelle 330, 440, 530 an die Kommunikationseinheit 350, 450, 550 weitergeleitet wird.

In einer anderen Ausführungsform sind die Telefonnummern für die klassische Telefonie eine Vielzahl von Telefonnummern bei dem Betreiber der Kommunikationseinheit 350, 450, 550, und die Vermittlungsstelle 330, 440, 530 übermittelt der Kommunikationseinheit 350, 450, 550, welcher Telefonnummer die Daten von der Vorrichtung 310, 410, 510 zugeordnet sind.

Es ist also in einer Ausführungsform die Vermittlungsstelle 330; 440; 530 ausgebildet, der Vorrichtung 310; 410; 510 eine ausgewählte Telefonnummer für Festnetz- oder Mobiltelefonie aus einer Gruppe von Telefonnummern zuzuweisen. Dabei kann die Vermittlungsstelle 330; 440; 530 ausgebildet sein, festzustellen, ob übertragene Daten von der Vorrichtung 310; 410; 510 einer Kommunikationsverbindung zugeordnet ist, die mittels Festnetz- oder Mobiltelefonie unter Verwendung der ausgewählten Telefonnummer zwischen der Vorrichtung 310; 410; 510 und der Kommunikationseinheit 350; 450; 550 erfolgt. Dabei kann die Vermittlungsstelle 330; 440; 530 ausgebildet sein, die übertragene Daten der Kommunikationseinheit 350; 450; 550 zu übermitteln, falls sie festgestellt hat, dass die übertragenen Daten, der Kommunikationsverbindung zugeordnet ist, die mittels der Festnetz- oder Mobiltelefonie unter Verwendung der ausgewählten Telefonnummer zwischen der Vorrichtung 310; 410; 510 und der Kommunikationseinheit 350; 450; 550 erfolgt.

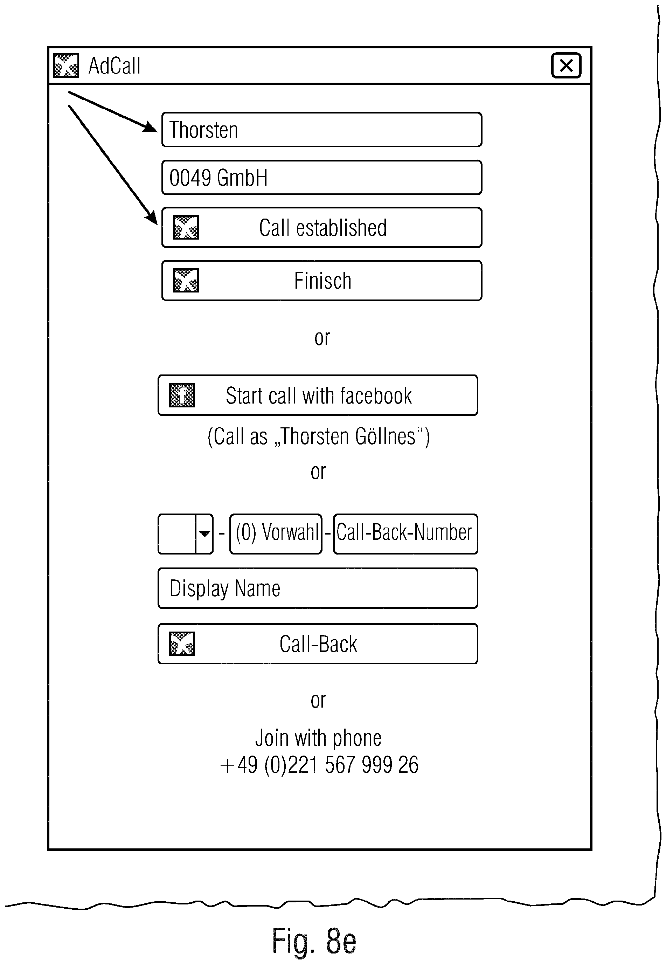

Fig. 8e zeigt das Pop-Up Fenster der Fig. 8b, nachdem die Kommunikationsverbindung mittels der Verbindungsoption 820 "Join local" hergestellt wurde.

Neben den im Bereich 861 der Fig. 8c gezeigten Daten kann die Vorrichtung aber noch weitere Daten von sich übertragen, die der Kommunikationseinheit 350, 450, 550 übermittelt werden.

In einer Ausführungsform ist die Sende-Empfangsschnittstelle 312 der Vorrichtung 310, 410, 510 ausgebildet, neben der Verbindungsaufbau-Nachricht und neben den Audiodaten oder Audio- und Videodaten oder Videodaten zusätzlich Code einer Webseite zu der Vermittlungsstelle 330; 440; 530 zu übertragen, die von der Vorrichtung einem Nutzer der Vorrichtung angezeigt wird.

Die Vermittlungsstelle 330; 440; 530 kann dann ausgebildet sein, den Code der Webseite zu der Kommunikationseinheit 350; 450; 550 zu übertragen.

Ferner kann die Kommunikationseinheit 350; 450; 550 ausgebildet sein, die Webseite basierend auf dem Code der Webseite einem Nutzer der Kommunikationseinheit 350; 450; 550 anzuzeigen.

In einer speziellen Ausführungsform umfasst der Code der Webseite, der einem Nutzer der Vorrichtung angezeigt wird, HTML Code. Des Weiteren kann der Code der Webseite, der einem Nutzer der Vorrichtung angezeigt wird, JavaScript® Code umfassen.

In einer Ausführungsform überträgt die Vorrichtung 310, 410, 510 den Code einer Webseite, beispielsweise den HTML-Code der Webseite, die von der Vorrichtung 310, 410, 510 dem Nutzer der Vorrichtung gerade angezeigt wird. (Der HTML-Code der Webseite kann auch als DOM bezeichnet werden: DOM = Document Object Model; deutsch: Dokumentenobjektmodell).

In manchen Ausführungsformen wird das DOM mit Klick auf den AdCall-Button 810 in Fig. 8a beispielsweise zunächst nur lokal innerhalb der Webbrowser gespeichert und erst mit Start des eigentlichen Calls (mit dem eigentlichen Verbindungsaufbau) beispielsweise durch Klick auf den JoinLocal Button 822 in Fig. 8b übertragen. Hierdurch behält der A-Teilnehmer die Kontrolle (Datenschutz) und kann selbst initiieren, ob seine Daten übertragen werden, indem die Datenübertragung erst bei Verbindungsaufbau erfolgt. Gleichzeitig erleichtert ein solches Vorgehen die Bedienung, indem ein Klick auf den JoinLocal Button 822 sowohl den Verbindungsaufbau startet, als auch die Datenübertragung in Gang setzt.

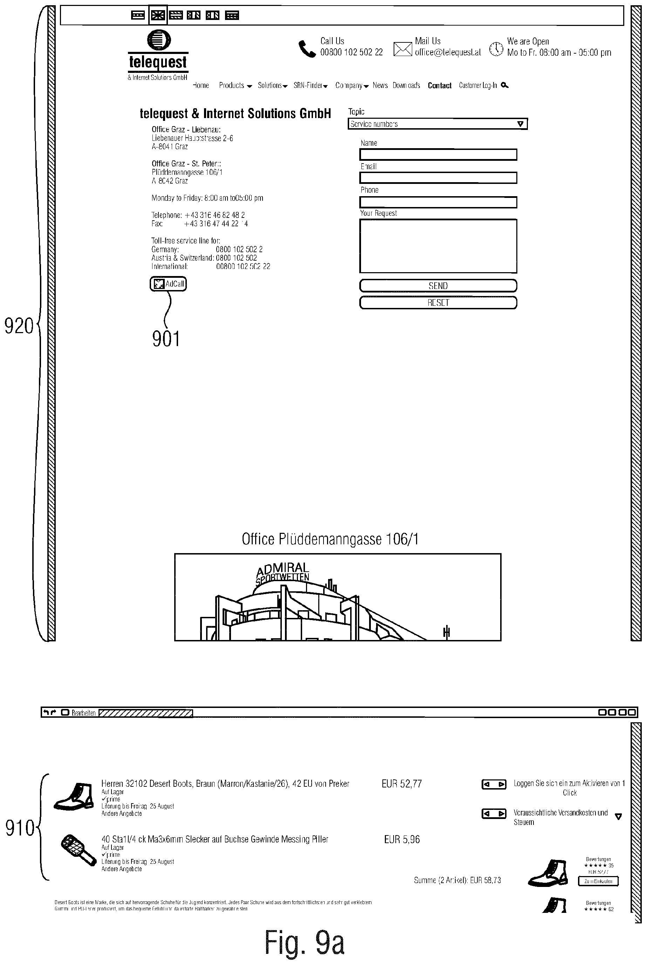

Fig. 9a zeigt hier eine erste Webseite 910, die bei der Vorrichtung 310, 410, 510 angezeigt wird und eine zweite Webseite 920, die bei der Vorrichtung angezeigt wird. Hier handelt es sich bei der ersten Webseite 910 um einen Warenkorb, zu dem der Nutzer Hilfe benötigt. Die zweite Webseite stellt die Kontaktseite des Webservers dar., auf der sich ein Button 901 befindet, der mit entsprechender Funktionalität wie der Button 810 der Fig. 8a ausgestattet ist. Der Klick auf den Button 901 öffnet wiederum ein Pop-Up Fenster entsprechend dem Pop-Up Fenster der Fig. 8b. Spätestens mit Klick auf eine der Verbindungsmöglichkeiten wird der HTML Code der ersten Webseite 910 zur Vermittlungsstelle 330, 440, 530 übertragen, die den HTML Code der ersten Webseite 910 dann zur Kommunikationseinheit weiter überträgt.

Bei der Kommunikationseinheit wird die erste Webseite 910 basierend auf dem erhaltenen HTML Code dann mittels einer geeigneten als Webseite aufgebaut und angezeigt.

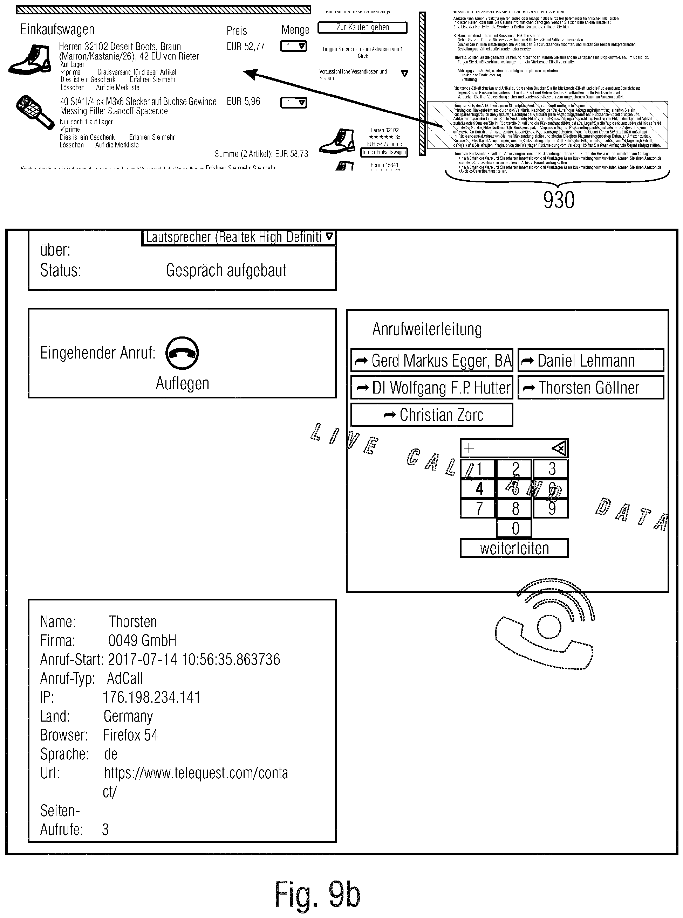

Die Bildschirmausgabe am Endgerät ist exemplarisch in Fig. 9b angezeigt, wobei im Bereich 930 der Webseiten Code eines Teilbereichs der ersten Webseite beispielhaft gezeigt ist.

Vom Datenvolumen her ist es effizienter, statt eines Screenshots mit einzelnen Pixeln den Code der Webseite zu übertragen, wobei der Code der Webseite beispielsweise HTML Code umfasst. Beispielsweise umfasst der Code der Webseite auch JavaScript®.

Allein die Übertragung des Hyperlinks reicht in der Regel nicht zur korrekten Darstellung der Webseite bei der Kommunikationseinheit 350, 450, 550, da beispielsweise der Inhalt eines Warenkorbs nicht in den Hyperlink einkodiert ist. Speziell Warenkorb-Daten sind an die jeweilige Session eines User gebunden und damit nicht durch Weitergabe der URL an Dritte übertragbar.

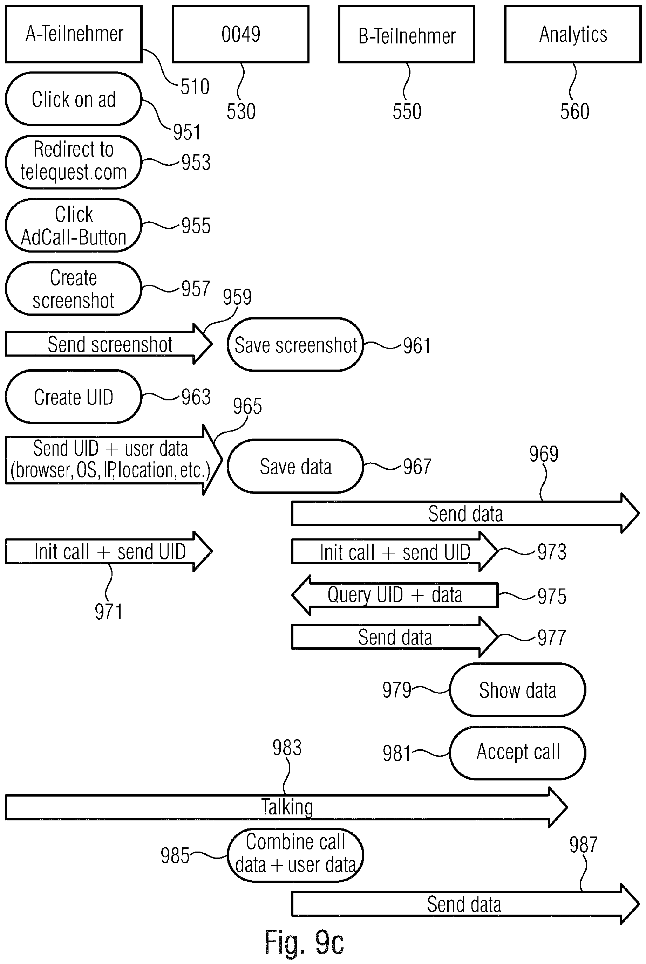

Fig. 9c zeigt ein mögliches Ablaufdiagram, einer Ausführungsform. Dabei ein A-Teilnehmer 510 dargestellt, der ein spezielles Beispiel einer Vorrichtung 510 zum Laden einer Webseite ist. Der 0049 Server 530 ist ein spezielles Beispiel für eine Vermittlungsstelle 530; der B-Teilnehmer 550 ist ein spezielles Beispiel einer Kommunikationseinheit 550 und der Analytics Server ist ein spezielles Beispiel für einen solchen Server.

In Schritt 951 "Click on ad" (deutsch: "Klick auf ad") wird auf einen Button, wie z.B. Buton 810 geklickt.

In Schritt 953 "Redirect to telequest.com" (deutsch: "Weiterleitung auf telequest.com") erfolgt eine Weiterleitung auf die entsprechende Webseite.

In Schritt 955 "Click adCall-Button" (deutsch: "Klick adCall-Knopf") wird auf einen Button vergleichbar mit Button 822 aus Fig. 8b geklickt.

In Schritt 957 "Create screenshot" (deutsch: "Bildschirmfoto erstellen") wird symbolisch ein Screenshot erstellt. Was jedoch tatsächlich passiert, ist, dass der Code der entsprechenden Webseite, der beispielsweise HTML Code umfasst, serialisiert, also beispielsweise als String (z.B. in einer Variable oder einem Attribut vom Typ String), lokal gespeichert wird.

In Schritt 959 "Send screenshot" (deutsch: "Bildschirmfoto senden") wird der HTML Code der Webseite übertragen.

Im Schritt 961 "Save screenshot" (deutsch: "Bildschirmfoto speichern") wird der vom Server 530 empfangene HTML Code gespeichert. Nach dem Speichern des DOM wird daraus mittels einer Browser-Engine auf dem Server ein Bild gerendert (so wie es auch ein Browser macht, den wir täglich vor uns haben). Dieses Bild wird dann abgespeichert und steht für die weitere Verarbeitung (z. B. Anzeige bei einem anderen Kommunikationsteilnehmer) zur Verfügung. Der B-Teilnehmer kann sich somit wesentlich schneller in die Situation des A-Teilnehmers versetzen und Hilfe leisten bzw. Fragen beantworten.

Die nachfolgenden Schritte sind:
963: "Create UID": UID erstellen
965: "Send UID + user data (browser, OS, IP, location, etc)": Sende UID und Nutzerdaten (Browser, Betriebssystem, IP-Adresse, Standort, etc.)
967: "Save data": Speichere Daten
969: "Send data": Sende Daten
971: "Init call + send UID": Initialisiere die Verbindung und sende UID
973: "Init call + send UID": Initialisiere die Verbindung und sende UID
975: "Query UID": Frage UID und Daten ab
977: "Send data": Sende Daten
979: "Show data": Zeige Daten an
981: "Accept call": Nehme die Verbindung an
983: "Talking": Sprechen
985: "Combine call data + user data": Kombiniere Verbindungsdaten und Nutzerdaten
987: "Send data": Sende Daten

Was den Analytics Server 560 betrifft kann so ein Nutzer z.B. einer Marketingabteilung die Daten aggregieren und einsehen. Der Analytics Server 560 kann dann Fragen kann dann Fragen beantworten, wie z.B. "Wie viele Nutzer haben aufgrund meiner Werbung angerufen, die ich in einem sozialen Netzwerk geschaltet habe?". Hieraus lassen sich Rückschlüsse auf spezielle Werbeschaltungen vornehmen. Zusätzlich können weitere Daten, wie Ursprungsland, Stadt, benutzter Browser, etc. in die Analyse mit einbezogen werden.

In einer weiteren Ausführungsform hat eine erste Kommunikationseinheit 350, 450, 550 die Möglichkeit, eine bestehende Kommunikationsverbindung an eine andere zweite Kommunikationseinheit weiterzuleiten. Hierzu sendet die erste Kommunikationseinheit eine entsprechende Mitteilung an die Vermittlungsstelle 330, 440, 530. Die Vermittlungsstelle baut dann eine zwei Kommunikationsverbindung zwischen der Vorrichtung 310, 410, 510 und der anderen, zweiten Kommunikationseinheit auf. Wenn diese zweite Kommunikationsverbindung eingerichtet ist, beendet die Vermittlungsstelle 330, 440, 530 die erste Kommunikationsverbindung zwischen der Vorrichtung 310, 410, 510 und der ersten Kommunikationseinheit 350, 450, 550.

In einer Ausführungsform werden die in Fig. 8c im Bereich 861 gezeigten Daten auf der Kommunikationseinheit 350 in einer App angezeigt.

In einer weiteren Ausführungsform werden die in Fig. 8c im Bereich 861 gezeigten Daten mittels einer Webseite auszugeben.

In einer anderen Ausführungsform werden die in Fig. 8c im Bereich 861 gezeigten Daten mittels automatisch generierten E-Mail übertragen.

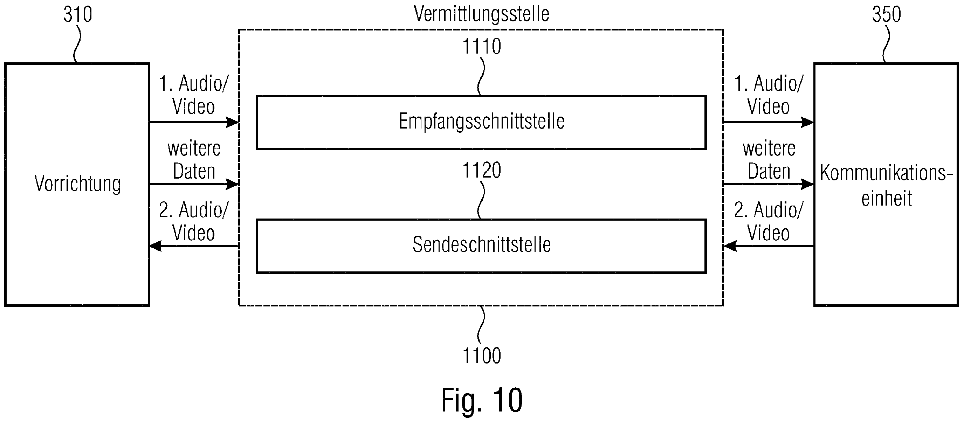

Fig. 10 zeigt eine Vermittlungsstelle 1100 gemäß einer Ausführungsform.

Die Vermittlungsstelle 1100 umfasst eine Empfangsschnittstelle 1110, und eine Sendeschnittstelle 1120.

Die Empfangsschnittstelle 1110 ist ausgebildet, eine Verbindungsaufbau-Nachricht von einer Vorrichtung 310 zu empfangen, wobei die Empfangsschnittstelle 1110 ausgebildet ist, nach Empfang der Verbindungsaufbau-Nachricht der Vorrichtung 310, von der Vorrichtung 310, erste Audiodaten oder erste Audio- und Videodaten oder erste Videodaten zu empfangen.

Die Sendeschnittstelle 1120 ist ausgebildet, die von der Vorrichtung 310 empfangenen ersten Audiodaten oder ersten Audio- und Videodaten oder ersten Videodaten zu einer Kommunikationseinheit 350 zu senden.

Ferner ist die Empfangsschnittstelle 1110 ausgebildet, nach Empfang der Verbindungsaufbau-Nachricht der Vorrichtung 310, von der Vorrichtung 310 weitere Daten zu erhalten, die von den Audiodaten oder den Audio- und Videodaten oder den Videodaten verschieden sind, wobei die Sendeschnittstelle 1120 ausgebildet ist, die weiteren Daten zu der Kommunikationseinheit 350 zu senden.

Des Weiteren ist die Empfangsschnittstelle 1110 ausgebildet, von der Kommunikationseinheit 350 zweite Audiodaten oder zweite Audio- und Videodaten oder zweite Videodaten zu empfangen, wobei die Sendeschnittstelle 1120 ausgebildet ist, die von der Kommunikationseinheit 350 empfangenen zweiten Audiodaten oder zweiten Audio- und Videodaten oder zweiten Videodaten zu der Vorrichtung 310 zu senden.

Bei der in Fig. 10 gezeigten Vermittlungsstelle 1100 kann es sich um eine der oben beschriebenen Vermittlungsstellen 350, 450, 550 handeln.

In einer Ausführungsform kann die Empfangsschnittstelle 1110 ausgebildet sein, als die weiteren Daten Code einer Webseite von der Vorrichtung 310 zu erhalten. Die Sendeschnittstelle 1120 kann dabei ausgebildet sein, den Code der Webseite zu der Kommunikationseinheit 350 zu übertragen.

Gemäß einer Ausführungsform kann der Code der Webseite, HTML Code oder JavaScript® Code umfassen.

In einer Ausführungsform kann die Empfangsschnittstelle 1110 ausgebildet sein, als die weiteren Daten nutzerspezifische Daten zu erhalten, wobei es sich bei den nutzerspezifischen Daten um den Namen oder die E-Mail Adresse des Nutzers der Vorrichtung 310 handelt. Die Sendeschnittstelle 1120 kann dabei ausgebildet sein, die nutzerspezifischen Daten zu der Kommunikationseinheit 350 zu übertragen.

Gemäß einer Ausführungsform kann die Empfangsschnittstelle 1110 ausgebildet sein, die ersten Audiodaten oder die ersten Audio- und Videodaten oder die ersten Videodaten mittels IP Telefonie von der Vorrichtung 310 zu empfangen. Die Sendeschnittstelle 1120 kann dabei ausgebildet sein, die ersten Audiodaten oder die ersten Audio- und Videodaten oder die ersten Videodaten mittels IP Telefonie zu der Kommunikationseinheit 350; 450; 550 zu übertragen. Die Empfangsschnittstelle 1110 kann ausgebildet sein, die zweiten Audiodaten oder die zweiten Audio- und Videodaten oder die zweiten Videodaten mittels der IP Telefonie von der Kommunikationseinheit 350 zu empfangen. Ferner kann die Sendeschnittstelle 1120 ausgebildet ist, die zweiten Audiodaten oder die zweiten Audio- und Videodaten oder die zweiten Videodaten mittels IP Telefonie zu der Vorrichtung 310 zu übertragen.

In einer Ausführungsform kann die Vermittlungsstelle 330 ausgebildet sein, der Vorrichtung 310 eine ausgewählte Telefonnummer für Festnetz- oder Mobiltelefonie aus einer Gruppe von Telefonnummern zuzuweisen. Dabei kann die Vermittlungsstelle 330; ausgebildet sein, festzustellen, ob die von der Vorrichtung 310 empfangenen weiteren Daten einer Kommunikationsverbindung zugeordnet ist, die mittels Festnetz- oder Mobiltelefonie unter Verwendung der ausgewählten Telefonnummer zwischen der Vorrichtung 310 und der Kommunikationseinheit 350 erfolgt, indem ein in den übertragenen Daten enthaltener, (beispielsweise von der Vermittlungsstelle 330 eingefügter,) global eindeutiger Identifikator ausgewertet wird. Dabei kann die Vermittlungsstelle 330 ausgebildet sein, die von der Vorrichtung 310 empfangenen weiteren Daten der Kommunikationseinheit 350 zu übermitteln, falls sie festgestellt hat, dass die übertragenen Daten, der Kommunikationsverbindung zugeordnet ist, die mittels der Festnetz- oder Mobiltelefonie unter Verwendung der ausgewählten Telefonnummer zwischen der Vorrichtung 310 und der Kommunikationseinheit 350 erfolgt.

In einer Ausführungsform ist es auch möglich, eine Kommunikationsverbindung von einer Kommunikationseinheit 350 zu einer weiteren Kommunikationseinheit weiterzuleiten.

Dabei werden beispielsweise die Daten von der Vorrichtung 310, wie zum Beispiel die Daten, die in Fig. 8c im Bereich 861 gezeigt sind, von der Vermittlungsstelle 330 zu dieser weiteren Kommunikationseinheit übermittelt.

So kann in einer speziellen Ausführungsform die Vermittlungsstelle 1100 ausgebildet sein, von der Kommunikationseinheit 350 ein Signal zu erhalten, dass eine erste Kommunikationsverbindung zwischen der Kommunikationseinheit 350 und der Vorrichtung 310 zu einer weiteren Kommunikationseinheit weitergeleitet werden soll.

Dabei kann die die Vermittlungsstelle 1100 ausgebildet sein, der weiteren Kommunikationseinheit anzuzeigen, dass die erste Kommunikationsverbindung zwischen der Kommunikationseinheit 350 und der Vorrichtung 310 zu der weiteren Kommunikationseinheit weitergeleitet werden soll.

Die Vermittlungsstelle 1100 kann dabei ausgebildet sein, die weiteren Daten, die die Vermittlungsstelle 1100 von der Vorrichtung 310 erhalten hat, die von den Audiodaten oder den Audio- und Videodaten oder den Videodaten verschieden sind, zu der weiteren Kommunikationseinheit zu übertragen.

Beispielsweise kann es sich bei diesen weiteren Daten um den Code der Webseite handeln, die von der Vorrichtung 310 angezeigt wird.

In einem Ausführungsbeispiel kann ein System, dass die Vorrichtung 310, den Webserver 320, die Vermittlungsstelle 330 und die Kommunikationseinheit 350 umfasst, auch die weitere Kommunikationseinheit umfassen. In einem anderen Ausführungsbeispiel umfasst ein System, dass die Vorrichtung 310, den Webserver 320, die Vermittlungsstelle 330 und die Kommunikationseinheit 350 umfasst, nicht die weitere Kommunikationseinheit.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einem USB-Speicherstick bzw. einem USB-Speichermedium, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Codebeispiel:

Das folgende Code-Beispiel gemäß Ausführungsformen ist eine spezielle Realisierungsvariante zu den erfindungsgemäßen Ablaufdiagrammen in den Fig. 5, Fig. 6 und Fig. 7a und 7b. Insbesondere stellt das Codebeispiel eine spezielle Realisierung der Schritte 40 ff. in den Fig. 5, Fig 6 und Fig. 7a und 7b dar.

### HTML-Code :

```
 <!DOCTYPE html>
 <html lang="en">
  <head>
    <meta charset="utf-8">
    <meta http-equiv="X-UA-Compatible" content="IE=edge">
    <meta name="viewport" content="width=device-width, initial-scale=1">
    <meta name="description" content="">
    <link rel="icon" href="favicon.ico">
    <title>1-Click-Call-Demo</title>
    <script src="https://ajax.googleapis.com/ajax/libs/jquery/1.12.0/jquery.min.js"></script>
    <script src="/js/sip-0.7.3.min.js"></script>
  </head>
  <body>
    <p>Durch Klick auf den folgenden Button wird ein 1-Click-Call (Voice) zu eine zuvor
     konfigurierten SIP-Endpoint aufgebaut.</p>
    <p><a id="call_tg_handy_audio_only" href="#">1-Click-Call</a>
     <div id="call_tg_handy_audio_only_status">...</div>
     <script type="text/javascript" src="/js/1clickcall.js"></script></p>
  </body>
  </html>
```

Betreffend SIP.js , siehe [11]: http://sipjs.com/.

```
 1clickcall.js:
  
 var session, userAgent;
 var config = {
 register: false,
 uri: 'sip:9999@call.0049.org',
 wsServers: 'wss://call.0049.org:7443',
 authorizationUser: '9999',
 password: 'FKiuEmcn639Flp9',
 // stunServers: ['stun:call.0049.org:3478', 'stun:stun.l.google.com:19302'],
 stunServers: ['stun:call.0049.org:3478'],
 traceSip: false,
 };
 var options_audio_video = {
 media: {
   constraints: {
     audio: true,
     video: true
   },
   render: {
     remote: document.getElementByld('remoteVideo'),
     local: document.getElementByld('localVideo')
   }
 }
 };
 var options_audio_only = {
  media: {
   constraints: {
     audio: true,
     video: false
   },
   render: {
     remote: document.getElementByld('remoteAudio'),
     local: false
   }
  }
 };
 function sipCall(id, callTarget, options) {
  if (SIP.WebRTC.isSupported()) {
   if (userAgent) {
   } else {
     userAgent = new SIP.UA(config);
   }
   session = userAgent.invite(callTarget, options);
   session.on('bye', function () {
     session = null;
     $("#"+id).removeClass('disabled');
     $("#"+id+"_hangup").addClass('disabled');
     if (id == "call_tg_handy_audio_video") {
       $("#localVideo").hide();
       $("#remoteVideo").hide();
     }
     document.getElementByld(id+"_status").innerHTML = 'Idle. Anruf wurde beendet.';
   });
   session.on('connecting', function () {
     if (id == "call_tg_handy_audio_video") $("#localVideo").show();
     document.getElementByld(id+"_status").innerHTML = 'Anruf wird aufgebaut...';
   });
   session.on('accepted', function (d) {
     $("#"+id+"_hangup").removeClass('disabled');
     if (id == "call_tg_handy_audio_video") $("#remoteVideo").show();
     document.getElementByld(id+"_status").innerHTML = 'Sie sind verbunden.';
   });
   session.on('failed', function (r, c) {
     session = null;
     $("#"+id).removeClass('disabled');
     $("#"+id+"_hangup").addClass('disabled');
     if (id == "call_tg_handy_audio_video") {
       $("#localVideo").hide();
       $("#remoteVideo").hide();
     }
     document.getElementByld(id+"_status").innerHTML = 'Anruf derzeit leider nicht
     möglich.';
   });
  } else {
   document.getElementByld(id+"_status").innerHTML = 'WebRTC wird von Ihrem
    Browser nicht unterstützt.';
    }
   }
    // CLICK auf Call-Button
    $("#call_tg_handy_audio_only").click(function() {
 id = "call_tg_handy_audio_only";
 callTarget = 'sip:11@call.0049.org';
 sipCall(id, callTarget, options_audio_only);
 return false;
 });
 // CLICK auf Auflegen-Button
 $("#call_tg_handy_audio_only_hangup").click(function() {
 if (session) session.bye();
 return false;
 });
```

Spezielle Ausführungsform zur Konfiguration der Extensions im FreeSWITCH®. Hier im Speziellen die Konfiguration der Datei /etc/freeswitch/directory/default/9999.xml :

```
 <include>
 <user id="9999">
   <params>
     <param name="password" value="FKiuEmcn639Flp9"/>
     <param name="vm-password" value="DjreoiuNXIr8"/>
   </params>
   <variables>
     <variable name="accountcode" value="9999"/>
     <variable name="user_context" value="private"/>
     <variable name="effective_caller_id_name" value="Thorsten Göllner (1ClickCall)"/>
     <variable name="effective_caller_id_number" value="9999"/>
     <variable name="outbound_caller_id_name" value="$${outbound_caller_name}"/>
     <variable name="outbound_caller_id_number" value="$${outbound_caller_id}"/>
     <variable name="callgroup" value="techsupport"/>
   </variables>
 </user>
 </include>
 <include>
 <user id="11">
   <params>
     <param name="password" value="$${default_password}"/>
     <param name="vm-password" value="11"/>
   </params>
   <variables>
     <variable name="accountcode" value="11 "/>
     <variable name="user_context" value="private"/>
     <variable name="effective_caller_id_name" value="Thorsten Göllner (Android)"/>
     <variable name="effective_caller_id_number" value="11"/>
     <variable name="outbound_caller_id_name" value="$${outbound_caller_name}"/>
     <variable name="outbound_caller_id_number" value="$${outbound_caller_id}"/>
     <variable name="callgroup" value="techsupport"/>
   </variables>
  </user>
  </include>
```

### Begriffserläuterungen:

### Nachfolgend werden einige Begriffe erläutert:

API: Eine Programmierschnittstelle, genauer Schnittstelle zur Anwendungsprogrammierung, häufig nur kurz API genannt (englisch: application programming interface; deutsch: "Anwendungsprogrammierschnittstelle"), ist ein Programmteil, der von einem Softwaresystem anderen Programmen zur Anbindung an das System zur Verfügung gestellt wird. Im Gegensatz zu einer Binärschnittstelle (ABI) definiert eine Programmierschnittstelle nur die Programmanbindung auf Quelltext-Ebene.[1] Zur Bereitstellung solch einer Schnittstelle gehört meist die detaillierte Dokumentation der Schnittstellen-Funktionen mit ihren Parametern auf Papier oder als elektronisches Dokument." Siehe:
[44a]: https://de.wikipedia.org/wiki/Programmierschnittstelle bzw:
[44b] https://en.wikipedia.org/wiki/Application_programming_interface .

App: Kurzform für Application. Typischerweise ist ein Stück Software gemeint, welche in einem bestimmten Context (z. B. Smartphone) läuft.

Asterisk®: Freie Software-Telefonanlage. (siehe:
[45a]: https://de.wikipedia.org/wiki/Asterisk_(Telefonanlage) bzw:
[45b]: https://en.wikipedia.org/wiki/Asterisk_(PBX)).

A-Leg: Bezeichnet die Strecke vom A-Teilnehmer bis hin zur Telefonanlage.

A-Teilnehmer: Als A-Teilnehmer (engl. call originator oder calling party) bezeichnet man bei einer Wählverbindung denjenigen Teilnehmer, der die Verbindung eingeleitet hat. (siehe [18]: https://de.wikipedia.org/wiki/Teilnehmer_(Kommunikationssystem)).

Bridge: (Deutsch: Brücke) Gemeint ist in der Telefonie die Zusammenschaltung von zwei oder mehreren Kanälen. Dies geschieht, damit sich unterschiedliche Teilnehmer gegenseitig hören/verständigen können.

Call-Center: (Deutsch: Anrufzentrale) Es handelt sich um ein primär Telefon- und Computergestütztes Beratungszentrum. Wird häufig auch zum Zwecke des Telefonverkaufs eingesetzt. Call-Center lassen sich anmieten. Mitarbeiter werden auf bestimmte Themen geschult. Anrufe werden dann typischerweise über eine Servicerufnummer (0800 / 0900) dem Call-Center zugeführt. (siehe:
[46a]: https://de.wikipedia.org/wiki/Callcenter bzw:
[46b]: https://en.wikipedia.org/wiki/Call_centre).

Cloud: Cloud Computing umschreibt den Ansatz, IT-Infrastrukturen (z.B. Rechenkapazität, Datenspeicher, Netzkapazitäten oder auch fertige Software) über ein Netz zur Verfügung zu stellen, ohne dass diese auf dem lokalen Rechner installiert sein müssen." (siehe: [47a]: https://de.wikipedia.org/wiki/Cloud_Computing bzw:
[47b]: https://en.wikipedia.org/wiki/Cloud_computing).

CSS: Cascading Style Sheets (englisch: für gestufte Gestaltungsbögen), kurz CSS genannt, ist eine Stylesheet-Sprache für elektronische Dokumente und zusammen mit HTML und DOM eine der Kernsprachen des World Wide Webs. (siehe:
[48a]: https://de.wikipedia.org/wiki/Cascading_Style_Sheets bzw:
[48b]: https://en.wikipedia.org/wiki/Cascading_Style_Sheets).

CDR: Abkürzung für Call Detail Record (deutsch: Anruf-Detailaufzeichnung). Es handelt sich im der Telefonie um einen Datensatz, der alle Merkmale einer Verbindung umfasst. So z.B. Datum und Uhrzeit des Anrufes, die Dauer des Gespräches, die A-Teilnehmer-Nummer etc.

Content: (Deutsch: Inhalte) Inhalte, z.B. Video, Audio, Texte etc.

DOM: Document Object Model (DOM) (deutsch: Dokumentenobjektmodell) ist eine Spezifikation einer Schnittstelle für den Zugriff auf HTML- oder XML-Dokumente. Sie wird vom World Wide Web Consortium definiert. (siehe:
[42a]: https://de.wikipedia.org/wiki/Document_Object_Model bzw:
[42b]: https://en.wikipedia.org/wiki/Document_Object_Model)

Domain: (Deutsch: Domäne / Bereich) ist ein zusammenhängender Teilbereich des hierarchischen Domain Name System (DNS). Im Domain-Vergabeverfahren ist es ein im Internet weltweit einmaliger und eindeutiger und unter gewissen Regeln frei wählbarer Name unterhalb einer Top-Level-Domain (siehe:
[49a]: https://de.wikipedia.org/wiki/Domain_(Internet) bzw:
[49b]: https://en.wikipedia.org/wiki/Domain_name).

DTMF: (Mehrfrequenzwahlverfahren; englisch: Dual-Tone Multi-Frequency) Das Mehrfrequenzwahlverfahren (MFV, auch Frequenzwahlverfahren[1]) ist die in der analogen Telefontechnik gebräuchliche Wähltechnik und seit den 1990er Jahren bei analogen Teilnehmeranschlussleitungen das überwiegend genutzte Verfahren zur Übermittlung der Rufnummer an die Vermittlungsstelle oder eine Telefonanlage. (siehe:
[50a]: https://de.wikipedia.org/wiki/Mehrfrequenzwahlverfahren bzw:
[50b]: https://en.wikipedia.org/wiki/Dual-tone_multi-frequency_signaling).

Endpunkt: Ein Sender oder Empfänger in der Kommunikation. (siehe:
[51a]: https://de.wikipedia.org/wiki/Kommunikation bzw:
[51b]: https://en.wikipedia.org/wiki/Telecommunication).

HTML: Die Hypertext Markup Language (deutsch: Hypertext-Auszeichnungssprache), ist eine textbasierte Auszeichnungssprache zur Strukturierung digitaler Dokumente wie Texte mit Hyperlinks, Bildern und anderen Inhalten. HTML-Dokumente sind die Grundlage des World Wide Web und werden von Webbrowsern dargestellt. (siehe
[52a]: https://de.wikipedia.org/wiki/Hypertext_Markup_Language bzw:
[52b]: https://en.wikipedia.org/wiki/HTML).

In-App-Payment: (Deutsch: In-App-Bezahlung) Bezeichnet die Möglichkeit, eine Bezahlmethode innerhalb einer App einzusetzen.

In-Call-Payment: (Deutsch: In-Verbindungs-Bezahlung): In Ausführungsformen eingeführt: Bezeichnet die Möglichkeit, während einer Verbindung, z.B. aufgebaut durch einen 1-Click-Call, einen Bezahlvorgang parallel zur bestehenden Kommunikationsverbindung zu realisieren.

In-App-Advertisement: (Deutsch: In-App-Werbung): Bezeichnet die Möglichkeit, innerhalb einer App (gezielt) Werbung zu schalten.

In-Call-Advertisement (Deutsch: In-Verbindungs-Werbung): In Ausführungsformen eingeführt: Bezeichnet die Möglichkeit, während eines 1-Click-Calls gezielt (bzw. profilgesteuert) Werbung innerhalb der Aktionsfläche des A-Teilnehmers (z.B. Browserfenster) einzublenden.

IP: (Englisch: Internet Protocol; deutsch: Internet-Protokoll) Netzwerkprotokoll und Grundlage des Internets. (siehe
[53a]: https://de.wikipedia.org/wiki/Internet_Protocol bzw:
[53b]: https://en.wikipedia.org/wiki/Internet_Protocol).

JavaScript: Primär Scriptsprache für Webbrowser (siehe [54]:
[54a]: https://de.wikipedia.org/wiki/JavaScript bzw:
[54b]: https://en.wikipedia.org/wiki/JavaScript).

JSON: (JavaScript Object Notation; deutsch: JavaScript Objektnotation) Kompaktes Datenformat mit dem Zweck des Datenaustausches zwischen Anwendungen (siehe:
[55a]: https://de.wikipedia.org/wiki/JavaScript_Object_Notation bzw:
[55b]: https://en.wikipedia.org/wiki/JSON)

FreeSWITCH®: Freie Software-Telefonanlage.
(siehe [19]: https://en.wikipedia.org/wiki/FreeSWITCH).

NGN: Next Generation Network (deutsch: Netzwerk der nächsten Generation), auch Next Generation Access Network (NGA-Netz) (deutsch: Netzwerk der nächsten Zugriffsgeneration), bezeichnet in der Telekommunikation die Netzwerktechnologie, welche traditionelle leitungsvermittelnde Telekommunikationsnetze wie Telefonnetze, Kabelfernsehnetze, Mobilfunknetze usw. durch eine einheitliche paketvermittelnde Netzinfrastruktur und -architektur ersetzt und zu den älteren Telekommunikationsnetzen kompatibel ist (siehe:
[3a]: https://de.wikipedia.org/wiki/Next_Generation_Network bzw.
[3b]: https://en.wikipedia.org/wiki/Next-generation_network).

ISDN: Integrated Services Digital Network (ISDN; deutsch: Integrierte Dienste digitales Netz) ist ein internationaler Standard für ein digitales Telekommunikationsnetz. (siehe:
[56a]: https://de.wikipedia.org/wiki/Integrated_Services_Digital_Network bzw:
[56b]: https://en.wikipedia.org/wiki/Integrated_Services_Digital_Network).

Mehrwertrufnummer / Service-Rufnummer: Spezielle Rufnummern mit eigener Vorwahl. Die Vorwahl entscheidet dabei über den Einsatzzweck und bei manchen Varianten auch über den Endkunden-Tarif. Siehe die folgenden zwei Beispiele zur Vorwahl 0800 und zur Vorwahl 0900:
Vorwahl 0800: Kostenlos aus dem Festnetz und allen Mobilfunknetzen erreichbar. Ein Gewerbetreibender zahlt die Verbindungskosten komplett. Wird i.d.R. von Firmen als Service-Hotline für Endkunden genutzt. Typischerweise werden Calls auf ein Call-Center geroutet (gelenkt). Beispiel: 0800 123456

Vorwahl 0900: Im Festnetz frei tarifierbar von 0,00 €/Min. bis hin zu 3,00 €/Min. Auch sog. Blocktarife sind möglich - also 1,00 € pro Anruf. Im Mobilfunk unübersichtlich in sog. Clustern tarifierbar. Ein Cluster beschreibt eine mögliche Preisspanne, bei dem der Mobilfunkanbieter letztendlich den eigentlichen Endkundentarif bestimmt. Allgemein gilt: die Ziffer nach der 0900 bestimmt den Einsatzzweck (0900-1 => Informationsdienst, 0900-3 => Unterhaltung, 0900-5 => sonstige Dienste. Beispiel: 0900 5 123456. (siehe:
[57]: https://servicenummern.telekom.de/weitere-informationen/anrufertarife/; siehe zum Beispiel auch:
[58]: https://woopla.de/service-rufnummern/0900-premium-rate/).

Peer-to-Peer, "Peer-to-Peer (P2P) Connection: (deutsch: Gleichgestellt zu Gleichgestellt, Verbindung zwischen Gleichgestellten / Ebenbürtigen") und Rechner-Rechner-Verbindung sind synonyme Bezeichnungen für eine Kommunikation unter Gleichen, hier bezogen auf ein Rechnernetz. siehe:
[59a]: https://de.wikipedia.org/wiki/Peer-to-Peer
[59b]: https://en.wikipedia.org/wiki/Peer-to-peer).

PSTN (Public Switched Telephone Network): (Deutsch: Telefonnetz / Fernsprechnetz) Unter einem Telefonnetz (oder veraltet Fernsprechnetz), auch PSTN (englisch Public Switched Telephone Network), versteht man ein Kommunikationssystem, das für die Abwicklung von Telefongesprächen (Telefonie) konstruiert ist (Siehe:
[1a]: https://de.wikipedia.org/wiki/Telefonnetz bzw:
[1b]: https://en.wikipedia.org/wiki/Public_switched_telephone_network).

SEM (Search Engine Marketing): (Deutsch: Suchmaschinenmarketing) Ein Teilgebiert des Online-Marketing. (Siehe:
[36a]: https://de.wikipedia.org/wiki/Suchmaschinenmarketing bzw:
[36b]: https://en.wikipedia.org/wiki/Search_engine_marketing).

SEO (search engine optimization): (Deutsch: Suchmaschinenoptimierung) Bezeichnet Maßnahmen, die dazu dienen, dass Webseiten im organischen Suchmaschinenranking in den unbezahlten Suchergebnissen (Natural Listings) auf höheren Plätzen erscheinen. (Siehe:
[60a]: https://de.wikipedia.org/wiki/Suchmaschinenoptimierung bzw:
[60b]: https://en.wikipedia.org/wiki/Search_engine_optimization).

SIP (Session Initiation Protocol): Ein Netzprotokoll zum Aufbau, zur Steuerung und zum Abbau einer Kommunikationssitzung zwischen zwei und mehr Teilnehmern. Das Protokoll wird u. a. im RFC 3261 spezifiziert. In der IP-Telefonie ist das SIP ein häufig angewandtes Protokoll. (Siehe:
[27a]: https://de.wikipedia.org/wiki/Session_Initiation_Protocol ; bzw:
[27b]: https://en.wikipedia.org/wiki/Session_Initiation_Protocol).

SIP.js : Frei verfügbare JavaScript-Library (Bibliothek) für den Einsatz von WebRTC® und SIP, siehe [11]: http://sipjs.com/

Soft-Device (Deutsch: Soft-Gerät) Bezeichnet ein Softwareprogramm, welches die (komplette) Funktionalität eine SIP-Telefons liefert und auf einem Endgerät wie z. B. einem Smartphone oder einem PC läuft.

Stream: (Deutsch: Datenstrom). Im Text oben bezeichnet ein Stream oftmals einen Audio- oder Videodatenstrom.

SS7 (Signalling System #7): (Deutsch Signalisierungssystem Nummer 7): Eine Sammlung von Protokollen und Verfahren für die Signalisierung in Telekommunikationsnetzen. (Siehe:
[4a]: https://de.wikipedia.org/wiki/Signalling_System_7 bzw.
[4b]: https://en.wikipedia.org/wiki/Signalling_System_No._7).

STUN (Session Traversal Utilities for NAT): (Deutsch: Werkzeuge zum Durchqueren von NATs): Ein einfaches Netzwerkprotokoll, um das Vorhandensein und die Art von Firewalls und NAT-Routern zu erkennen und letztere zu durchdringen. (Siehe:
[32a]: https://de.wikipedia.org/wiki/Session_Traversal_Utilities_for_NAT oder
[32b]: https://en.wikipedia.org/wiki/STUN).

Telefonanlage: "Eine Telefonanlage, Nebenstellenanlage (kurz: NstAnl) oder Teilnehmervermittlungsanlage (TVA) ist eine Vermittlungseinrichtung, die mehrere Endgeräte wie zum Beispiel Telefon, Fax, Anrufbeantworter sowohl untereinander als auch mit einer oder mehreren Leitungen des öffentlichen Telefonnetzes verbindet. (Siehe:
[61a]: https://de.wikipedia.org/wiki/Telefonanlage bzw:
[61b]: https://en.wikipedia.org/wiki/Business_telephone_system).

Vermittlungsstelle: Eine Vermittlungsstelle ist ein Knoten innerhalb eines Nachrichtennetzes, der die wahlweise Herstellung von Nachrichtenverbindungen ermöglicht (siehe:
[62a]: https://de.wikipedia.org/wiki/Vermittlungsstelle bzw:
[62b]: https://en.wikipedia.org/wiki/Telephone_exchange).

VoIP: (Deutsch: Sprache über IP): IP-Telefonie (kurz für Internet-Protokoll-Telefonie), auch Internet-Telefonie oder Voice over IP (kurz VoIP) genannt, ist das Telefonieren über Computernetzwerke, welche nach Internet-Standards aufgebaut sind. (Siehe:
[2a]: https://de.wikipedia.org/wiki/IP-Telefonie bzw:
[2b]: https://en.wikipedia.org/wiki/Telephony).

WebRTC®: WebRTC® (Web Real-Time Communication, deutsch "Web-Echtzeitkommunikation) ist eine Sammlung von Kommunikationsprotokollen und Programmierschnittstellen (API) für die Implementierung in Webbrowsern, die diesen Echtzeitkommunikation über Rechner-Rechner-Verbindungen ermöglichen. (siehe:
[9a]: https://de.wikipedia.org/wiki/WebRTC bzw:
[9b]: https://en.wikipedia.org/wiki/WebRTC).

XML: Die Extensible Markup Language (deutsch: erweiterbare Auszeichnungssprache), abgekürzt XML, ist eine Auszeichnungssprache zur Darstellung hierarchisch strukturierter Daten in Form von Textdateien. XML wird u. a. für den plattform- und implementationsunabhängigen Austausch von Daten zwischen Computersystemen eingesetzt, insbesondere über das Internet. (Siehe:
[63a]: https://de.wikipedia.org/wiki/Extensible_Markup_Language bzw:
[63b]: https://en.wikipedia.org/wiki/XML).

### Referenzen:

[1a]: https://de.wikipedia.org/wiki/Telefonnetz
[1b]: https://en.wikipedia.org/wiki/Public_switched_telephone_network
[2a]: https://de.wikipedia.org/wiki/IP-Telefonie
[2b]: https://en.wikipedia.org/wiki/Telephony
[3a]: https://de.wikipedia.org/wiki/Next_Generation_Network
[3b]: https://en.wikipedia.org/wiki/Next-generation_network
[4a]: https://de.wikipedia.org/wiki/Signalling_System_7
[4b]: https://en.wikipedia.org/wiki/Signalling_System_No._7
[5]: EP 398 711 B1
[6]: http://blog.linkwerk.com/2011/04/telefon-links-fur-smartphones-desktopfreundlich/
[7a]: http://www.google.com/intl/de_de/business/
[7b]: http://www.google.com/intl/en_en/business/
[8]: https://hangouts.google.com/?hl=en
[9a]: https://de.wikipedia.org/wiki/WebRTC
[9b]: https://en.wikipedia.org/wiki/WebRTC
[10a]: http://www.pro-linux.de/artikel/2/1791/firefox-hello-der-videochat-im-test.html
[10b]:https://support.mozilla.org/en-US/products/firefox/chat-and-share/firefox-hello-webrtc
[11]: http://sipjs.com/
[12]: Aameek Singh, Arup Acharya, "Using session initiation protocol to build contextaware VolP support for multiplayer networked games", published in: Proceeding NetGames '04, Proceedings of 3rd ACM SIGCOMM workshop on Network and system support for games, Seiten 98 - 105, ACM New York, NY, USA, 2004
[13]: https://freeswitch.org/confluence/display/FREESWITCH/mod_verto
[14] http://www.elektronik-kompendium.de/sites/kom/0312241.htm
[15]: https://www.android.com/pay/
[16a]: https://de.wikipedia.org/wiki/Android_Pay
[16b]: https://en.wikipedia.org/wiki/Android_Pay
[17a]: https://de.wikipedia.org/wiki/Amazon_Echo
[17b]: https://en.wikipedia.org/wiki/Amazon_Echo
[18]: https://de.wikipedia.org/wiki/Teilnehmer_(Kommunikationssystem)
[19]: https://en.wikipedia.org/wiki/FreeSWITCH
[20]: https://developer.apple.com/in-app-purchase/
[21]: http://t3n.de/news/payone-sdk-in-app-payment-ios-452253/
[22]: https://www.android.com/pay/
[23]: https://de.wikipedia.org/wiki/Android_Pay
[24]: https://de.wikipedia.org/wiki/Apple_Pay
[25]: https://de.wikipedia.org/wiki/PayPal
[26]: https://de.wikipedia.org/wiki/Sofort%C3%BCberweisung
[27a]: https://de.wikipedia.org/wiki/Session_Initiation_Protocol
[27b]: https://en.wikipedia.org/wiki/Session_Initiation Protocol
[28]: http://www.rfc-base.org/txt/rfc-3261.txt
[29]: http://jssip.net/
[30]: https://tools.ietf.org/html/rfc4122
[31a]: https://de.wikipedia.org/wiki/Universally_Unique_Identifier
[31b]: https://en.wikipedia.org/wiki/Universally_unique_identifier
[32a]: https://de.wikipedia.org/wiki/Session_Traversal_Utilities_for_NAT
[32b]: https://en.wikipedia.org/wiki/STUN
[33]: http://www.voip-info.org/wiki/view/Asterisk+cmd+Dial
[34]: https://en.wikipedia.org/wiki/Traversal_Using_Relays_around_NAT
[35a]: https://de.wikipedia.org/wiki/Call_Detail_Record
[35b]: https://en.wikipedia.org/wiki/Call_detail_record
[36a]: https://de.wikipedia.org/wiki/Suchmaschinenmarketing
[36b]: https://en.wikipedia.org/wiki/Search_engine_marketing
[37a]: https://de.wikipedia.org/wiki/Google_Analytics
[37b]: https://en.wikipedia.org/wiki/Google_Analytics
[38]: https://support.google.com/analytics/answer/1033068?hl=de
[39]: http://www.golem.de/1005/75176.html
[40]: https://en.wikipedia.org/wiki/Globally_unique_identifier
[41a]: https://de.wikipedia.org/wiki/Google_AdWords
[41b]: https://en.wikipedia.org/wiki/AdWords
[42a]: https://de.wikipedia.org/wiki/Document_Object_Model
[42b]: https://en.wikipedia.org/wiki/Document_Object_Model
[43]: https://developers.google.com/identity/?csw=1
[44a]: https://de.wikipedia.org/wiki/Programmierschnittstelle
[44b] https://en.wikipedia.org/wiki/Application_programming_interface
[45a]: https://de.wikipedia.org/wiki/Asterisk_(Telefonanlage)
[45b]: https://en.wikipedia.org/wiki/Asterisk_(PBX)
[46a]: https://de.wikipedia.org/wiki/Callcenter
[46b]: https://en.wikipedia.org/wiki/Call_centre
[47a]: https://de.wikipedia.org/wiki/Cloud_Computing
[47b]: https://en.wikipedia.org/wiki/Cloud_computing
[48a]: https://de.wikipedia.org/wiki/Cascading_Style_Sheets
[48b]: https://en.wikipedia.org/wiki/Cascading_Style_Sheets
[49a]: https://de.wikipedia.org/wiki/Domain_(Internet)
[49b]: https://en.wikipedia.org/wiki/Domain_name
[50a]: https://de.wikipedia.org/wiki/Mehrfrequenzwahlverfahren
[50b]: https://en.wikipedia.org/wiki/Dual-tone_multi-frequency_signaling
[51a]: https://de.wikipedia.org/wiki/Kommunikation
[51b]: https://en.wikipedia.org/wiki/Telecommunication
[52a]: https://de.wikipedia.org/wiki/Hypertext_Markup_Language
[52b]: https://en.wikipedia.org/wiki/HTML
[53a]: https://de.wikipedia.org/wiki/Internet_Protocol
[53b]: https://en.wikipedia.org/wiki/Internet_Protocol
[54a]: https://de.wikipedia.org/wiki/JavaScript
[54b]: https://en.wikipedia.org/wiki/JavaScript
[55a]: https://de.wikipedia.org/wiki/JavaScript_Object_Notation
[55b]: https://en.wikipedia.org/wiki/JSON
[56a]: https://de.wikipedia.org/wiki/Integrated_Services_Digital_Network
[56b]: https://en.wikipedia.org/wiki/Integrated_Services_Digital_Network
[57]: https://servicenummern.telekom.de/weitere-informationen/anrufertarife/
[58]: https://woopla.de/service-rufnummern/0900-premium-rate/
[59a]: https://de.wikipedia.org/wiki/Peer-to-Peer
[59b]: https://en.wikipedia.org/wiki/Peer-to-peer
[60a]: https://de.wikipedia.org/wiki/Suchmaschinenoptimierung
[60b]: https://en.wikipedia.org/wiki/Search_engine_optimization
[61a]: https://de.wikipedia.org/wiki/Telefonanlage
[61b]: https://en.wikipedia.org/wiki/Business_telephone_system
[62a]: https://de.wikipedia.org/wiki/Vermittlungsstelle
[62b]: https://en.wikipedia.org/wiki/Telephone_exchange
[63a]: https://de.wikipedia.org/wiki/Extensible_Markup_Language
[63b]: https://en.wikipedia.org/wiki/XML

## Patentansprüche

1. Vorrichtung (310; 410; 510) zum Abrufen einer Webseite von einem Webserver (320; 430; 520) und zum Aufbau einer Kommunikationsverbindung, umfassend,
eine Sende-Empfangsschnittstelle (312), die ausgebildet ist, eine Übermittlung der Webseite von dem Webserver (320; 430; 520) anzufordern, und die ausgebildet ist, die Webseite von dem Webserver (320; 430; 520) zu empfangen,
ein Ausgabemodul (314), das ausgebildet ist, einem Nutzer (305; 405; 505) die Webseite auszugeben, wobei das Ausgabemodul (314) dem Nutzer (305; 405; 505) des Weiteren anzeigt, dass die Möglichkeit besteht, die Kommunikationsverbindung aufzubauen, wobei die Kommunikationsverbindung eine Audioverbindung oder eine Audio-Video-Verbindung oder eine Videoverbindung ist, und
eine Eingabeschnittstelle 316, die ausgebildet ist, eine Eingabe des Nutzers (305; 405; 505) zu empfangen, durch die der Nutzer (305; 405; 505) anzeigt, dass die Kommunikationsverbindung aufgebaut werden soll,
ein Prozessormodul (318), das ausgebildet ist, eine Verbindungsaufbau-Nachricht zu erzeugen, die den Aufbau der Kommunikationsverbindung mit einer Kommunikationseinheit (350; 450; 550) anfordert,
wobei die Sende-Empfangsschnittstelle (312) ausgebildet ist, die Verbindungsaufbau-Nachricht zu einer Vermittlungsstelle (330; 440; 530; 1100) zu senden,
wobei die Sende-Empfangsschnittstelle (312) ausgebildet ist, nach dem Senden der Verbindungsaufbau-Nachricht Audiodaten oder Audio- und Videodaten oder Videodaten zu der Kommunikationseinheit (350; 450; 550) zu senden und von der Kommunikationseinheit (350; 450; 550) zu empfangen,
wobei das Prozessormodul (318) ausgebildet ist, die Verbindungsaufbau-Nachricht, mit der der Aufbau der Kommunikationsverbindung mit der Kommunikationseinheit (350; 450; 550) angefordert wird, so zu erzeugen, dass die Verbindungsaufbau-Nachricht keine Informationen umfasst, die den Nutzer (305; 405; 505) der Vorrichtung (310; 410; 510) identifizieren,
**dadurch gekennzeichnet, dass** die Sende-Empfangsschnittstelle (312) ausgebildet ist, eine Registrierungsnachricht zu der Vermittlungsstelle (330; 440; 530; 1100) zu senden, mit der eine Registrierung angefordert wird, wobei die Registrierungsnachricht keine Informationen umfasst, die den Nutzer (305; 405; 505) der Vorrichtung (310; 410; 510) identifizieren,
wobei die Sende-Empfangsschnittstelle (312) ausgebildet ist, eine Antwortnachricht von der Vermittlungsstelle (330; 440; 530; 1100) zu erhalten, wobei die Antwortnachricht einen Registrierungs-Identifikator umfasst, und
wobei das Prozessormodul (318) ausgebildet ist, die Verbindungsaufbau-Nachricht, mit der der Aufbau der Kommunikationsverbindung mit der Kommunikationseinheit (350; 450; 550) angefordert wird, so zu erzeugen, dass die Verbindungsaufbau-Nachricht den Registrierungs-Identifikator umfasst.

2. Vorrichtung (310; 410; 510) nach Anspruch 1,
wobei das Prozessormodul (318) ausgebildet ist, die Verbindungsaufbau-Nachricht, mit der der Aufbau der Kommunikationsverbindung mit der Kommunikationseinheit (350; 450; 550) angefordert wird, so zu erzeugen, dass die Verbindungsaufbau-Nachricht eine SIP-Adresse als die Adressinformation umfasst, die die Adresse der Kommunikationseinheit (350; 450; 550) angibt.

3. Vorrichtung (310; 410; 510) nach Anspruch 1 oder 2,
wobei die Sende-Empfangsschnittstelle (312) ausgebildet ist, die Audiodaten oder die Audio- und Videodaten oder die Videodaten zu der Kommunikationseinheit (350; 450; 550) unter Nutzung von WebRTC® zu senden und von der Kommunikationseinheit (350; 450; 550) zu empfangen.

4. Vorrichtung (310; 410; 510) nach einem der vorherigen Ansprüche,
wobei das Ausgabemodul (314) ein Display umfasst,
wobei das Ausgabemodul (314) ausgebildet ist, die Webseite auf dem Display auszugeben,
wobei das Ausgabemodul (314) dem Nutzer (305; 405; 505) anzeigt, dass die Möglichkeit besteht, die Kommunikationsverbindung aufzubauen, indem ein anklickbarer Link oder eine anklickbare Schaltfläche angezeigt wird.

5. Vorrichtung (310; 410; 510) nach Anspruch 4,
wobei die Sende-Empfangsschnittstelle (312) ferner ausgebildet ist, nachdem die Audiodaten oder die Audio- und Videodaten oder die Videodaten zu der Kommunikationseinheit (350; 450; 550) gesendet wurden und von der Kommunikationseinheit (350; 450; 550) empfangen wurden, von der Kommunikationseinheit (350; 450; 550) eine Zahlungsaufforderungs-Nachricht zu erhalten,
wobei das Ausgabemodul (314) ausgebildet ist, eine weitere Webseite auf dem Display auszugeben, die ein Zahlungs-Formular anzeigt, wobei in das Zahlungs-Formular Zahlungsdaten eintragbar sind.

6. Vorrichtung (310; 410; 510) nach Anspruch 5,
wobei das Zahlungs-Formular Eingabefelder für Autorisierungsdaten aufweist,
wobei die Sende-Empfangsschnittstelle (312) ausgebildet ist, die Autorisierungsdaten, die von dem Nutzer (305; 405; 505) in die Eingabefelder des Zahlungs-Formulars eingegeben wurden, zu einem Autorisierungsserver (380; 620) zu senden.

7. Vorrichtung (310; 410; 510) nach Anspruch 6,
wobei das Ausgabemodul (314) ausgebildet ist, die weitere Webseite auf dem Display auszugeben, die das Zahlungs-Formular anzeigt, so dass durch das Zahlungs-Formular ein Benutzername und ein Passwort als die Autorisierungsdaten abgefragt werden.

8. Vorrichtung (310; 410; 510) nach einem der Ansprüche 5 bis 7,
wobei die Sende-Empfangsschnittstelle (312) ausgebildet ist, Zahlungsdaten, die in das Eingabeformular eingegeben wurden, und die eine Zahlung anweisen, zu einem Bezahldienst-Server (390; 630) zu senden.

9. Vorrichtung (310; 410; 510) nach Anspruch 8, wobei die Sende-Empfangsschnittstelle (312) ausgebildet ist, nachdem die Sende-Empfangsschnittstelle (312) die Zahlungsdaten zu dem Bezahldienst-Server (390; 630) gesendet hat, weitere Audiodaten oder Audio- und Videodaten oder Videodaten zu der Kommunikationseinheit (350; 450; 550) zu senden und von der Kommunikationseinheit (350; 450; 550) zu empfangen.

10. Vorrichtung (310; 410; 510) nach einem der vorherigen Ansprüche,
wobei die Sende-Empfangsschnittstelle (312), ausgebildet ist, die Übermittlung der Webseite von dem Webserver (320; 430; 520) anzufordern, wobei der Webserver (320; 430; 520) ein Webserver (320; 430; 520) einer Suchmaschine ist,
wobei die Sende-Empfangsschnittstelle (312) ausgebildet ist, mit der Anforderung zur Übersendung der Webseite ein oder mehrere Suchbegriffe einer Suchanfrage mit übersendet, und
wobei die Webseite ein Suchergebnis der Suchanfrage mit den ein oder mehreren Suchbegriffen umfasst.

11. Vorrichtung (310; 410; 510) nach einem der vorherigen Ansprüche,
wobei die Sende-Empfangsschnittstelle (312) ausgebildet ist, neben der Verbindungsaufbau-Nachricht und neben den Audiodaten oder Audio- und Videodaten oder Videodaten zusätzlich Code einer Webseite zu der Vermittlungsstelle (330; 440; 530; 1100) zu übertragen, die von der Vorrichtung (310; 410; 510) einem Nutzer der Vorrichtung (310; 410; 510) angezeigt wird.

12. Vorrichtung (310; 410; 510) nach einem der vorherigen Ansprüche,
wobei der Code der Webseite, der einem Nutzer der Vorrichtung (310; 410; 510) angezeigt wird, HTML Code oder JavaScript® Code umfasst.

13. System zum Abrufen einer Webseite, zum Bereitstellen der Webseite und zum Aufbau einer Kommunikationsverbindung, umfassend:
Eine Vorrichtung (310; 410; 510) nach einem der Ansprüche 1 bis 12 und
ein Webserver (320; 321; 322; 323; 430; 520),
wobei eine Sende-Empfangsschnittstelle (312) der Vorrichtung (310; 410; 510) nach einem der Ansprüche 1 bis 12 ausgebildet ist, eine Übermittlung der Webseite von dem Webserver (320; 321; 322; 323; 430; 520) anzufordern,
wobei der Webserver (320; 321; 322; 323; 430; 520) ausgebildet ist, eine Nachricht von der Vorrichtung (310; 410; 510) nach einem der Ansprüche 1 bis 12 zu empfangen, mit der die Übermittlung der Webseite von dem Webserver (320; 321; 322; 323; 430; 520) angefordert wird, und
wobei der Webserver (320; 321; 322; 323; 430; 520) ausgebildet ist, die Webseite der Vorrichtung (310; 410; 510) nach einem der Ansprüche 1 bis 12 zu senden,
wobei die Sende-Empfangsschnittstelle (312) der Vorrichtung (310; 410; 510) nach einem der Ansprüche 1 bis 12 ausgebildet ist, die Webseite von dem Webserver (320; 321; 322; 323; 430; 520) zu empfangen,
wobei ein Ausgabemodul (314) der Vorrichtung (310; 410; 510) nach einem der Ansprüche 1 bis 12 ausgebildet ist, einem Nutzer (305; 405; 505) die Webseite auszugeben, wobei das Ausgabemodul (314) dem Nutzer (305; 405; 505) des Weiteren anzeigt, dass die Möglichkeit besteht, die Kommunikationsverbindung aufzubauen, wobei die Kommunikationsverbindung eine Audioverbindung oder eine Audio-Video-Verbindung oder eine Videoverbindung ist, und
wobei eine Eingabeschnittstelle (316) der Vorrichtung (310; 410; 510) nach einem der Ansprüche 1 bis 12 ausgebildet ist, eine Eingabe des Nutzers (305; 405; 505) zu empfangen, durch die der Nutzer (305; 405; 505) anzeigt, dass die Kommunikationsverbindung aufgebaut werden soll,
wobei ein Prozessormodul (318) der Vorrichtung (310; 410; 510) nach einem der Ansprüche 1 bis 12 ausgebildet ist, eine Verbindungsaufbau-Nachricht zu erzeugen, die den Aufbau der Kommunikationsverbindung mit einer Kommunikationseinheit (350; 450; 550) anfordert,
wobei die Sende-Empfangsschnittstelle (312) der Vorrichtung (310; 410; 510) nach einem der Ansprüche 1 bis 12 ausgebildet ist, die Verbindungsaufbau-Nachricht zu einer Vermittlungsstelle (330; 440; 530; 1100) zu senden,
wobei die Sende-Empfangsschnittstelle (312) der Vorrichtung (310; 410; 510) nach einem der Ansprüche 1 bis 12 ausgebildet ist, nach dem Senden der Verbindungsaufbau-Nachricht Audiodaten oder Audio- und Videodaten oder Videodaten zu der Kommunikationseinheit (350; 450; 550) zu senden und von der Kommunikationseinheit (350; 450; 550) zu empfangen.

14. Verfahren zum Abrufen einer Webseite von einem Webserver (320; 430; 520) und zum Aufbau einer Kommunikationsverbindung, umfassend,
Anfordern der Übermittlung der Webseite von dem Webserver (320; 430; 520), und Empfangen der Webseite von dem Webserver (320; 430; 520),
Ausgeben der Webseite für einen Nutzer (305; 405; 505), wobei das Ausgabemodul (314) dem Nutzer (305; 405; 505) des Weiteren anzeigt, dass die Möglichkeit besteht, die Kommunikationsverbindung aufzubauen, wobei die Kommunikationsverbindung eine Audioverbindung oder eine Audio-Video-Verbindung oder eine Videoverbindung ist, und
Empfangen einer Eingabe des Nutzers (305; 405; 505), durch die der Nutzer (305; 405; 505) anzeigt, dass die Kommunikationsverbindung aufgebaut werden soll,
Erzeugen einer Verbindungsaufbau-Nachricht, die den Aufbau der Kommunikationsverbindung mit einer Kommunikationseinheit (350; 450; 550) anfordert, wobei die Verbindungsaufbau-Nachricht die Adressinformation umfasst, die die Adresse der Kommunikationseinheit (350; 450; 550) angibt,
Senden der Verbindungsaufbau-Nachricht zu einer Vermittlungsstelle (330; 440; 530; 1100),
Nach dem Senden der Verbindungsaufbau-Nachricht, Senden von Audiodaten oder Audio- und Videodaten oder Videodaten zu der Kommunikationseinheit (350; 450; 550) und Empfangen von Audiodaten oder Audio- und Videodaten oder Videodaten von der Kommunikationseinheit (350; 450; 550),
Erzeugen der Verbindungsaufbau-Nachricht, mit der der Aufbau der Kommunikationsverbindung mit der Kommunikationseinheit (350; 450; 550) angefordert wird, derart, dass die Verbindungsaufbau-Nachricht keine Informationen umfasst, die den Nutzer (305; 405; 505) identifizieren,
**gekennzeichnet durch** das Senden einer Registrierungsnachricht zu der Vermittlungsstelle (330; 440; 530; 1100), mit der eine Registrierung angefordert wird, wobei die Registrierungsnachricht keine Informationen umfasst, die den Nutzer (305; 405; 505) identifizieren,
Erhalten einer Antwortnachricht von der Vermittlungsstelle (330; 440; 530; 1100), wobei die Antwortnachricht einen Registrierungs-Identifikator umfasst, und Erzeugen der Verbindungsaufbau-Nachricht, mit der der Aufbau der Kommunikationsverbindung mit der Kommunikationseinheit (350; 450; 550) angefordert wird, derart, dass die Verbindungsaufbau-Nachricht den Registrierungs-Identifikator umfasst.

15. Computerprogramm, wobei das Computerprogramm das Verfahren nach Anspruch 14 ausführt, wenn es auf einem Computer oder Signalprozessor ausgeführt wird.

## Claims

1. Apparatus (310; 410; 510) for retrieving a website from a web server (320; 430; 520) and for establishing a communication connection, including:
a send/receive interface (312) configured to request a transmission of the website from the web server (320; 430; 520), and configured to receive the website from the web server (320; 430; 520),
an output module (314) configured to output the website to a user (305; 405; 505), wherein the output module (314) further indicates to the user (305; 405; 505) that there is the possibility to establish the communication connection, wherein the communication connection is an audio connection or an audio/video connection or a video connection, and
an input interface (316) configured to receive an input of the user (305; 405; 505), by which the user (305; 405; 505) indicates that the communication connection is to be established,
a processor module (318) configured to generate a connection-establishment message that requests the establishment of the communication connection with a communication unit (350; 450; 550),
wherein the send/receive interface (312) is configured to send the connection-establishment message to a switching center (330; 440; 530; 1100),
wherein the send/receive interface (312) is configured to, after sending the connection-establishment message, send audio data or audio/video data or video data to the communication unit (350; 450; 550) and to receive the same from the communication unit (350; 450; 550).
wherein the processor module (318) is configured to generate the connection-establishment message used for requesting the establishment of the communication connection with the communication unit (350; 450; 550) such that the connection-establishment message does not include any information that identifies the user (305; 405; 505) of the apparatus (310; 410; 510),
**characterized in that** the send/receive interface (312) is configured to send to the switching center (330; 440; 530; 1100) a registration message used for requesting a registration, wherein the registration message does not include any information that identifies the user (305; 405; 505) of the apparatus (310; 410; 510),
wherein the send/receive interface (312) is configured to acquire a response message from the switching center (330; 440; 530; 1100), wherein the response message includes a registration identifier, and
wherein the processor module (318) is configured to generate the connection-establishment message used for requesting the establishment of the communication connection with the communication unit (350; 450; 550) such that the connection-establishment message includes the registration identifier.

2. Apparatus (310; 410; 510) according to claim 1,
wherein the processor module (318) is configured to generate the connection-establishment message used for requesting the establishment of the communication connection with the communication unit (350; 450; 550) such that the connection-establishment message includes a SIP address as the address information indicating the address of the communication unit (350; 450; 550).

3. Apparatus (310; 410; 510) according to claim 1 or 2,
wherein the send/receive interface (312) is configured to send the audio data or the audio/video data or the video data to the communication unit (350; 450; 550) using WebRTC® and to receive the same from the communication unit (350; 450; 550).

4. Apparatus (310; 410; 510) according to any one of the preceding claims,
wherein the output module (314) includes a display,
wherein the output module (314) is configured to output the website on the display,
wherein the output module (314) indicates to the user (305; 405; 505) that there is the possibility to establish the communication connection by displaying a clickable link or a clickable button.

5. Apparatus (310; 410; 510) according to claim 4,
wherein the send/receive interface (312) is further configured to, after the audio data or the audio/video data or the video data has been sent to the communication unit (350; 450; 550) and has been received by the communication unit (350; 450; 550), acquire a payment request message from the communication unit (350; 450; 550),
wherein the output module (314) is configured to output on the display a further website that displays a payment form, wherein payment data may be entered into the payment form.

6. Apparatus (310; 410; 510) according to claim 5,
wherein the payment form comprises input fields for authorization data,
wherein the send/receive interface (312) is configured to send to an authorization server (380; 620) the authorization data entered by the user (305; 405; 505) into the input fields of the input form.

7. Apparatus (310; 410; 510) according to claim 6,
wherein the output module (314) is configured to output on the display the further website that displays the payment form so that a user name and a password are requested as the authorization data by the payment form,

8. Apparatus (310; 410; 510) according to any one of claims 5 to 7,
wherein the send/receive interface (312) is configured to send to a payment service server (390; 630) payment data entered into the input form and instructing a payment.

9. Apparatus (310; 410; 510) according to claim 8,
wherein the send/receive interface (312) is configured to, after the send/receive interface (312) has sent the payment data to the payment service server (390; 630), send further audio data or audio/video data or video data to the communication unit (350; 450; 550) and receive the same from the communication unit (350; 450; 550).

10. Apparatus (310; 410; 510) according to any one of the preceding claims,
wherein the send/receive interface (312) is configured to request from the web server (320; 430; 520) the transmission of the website, wherein the web server (320; 430; 520) is a web server (320; 430; 520) of a search engine,
wherein the send/receive interface (312) is configured to, together with the request for transferring the website, send one or several search terms of a search request, and
wherein the website includes a search result of the search request with the one or several search terms.

11. Apparatus (310; 410; 510) according to any one of the preceding claims,
wherein the send/receive interface (312) is configured to, beside the connection-establishment message and beside the audio data or audio/video data or video data, additionally transfer to the switching center (330; 440; 530; 1100) code of a website displayed by the apparatus (310; 410; 510) to a user of the apparatus (310; 410; 510).

12. Apparatus (310; 410; 510) according to any one of the preceding claims, wherein the code of the website that is displayed to a user of the apparatus (310; 410; 510) includes HTML code or JavaScript® code.

13. System for retrieving a website, for providing the website and for establishing a communication connection, including:
an apparatus (310; 410; 510) according to any one of claims 1 to 12, and
a web server (320; 321; 322; 323; 430; 520),
wherein a send/receive interface (312) of the apparatus (310; 410; 510 according to any one of claims 1 to 12 is configured to request a transmission of the website from the web server (320; 321; 322; 323; 430; 520),
wherein the web server (320; 321; 322; 323; 430; 520) is configured to receive from the apparatus (310; 410; 510) according to any one of claims 1 to 12 a message used for requesting the transmission of the website from the web server (320; 321; 322; 323; 430; 520), and
wherein the web server (320; 321; 322; 323; 430; 520) is configured to send the website to the apparatus (310; 410; 510) according to any one of claims 1 to 12,
wherein the send/receive interface (312) of the apparatus (310; 410; 510) according to any one of claims 1 to 12 is configured to receive the website from the web server (320; 321; 322; 323; 430; 520),
wherein an output module (314) of the apparatus (310; 410; 510) according to any one of claims 1 to 12 is configured to output the website to a user (305; 405; 505), wherein the output module (314) indicates to the user (305; 405; 505) that there is the possibility to establish the communication connection, wherein the communication connection is an audio connection or an audio/video connection or a video connection, and
wherein an input interface (316) of the apparatus (310; 410; 510) according to any one of claims 1 to 12 is configured to receive an input of the user (305; 405; 505), by which the user (305; 405; 505) indicates that the communication connection is to be established,
wherein a processor module (318) of the apparatus (310; 410; 510) according to any one of claims 1 to 12 is configured to generate a connection-establishment message that requests the establishment of the communication connection with a communication unit (350; 450; 550),
wherein the send/receive interface (312) of the apparatus (310; 410; 510) according to any one of claims 1 to 12 is configured to send the connection-establishment message to a switching center (330; 440; 530; 1100),
wherein the send/receive interface (312) of the apparatus (310; 410; 510) according to any one of claims 1 to 12 is configured to, after sending the connection-establishment message, send audio data or audio/video data or video data to the communication unit (350; 450; 550) and to receive the same from the communication unit (350; 450; 550).

14. Method for retrieving a website from a web server (320; 430; 520) and for establishing a communication connection, including:
requesting the transmission of the website from the web server (320; 430; 520) and receiving the website from the web server (320; 430; 520),
outputting the website for a user (305; 405; 505), wherein the output module (314) further indicates to the user (305; 405; 505) that there is the possibility to establish the communication connection, wherein the communication connection is an audio connection or an audio/video connection or a video connection, and
receiving an input of the user (305; 405; 505), by which the user (305; 405; 505) indicates that the communication connection is to be established,
generating a connection-establishment message that requests the establishment of the communication connection with a communication unit (350; 450; 550), wherein the connection-establishment message includes the address information indicating the address of the communication unit (350; 450; 550),
sending the connection-establishment message to a switching center (330; 440; 530; 1100),
after sending the connection-establishment message, sending audio data or audio/video data or video data to the communication unit (350; 450; 550) and receiving audio data or audio/video data or video data from the communication unit (350; 450; 550),
generating the connection-establishment message used for requesting the establishment of the communication connection with the communication unit (350; 450; 550) such that the connection-establishment message does not include any information that identifies the user (305; 405; 505),
**characterized by** sending to the switching center (330; 440; 530; 1100) a registration message used for requesting a registration, wherein the registration message does not include any information that identifies the user (305; 405; 505),
acquiring a response message from the switching center (330; 440; 530; 1100), wherein the response message includes a registration identifier, and
generating the connection-establishment message used for requesting the establishment of the communication connection with the communication unit (350; 450; 550) such that the connection-establishment message includes the registration identifier.

15. Computer program, wherein the computer program performs the method according to claim 14 when the same runs on a computer or a signal processor.

## Revendications

1. Dispositif (310; 410; 510) pour récupérer un site Web d'un serveur Web (320; 430; 520) et pour établir une connexion de communication, comportant
une interface de transmission-réception (312) qui est conçue pour demander une transmission du site Web par le serveur Web (320; 430; 520) et qui est conçue pour recevoir le site Web du serveur Web (320; 430; 520),
un module de sortie (314) qui est conçu pour sortir le site Web pour un utilisateur (305; 405; 505), où le module de sortie (314) indique par ailleurs à l'utilisateur (305; 405; 505) qu'il existe la possibilité d'établir la connexion de communication, où la connexion de communication est une connexion audio ou une connexion audio-vidéo ou une connexion vidéo, et
une interface d'entrée (316) qui est conçue pour recevoir une entrée de l'utilisateur (305; 405; 505) par laquelle l'utilisateur (305; 405; 505) indique que doit être établie la connexion de communication,
un module de processeur (318) qui est conçu pour générer un message d'établissement de connexion qui demande l'établissement de la connexion de communication avec une unité de communication (350; 450; 550),
dans lequel l'interface de transmission-réception (312) est conçue pour envoyer le message d'établissement de connexion à un central téléphonique (330; 440; 530; 1100),
dans lequel l'interface de transmission-réception (312) est conçue pour, après l'envoi du message d'établissement de connexion, envoyer au central téléphonique (350; 450; 550) et recevoir du central téléphonique (350; 450; 550) des données audio ou des données audio et vidéo ou des données vidéo,
dans lequel le module de processeur (318) est conçu pour générer le message d'établissement de connexion par lequel est demandé l'établissement de la connexion de communication avec l'unité de communication (350; 450; 550) de sorte que le message d'établissement de connexion ne comporte pas d'informations qui identifient l'utilisateur (305; 405; 505) du dispositif (310; 410; 510),
**caractérisé par le fait que**
l'interface de transmission-réception (312) est conçue pour envoyer au central téléphonique (330; 440; 530; 1100) un message d'enregistrement par lequel est demandé l'enregistrement, où le message d'enregistrement ne comporte pas d'informations qui identifient l'utilisateur (305; 405; 505) du dispositif (310; 410; 510),
dans lequel l'interface de transmission-réception (312) est conçue pour obtenir un message de réponse du central téléphonique (330; 440; 530; 1100), où le message de réponse comporte un identificateur d'enregistrement, et
dans lequel le module de processeur (318) est conçu pour générer le message d'établissement de connexion par lequel est demandé l'établissement de la connexion de communication avec l'unité de communication (350; 450; 550) de sorte que le message d'établissement de connexion comporte l'identificateur d'enregistrement.

2. Dispositif (310; 410; 510) selon la revendication 1,
dans lequel le module de processeur (318) est conçu pour générer le message d'établissement de connexion par lequel est demandé l'établissement de la connexion de communication avec l'unité de communication (350; 450; 550) de sorte que le message d'établissement de connexion comporte une adresse SIP comme information d'adresse qui indique l'adresse de l'unité de communication (350; 450; 550).

3. Dispositif (310; 410; 510) selon la revendication 1 ou 2,
dans lequel l'interface de transmission-réception (312) est conçue pour envoyer à l'unité de communication (350; 450; 550) et recevoir de l'unité de communication (350; 450; 550) des données audio ou des données audio et vidéo ou des données vidéo à l'aide de WebRTC®.

4. Dispositif (310; 410; 510) selon l'une des revendications précédentes,
dans lequel le module de sortie (314) comporte un écran d'affichage,
dans lequel le module de sortie (314) est conçu pour sortir le site Web à l'écran d'affichage,
dans lequel le module de sortie (314) indique à l'utilisateur (305; 405; 505) qu'il existe la possibilité d'établir la connexion de communication en affichant une liaison cliquable ou un bouton cliquable.

5. Dispositif (310; 410; 510) selon la revendication 4,
dans lequel l'interface de transmission-réception (312) est par ailleurs configurée pour obtenir, après que les données audio ou les données audio et vidéo ou les données vidéo ont été envoyées à l'unité de communication (350; 450; 550) et reçues de l'unité de communication (350; 450; 550), de l'unité de communication (350; 450; 550) un message de demande de paiement,
dans lequel le module de sortie (314) est conçu pour sortir un autre site Web à l'écran qui affiche un formulaire de paiement, dans lequel les données de paiement peuvent être entrées dans le formulaire de paiement.

6. Dispositif (310; 410; 510) selon la revendication 5,
dans lequel le formulaire de paiement présente des champs de saisie pour les données d'autorisation,
dans lequel l'interface de transmission-réception (312) est conçue pour envoyer à un serveur d'autorisation (380; 620) les données d'autorisation qui ont été entrées par l'utilisateur (305; 405; 505) dans les champs de saisie du formulaire de paiement.

7. Dispositif (310; 410; 510) selon la revendication 6,
dans lequel le module de sortie (314) est conçu pour sortir l'autre site Web à l'affichage qui affiche le formulaire de paiement, de sorte que par le formulaire de paiement soient demandés un nom d'utilisateur et un mot de passe comme données d'autorisation.

8. Dispositif (310; 410; 510) selon l'une des revendications 5 à 7,
dans lequel l'interface de transmission-réception (312) est conçue pour envoyer à un serveur de service de paiement (390; 630) les données de paiement qui ont été entrées dans le formulaire d'entrée et qui donnent instructions de paiement.

9. Dispositif (310; 410; 510) selon la revendication 8, dans lequel l'interface de transmission-réception (312) est conçue pour, après que l'interface de transmission-réception (312) a envoyé les données de paiement au serveur de service de paiement (390; 630), envoyer à l'unité de communication (350; 450; 550) et recevoir de l'unité de communication (350; 450; 550) d'autres données audio ou données audio et vidéo ou données vidéo.

10. Dispositif (310; 410; 510) selon l'une des revendications précédentes,
dans lequel l'interface de transmission-réception (312) est conçue pour demander au serveur Web (320; 430; 520) la transmission du site Web, dans lequel le serveur Web (320; 430; 520) est un serveur Web (320; 430; 520) d'un moteur de recherche,
dans lequel l'interface de transmission-réception (312) est conçue pour transmettre, avec la demande d'envoi du site Web, un ou plusieurs termes de recherche d'une demande de recherche, et
dans lequel le site Web comporte un résultat de recherche de la demande de recherche avec les un ou plusieurs termes de recherche.

11. Dispositif (310; 410; 510) selon l'une des revendications précédentes,
dans lequel l'interface de transmission-réception (312) est conçue pour transmettre au central téléphonique (330; 440; 530; 1100), en plus du message d'établissement de connexion et en plus des données audio ou des données audio et vidéo ou des données vidéo, en outre le code d'un site Web qui est affiché par le dispositif (310; 410; 510) à un utilisateur du dispositif (310; 410; 510).

12. Dispositif (310; 410; 510) selon l'une des revendications précédentes,
dans lequel le code du site Web qui est affiché à un utilisateur du dispositif (310; 410; 510) comporte un code HTML ou un code JavaScript®.

13. Système pour récupérer un site Web, pour mettre à disposition le site Web et pour établir une connexion de communication, comportant:
un dispositif (310; 410; 510) selon l'une quelconque des revendications 1 à 12, et
un serveur Web (320; 321; 322; 323; 430; 520),
dans lequel une interface de transmission-réception (312) du dispositif (310; 410; 510) selon l'une des revendications 1 à 12 est conçue pour demander une transmission du site Web au serveur Web (320; 321; 322; 323; 430; 520),
dans lequel le serveur Web (320; 321; 322; 323; 430; 520) est conçu pour recevoir du dispositif (310; 410; 510) selon l'une des revendications 1 à 12 un message par lequel est demandée la transmission du site Web par le serveur Web (320; 321; 322; 323; 430; 520), et
dans lequel le serveur Web (320; 321; 322; 323; 430; 520) est conçu pour envoyer le site Web au dispositif (310; 410; 510) selon l'une des revendications 1 à 12,
dans lequel l'interface de transmission-réception (312) du dispositif (310; 410; 510) selon l'une des revendications 1 à 12 est conçue pour recevoir le site Web du serveur Web (320; 321; 322; 323; 430; 520),
dans lequel un module de sortie (314) du dispositif (310; 410; 510) selon l'une des revendications 1 à 12 est conçu pour sortir le site Web pour un utilisateur (305; 405; 505), dans lequel le module de sortie (314) indique par ailleurs à l'utilisateur (305; 405; 505) qu'il existe la possibilité d'établir la connexion de communication, dans lequel la connexion de communication est une connexion audio ou une connexion audio-vidéo ou une connexion vidéo, et
dans lequel une interface d'entrée (316) du dispositif (310; 410; 510) selon l'une des revendications 1 à 12 est conçue pour recevoir une entrée de l'utilisateur (305; 405; 505) par laquelle l'utilisateur (305; 405; 505) indique que doit être établie la connexion de communication,
dans lequel un module de processeur (318) du dispositif (310; 410; 510) selon l'une des revendications 1 à 12 est conçu pour générer un message d'établissement de connexion qui demande l'établissement de la connexion de communication avec une unité de communication (350; 450; 550),
dans lequel l'interface de transmission-réception (312) du dispositif (310; 410; 510) selon l'une des revendications 1 à 12 est conçue pour envoyer le message d'établissement de connexion à un central téléphonique (330; 440; 530; 1100),
dans lequel l'interface de transmission-réception (312) du dispositif (310; 410; 510) selon l'une des revendications 1 à 12 est conçue pour, après l'envoi du message d'établissement de connexion, envoyer à l'unité de communication (350; 450; 550) et recevoir de l'unité de communication (350; 450; 550) des données audio ou des données audio et vidéo ou des données vidéo.

14. Procédé pour récupérer un site Web d'un serveur Web (320; 430; 520) et pour établir une connexion de communication, comportant le fait de
demander la transmission du site Web au serveur Web (320; 430; 520) et recevoir le site Web du serveur Web (320; 430; 520),
sortir le site Web pour un utilisateur (305; 405; 505), où le module de sortie (314) indique par ailleurs à l'utilisateur (305; 405; 505) qu'il existe la possibilité d'établir la connexion de communication, où la connexion de communication est une connexion audio ou une connexion audio-vidéo ou une connexion vidéo, et
recevoir une entrée de l'utilisateur (305; 405; 505) par laquelle l'utilisateur (305; 405; 505) indique que doit être établie la connexion de communication,
générer un message d'établissement de connexion qui demande l'établissement de la connexion de communication avec une unité de communication (350; 450; 550), où le message d'établissement de connexion comporte l'information d'adresse qui indique l'adresse de l'unité de communication (350; 450; 550),
envoyer le message d'établissement de connexion à un central téléphonique (330; 440; 530; 1100),
après l'envoi du message d'établissement de connexion, envoyer des données audio ou des données audio et vidéo ou des données vidéo à l'unité de communication (350; 450; 550) et recevoir des données audio ou des données audio et vidéo ou des données vidéo de l'unité de communication (350; 450; 550),
générer le message d'établissement de connexion par lequel est demandé l'établissement de la connexion de communication avec l'unité de communication (350; 450; 550), de sorte que le message d'établissement de connexion ne comporte pas d'informations qui identifient l'utilisateur (305; 405; 505),
**caractérisé par** le fait de
envoyer un message d'enregistrement au central téléphonique (330; 440; 530; 1100) par lequel est demandé un enregistrement, où le message d'enregistrement ne comporte pas d'informations qui identifient l'utilisateur (305; 405; 505),
obtenir un message de réponse du central téléphonique (330; 440; 530; 1100), où le message de réponse comporte un identificateur d'enregistrement, et
générer le message d'établissement de connexion par lequel est demandé l'établissement de la connexion de communication avec l'unité de communication (350; 450; 550) de sorte que le message d'établissement de connexion comporte l'identificateur d'enregistrement.

15. Programme d'ordinateur, dans lequel le programme d'ordinateur réalise le procédé de la revendication 14 lorsqu'il est exécuté sur un ordinateur ou un processeur de signal.
